# EUROPEAN PATENT APPLICATION

(11) **EP 1 333 425 A2**
(43) Date of publication of application: **06.08.2003**
(21) Application number: 03002515.9
(22) Date of filing: 04.02.2003
(51) Int. Cl.: G10L 15/22

(54) **Interface apparatus and task control method for a device using recognition technology**

(30) Priority: 04.02.2002 JP 2002026282
(71) Applicant: MATSUSHITA ELECTRIC INDUSTRIAL CO., LTD., Kadoma-shi, Osaka 571-8501 (JP)
(72) Inventor: Yoshizawa, Shinchi, Hirakata-shi, Osaka 573-0064 (JP)
(74) Representative: Grünecker, Kinkeldey, Stockmair & Schwanhäusser Anwaltssozietät

(57) **Abstract**

A recognition portion obtains a recognition result based on a degree of similarity between a recognition object and lexicon entries included in a recognition lexicon. A task control portion instructs execution of a first task associated with the recognition result. A presentation control portion instructs presentation of one or a plurality of candidates associated with the recognition result and instructs a stop of the presentation of the candidate(s) when a time for which the candidate(s) has/have been presented has reached a predetermined time.

## Description

### BACKGROUND OF THE INVENTION

The invention relates to the operation of household appliances and information terminal devices, such as television sets, car navigation systems and mobile phones.

One method by which a user can operate household appliances and information terminal devices, such as television sets, car navigation systems and mobile phones, is speech recognition. With this method, a predetermined task is executed by giving an instruction for this predetermined task by speech.

In order to execute a task by speech, speech recognition is necessary. However, due to noise, variations between the voices of different speakers, and utterances of words or phrases that are not registered in the recognition lexicon, a 100% error-free speech recognition is still not possible.

Problems with regard to recognition precision apply in the context of all recognition or authentication technologies, such as character recognition, image recognition, fingerprint authentication and iris authentication. Therefore, methods dealing with erroneous recognition results have been proposed, for example in JP H4-16043A, JP H2-278297A, JP 2000-250587, JP H4-1065697 and JP H2-117252.

As devices become more sophisticated and multifunctional, there is also a need for intuitive interfaces using recognition functions that are highly compatible with humans, such as speech.

### SUMMARY OF THE INVENTION

It is an object of the present invention to provide an interface apparatus with which the convenience of operating a device by recognition technology can be improved.

In accordance with one aspect of the present invention, an interface apparatus includes a recognition portion, a task control portion and a presentation control portion. The recognition portion obtains a recognition result based on a degree of similarity between a recognition object and lexicon entries included in a recognition lexicon. The task control portion instructs execution of a first task associated with the recognition result obtained by the recognition portion. The presentation control portion instructs presentation of one or a plurality of candidates associated with the recognition result obtained by the recognition portion, and instructs a stop of the presentation of the candidate(s) when a time for which the candidate(s) has/have been presented has reached a predetermined time.

It is preferable that the presentation control portion displays the candidate(s) on a display, and stops the display of the candidate(s) on the display when a time for which the candidate(s) has/have been displayed on the display has reached the predetermined time.

With this interface apparatus, the display of candidates is stopped if the user has not expressed the intention to select a task candidate after the predetermined time has passed, so that if the executed task is the task that was intended by the user, the user does not need to stop the display of the presented task candidates.

When candidates are displayed on the screen, the usable region of the display screen (that is, the region of the display screen that is not used to display candidates) tends to become small as the number of presented candidates increases. For example, when presenting candidates on the display of a television or a computer monitor, then it occurs that a portion of the program that is currently being broadcast cannot be seen anymore. Moreover, as the screen size becomes smaller, the proportion that is occupied by the region for displaying the candidates tends to become large. For example, when a plurality of candidates are shown on a compact display, such as the display of a mobile phone, then the original screen may become completely hidden. With the above interface apparatus, however, the candidates are automatically deleted from the screen after a predetermined time has passed, so that the display screen can be utilized effectively.

It is preferable that when selection information is given that indicates one of the candidates that are presented, then the task control portion instructs execution of a second task that is associated with the candidate indicated by that selection information. In this case, the execution state of the first task remains unchanged.

With the above interface apparatus, a first task and a second task can be executed simultaneously. For example, it is possible to first select the program of a first screen and then select the program of a second from the candidates and display them simultaneously on a split screen display.

In accordance with another aspect of the present invention, an interface apparatus includes a recognition portion, a task control portion, a candidate creation portion, and a presentation control portion. The recognition portion obtains a recognition result based on a degree of similarity between a recognition object and lexicon entries included in a recognition lexicon. The task control portion instructs execution of a first task associated with the recognition result obtained by the recognition portion. The candidate creation portion obtains one or a plurality of candidates based on semantic closeness to the recognition result obtained by the recognition portion. The presentation control portion instructs presentation of the candidate(s) obtained by the candidate creation portion.

Conventionally, candidates were created by selecting them from recognition candidates, so that only tasks that are close in the recognition sense (for example acoustically close, such as "sigh," "site" or "sign" when "sight" has been input by speech) can be executed. However, with the above interface apparatus, the candidates are obtained based on their semantic closeness to the recognition result, so that when searching an electronic television program guide and entering "soccer," it is possible to select tasks relating to "baseball" or "basketball" or the like, which are in the same genre "sports" as "soccer."

It should be noted that "semantically close" includes the following possibilities
(1) to (4) among others:

(1) same genre
   ■ for example "tennis," "baseball" and "golf' for the recognition result "soccer"
(2) associated keywords
   ■ for example "Nakata" and "World Cup" for the recognition result "soccer"
   ■ for example "color," "black" and "apple" for the recognition result "red"
(3) keywords taking into account the user's preferences
   ■ for example "soccer," "sports digest" and "today's news" for the recognition result "my favorite programs"
   ■ for example "e-mail" and "prepare bath" for the recognition result "things to do now"
(4) keywords related to the device operation
   ■ for example "stop," "skip" and "rewind" for the recognition result "play" in the operation of a video player

In accordance with yet another aspect of the present invention, an interface apparatus includes a first recognition lexicon, a recognition portion, and a presentation control portion. The first recognition lexicon includes one or a plurality of lexicon entries. The recognition portion obtains a recognition result based on a degree of similarity between a recognition object and the lexicon entry or entries included in the first recognition lexicon. The presentation control portion instructs presentation of one or a plurality of candidates associated with the recognition result, and instructs presentation whether a lexicon entry or entries corresponding to the candidate(s) is/are included in the first recognition lexicon.

With this interface apparatus, the words that are registered in the first recognition lexicon can be automatically presented to the user. Furthermore, the user can see the entries that can be recognized, which improves the recognition ratio. Consequently, usage becomes more convenient for the user.

In accordance with yet another aspect of the invention, a task control method includes steps (a) to (c). In step (a), a recognition result is obtained based on a degree of similarity between a recognition object and lexicon entries included in a recognition lexicon. In step (b), a first task associated with the recognition result is executed. In step (c), one or a plurality of candidates associated with the recognition result are presented, and presentation of the candidate(s) is stopped when a time for which the candidate(s) has/have been presented has reached a predetermined time.

It is preferable that the task control method further includes a step (e) of presenting the time that is left until execution of the first task is started.

It is preferable that the recognition object includes speech and/or voice data.

It is preferable that the recognition object includes information for authenticating individuals.

In accordance with yet another aspect of the invention, a task control method includes steps (a) to (d). In step (a), a recognition result is obtained based on a degree of similarity between a recognition object and lexicon entries included in a recognition lexicon. In step (b), a first task associated with the recognition result is executed. In step (c), one or a plurality of candidates based on semantic closeness to the recognition result is/are obtained. In step (d), the candidate(s) obtained in step (c) is/are presented.

It is preferable that the one or plurality of candidates belong to a genre that corresponds to the recognition result.

It is preferable that the one or plurality of candidates each includes a keyword that is associated with the recognition result.

It is preferable that the one or plurality of candidates each include a keyword that takes into account personal preferences and/or behavioral patterns of a user.

It is preferable that the one or plurality of candidates indicate a task that is related to the first task.

In accordance with yet another aspect of the present invention, a screen display method includes steps (a) and (b). In step (a), one or a plurality of candidates obtained from a recognition result is/are displayed on a screen. In step (b), the candidate(s) is/are deleted from the screen when a time for which the candidate(s) has/have been displayed on the screen has reached a predetermined time.

It is preferable that the first task is to display information related to the recognition result.

It is preferable that the first task is to operate a device associated with the recognition result.

It is preferable that the first task is to retrieve information related to the recognition result and to present the retrieved results.

It is preferable that the second task is to display information related to the candidate indicated by the selection information.

It is preferable that the second task is to operate a device associated with the candidate indicated by the selection information.

It is preferable that the second task is to retrieve information related to the candidate indicated by the selection information and to present the retrieved results.

It is preferable that the third task is to enter a recognition object.

It is preferable that the third task is to display a predetermined screen.

It is preferable that the third task is to present an execution result of the first task by voice.

### BRIEF DESCRIPTION OF THE DRAWINGS

Fig. **1** is a block diagram showing the overall configuration of a digital television system in accordance with a first embodiment.
Fig. **2** is a flowchart illustrating the operation flow of the system shown in Fig. **1**.
Figs. **3** to **4B** show screens that are shown on a display.
Figs. **5** and **6** show other examples of screens that are displayed on a display.
Fig. **7A** is a block diagram showing the overall configuration of a digital television system in accordance with a second embodiment.
Fig. **7B** illustrates the content of the database stored in the candidate DB.
Fig. **7C** illustrates recognition lexicon entries as well as glossary entries stored in the candidate DB.
Fig. **8** is a flowchart illustrating the operation flow of the system shown in Fig. 7.
Figs. **9A** to **9E** show screens that are shown on the display.
Fig. **10** is a block diagram showing the overall configuration of a digital television system in accordance with a third embodiment.
Fig. **11** is a flowchart illustrating the operation flow of the system shown in Fig. **10.**
Figs. **12A** and **12B** show screens that are shown on the display.
Fig. **13** is a block diagram showing the overall configuration of a video system in accordance with a fourth embodiment.
Fig. **14** is a flowchart illustrating the operation flow of the system shown in Fig. **13.**
Figs. **15A** and **15B** show screens that are shown on the display.
Fig. **15C** shows the content of a database.
Fig. **16** is a block diagram showing the overall configuration of a car navigation system in accordance with a fifth embodiment.
Fig. **17** is a flowchart illustrating the operation flow of the system shown in Fig. **16**.
Fig. **18** shows screens that are shown on the display.
Fig. **19** is a block diagram showing the overall configuration of a mobile phone in accordance with a sixth embodiment.
Fig. **20** is a flowchart illustrating the operation flow of the mobile phone shown in Fig. **19.**
Figs. **21A and 21B** show screens that are shown on the display.
Fig. **22** is a block diagram showing the overall configuration of a translation apparatus in accordance with a seventh embodiment.
Fig. **23** is a flowchart illustrating the operation flow of the translation apparatus shown in Fig. **22**.
Fig. **24** shows screens that are shown on the display.
Fig. **25** is a block diagram showing the overall configuration of a monitoring system in accordance with an eighth embodiment.
Fig. **26** is a flowchart illustrating the operation flow of the monitoring system shown in Fig. **25**.
Figs. **27A** to **27D** show screens that are shown on the display.
Fig. **27E** shows the content of a database.
Fig. **28** is a block diagram showing the overall configuration of a control system in accordance with a ninth embodiment.
Fig. **29** is a flowchart illustrating the operation flow of the system shown in Fig. **28**.
Fig. **30A** and **30B** show screens that are shown on the display.
Fig. **30C** shows the content of a database.
Fig. **30D** and **30E** show screens that are shown on the display.

### DETAILED DESCRIPTION OF THE INVENTION

The following is a detailed explanation of embodiments of the present invention with reference to the accompanying drawings. It should be noted that identical or corresponding elements in the drawings have been assigned the same numerals and their explanation is not repeated.

### First Embodiment

### Configuration of Digital Television System

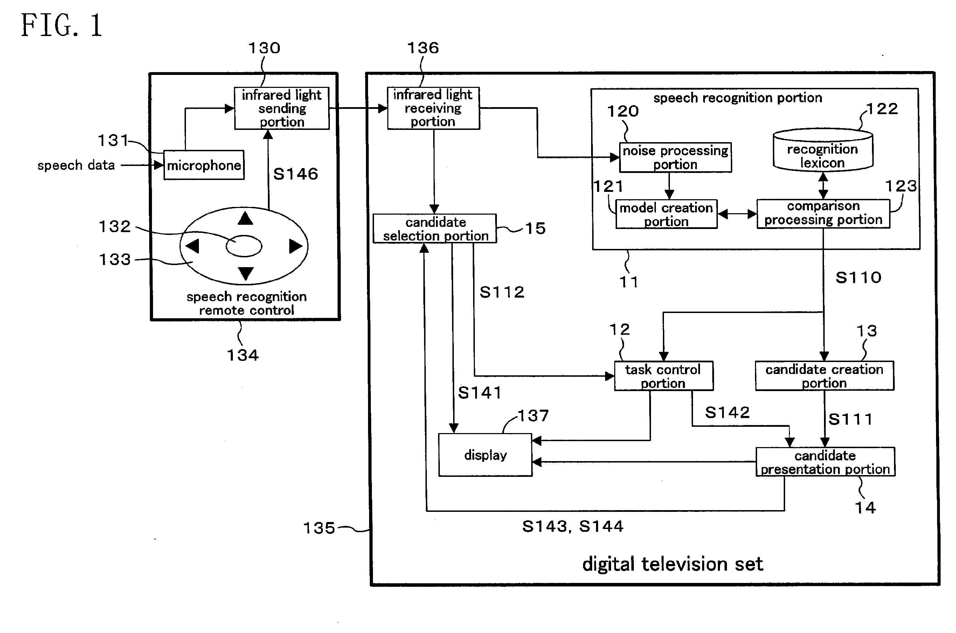

Fig. **1** shows the overall configuration of a digital television system in accordance with a first embodiment of the present invention. This system is provided with a digital television set **135** and a speech recognition remote control **134**.

The digital television set **135** includes a speech recognition portion **11**, a task control portion **12**, a candidate creation portion **13**, a candidate presentation portion **14**, a candidate selection portion **15**, an infrared light receiving portion **136**, and a display **137**. The speech recognition portion **11** includes a noise processing portion **120**, a model creation portion **121**, a recognition lexicon **122**, and a comparison processing portion **123**.

The speech recognition remote control **134** includes an infrared light sending portion **130**, a microphone **131**, an enter key **132**, and a cursor key **133**. The microphone **131** receives speech data from a user and sends them to the infrared light sending portion **130**. The infrared light sending portion **130** sends the speech data from the microphone **131** to the infrared light receiving portion **136.**

The infrared light receiving portion **136** sends the speech data from the infrared light sending portion **130** to the noise processing portion **120**.

The noise processing portion **120** subjects the speech data from the infrared light receiving portion **136** to a noise reduction process and sends the resulting data to the model creation portion **121**.

The model creation portion **121** converts the data from the noise processing portion **120** into characteristic quantities, such as the cepstrum coefficients, and stores these characteristic quantities as a model.

The comparison processing portion **123** compares the lexicon entries (acoustic model) included in the recognition lexicon (word lexicon) **122** with the model stored by the model creation portion **121,** and creates a recognition result **S110.** The recognition result **S110** obtained by the comparison processing portion **123** is sent to the task control portion **12** and the candidate creation portion **13.**

The task control portion **12** switches the screen displayed by the display **137** based on the recognition result **S110** produced by the speech recognition portion **11.**

The candidate creation portion **13** creates task candidates **S111** based on the recognition result **S111** produced by the speech recognition portion **11.** The task candidate **S111** created by the candidate creation portion **13** is sent to the candidate presentation portion **14.**

The candidate presentation portion **14** presents the task candidates **S111** created by the candidate creation portion **13** on the display **137,** and sends presentation position information **S144** to the candidate selection portion **15.** If a first time has elapsed after the candidate presentation portion **14** has presented the task candidates **S111** and no presentation-stop signal **S142** from the task control portion **12** has been received, then the candidate presentation portion **14** stops the presentation of the task candidate **S111** presented on the display **137** and sends a trigger signal **143** to the candidate selection portion **15**.

The infrared light sending portion **130** sends to the infrared light receiving portion **136** operation signals **S146** entered with the cursor key **133** and/or the enter key **132**.

The infrared light receiving portion **136** sends the operation signals **S146** from the infrared light sending portion **130** to the candidate selection portion **15**.

If the candidate selection portion **15** has received an operation signal **S146** produced with the cursor key **133** during the time after receiving the presentation position information **S144** from the candidate presentation portion **14** and before receiving the trigger signal **S143**, then the candidate selection portion **15** produces preliminary candidate position information **S141** based on the operation signal **S146** and the presentation position information **S144**, and changes the display on the display **137** based on the preliminary candidate position information **S141.** If the candidate selection portion **15** has received the operation signal **S146** produced with the cursor key **133** before receiving the trigger signal **S143** from the candidate presentation portion **14,** then the candidate selection portion **15** produces selection information **S112** based on the operation signal **146** and the presentation position information **S144,** and sends this selection information **S112** to the task control portion **12.**

The task control portion **12** sends a presentation-stop signal **142** to the candidate presentation portion **14** in response to the selection information **S112** from the candidate selection portion **15.** Furthermore, the task control portion **12** switches the screen of the display **137** based on the selection information **S112** from the candidate selection portion **15.**

The candidate presentation portion **14** stops the presentation of the task candidates **S111** on the display **137** in response to the presentation-stop signal **142** from the task control portion **12.**

### Operation of Digital Television System

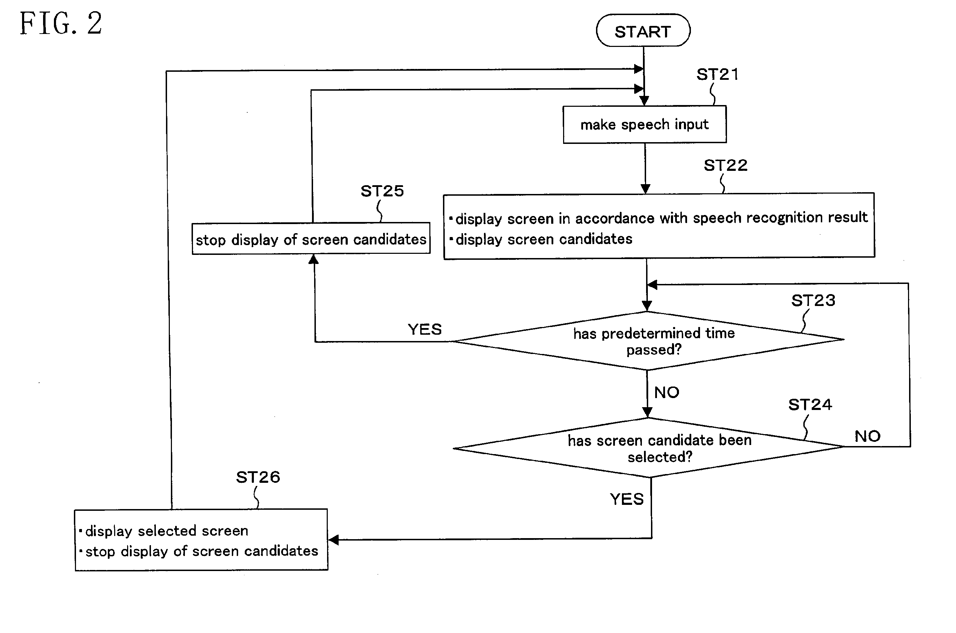

The following is an explanation of the operation of the digital television system configured as described above. Referring to Figs. **2** to **4B**, the following describes an example, in which an electronic television program guide is operated by speech and key operation.

### (1) Case in which the screen intended by the user is displayed

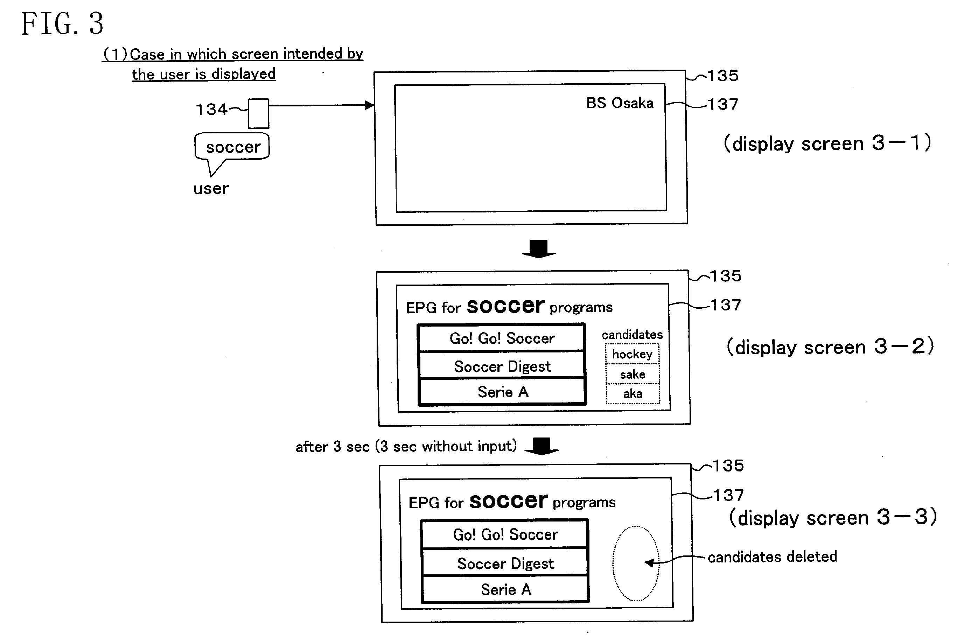

First, the program of the television station "BS Osaka" is shown on the display **137** (see display screen **3-1** in Fig. **3**).

### [Step ST21]

Facing the microphone **131** of the remote control **134,** the user utters the word "soccer" in order to view the electronic program guide (EPG) for soccer programs (see display screen Fig. **3-1** in Fig. **3**). The entered speech data are sent by the infrared light sending portion **130** to the infrared light receiving portion **136** of the television set **135.** The infrared light receiving portion **136** sends the received speech data to the speech recognition portion **11.** The speech recognition portion **11** outputs, as recognition results **S110,** "soccer," which is the best match between the information concerning the speech data and the lexicon entries included in the recognition lexicon **122,** and the second to fourth best matches "hockey," "sake" and "aka" (which is the Japanese word for "red"). The recognition result **S110** "soccer," is sent to the task control portion **12,** and the recognition results **S110** "hockey," "sake," and "aka" are sent to the candidate creation portion **13.** The candidate creation portion **13** creates the task candidates **S111** "hockey," "sake" and "aka" and sends them to the candidate presentation portion **14.**

### [Step ST22]

The task control portion **12** shows on the display **137** the electronic program guide (first screen) based on the recognition result **S110** "soccer" (first task). The candidate presentation portion **14** presents on the display **137** "hockey," "sake" and "aka," which are the screen candidates for screens different from the first screen (see display screen **3-2** in Fig. **3).** As shown in the display screen **3-2,** by displaying "EPG for soccer programs" the user will know that what is shown on the screen at that time is the electronic program guide for soccer programs. Furthermore, in the displayed text "EPG for soccer program" the word "soccer," that is, the recognition result, is displayed with emphasis. The region where the EPG for soccer programs is shown is emphasized by a bold frame. On the other hand, the screen candidates are shown in smaller type to the side of the screen. And by marking them as "candidates," the user will know that what is shown are candidates. The region showing the "candidates" is shown in a thin dotted frame with small type.

It should be noted that it is also possible to let the user know that the screen that is displayed at that time is the electronic program guide for soccer programs by displaying "soccer" among the screen candidates in addition to displaying "EPG for soccer programs" or instead of displaying "EPG for soccer programs."

The candidate presentation portion **14** sends the presentation position information **S144,** which is the information about the position at which the screen candidates *"hockey," "sake"* and "*aka*" are shown on the display **137,** to the candidate selection portion **15.**

### [Steps ST23 and ST24]

If the user has not operated the cursor key **133** for three seconds (a predetermined time) after the screen candidates have been displayed and has thus shown no intention of selecting a screen candidate (that is, if the candidate presentation portion **14** has received no presentation-stop signal **S142),** then the candidate presentation portion **14** sends a trigger signal **S143** to the candidate selection portion **15** at three seconds (the predetermined time) after displaying the screen candidates, and prevents the candidate selection portion **15** from creating a selection signal **S112** until the next speech data have been input. Then, the procedure advances to **ST25.**

### [Step ST25]

As shown in the display screen **3-3** in Fig. **3**, the candidate presentation portion **14** deletes (stops the display of) the screen candidates on the display **137**.

### (2) Case in which the screen intended by the user is not displayed

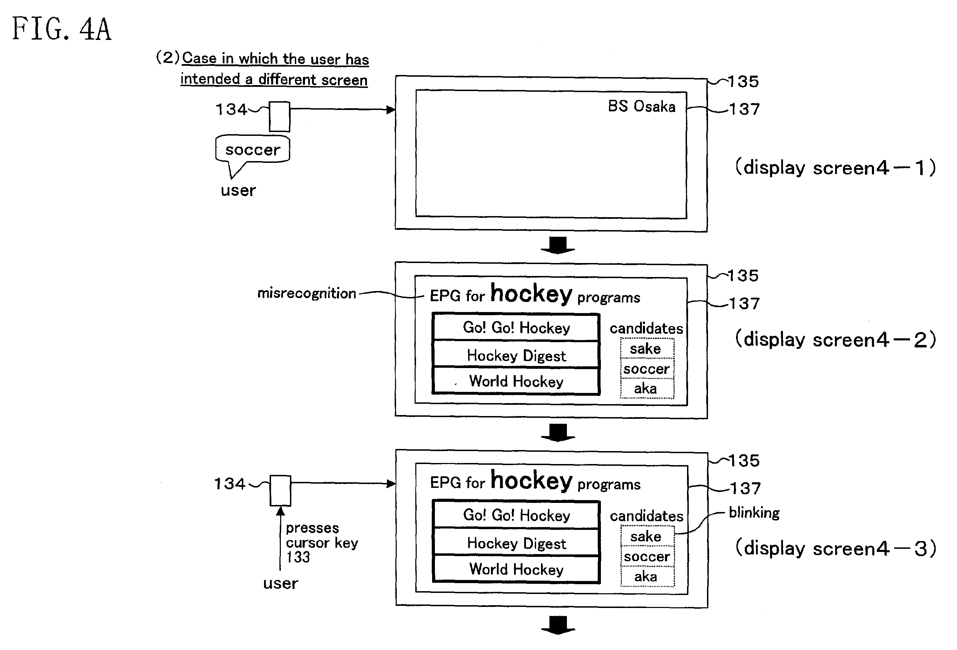

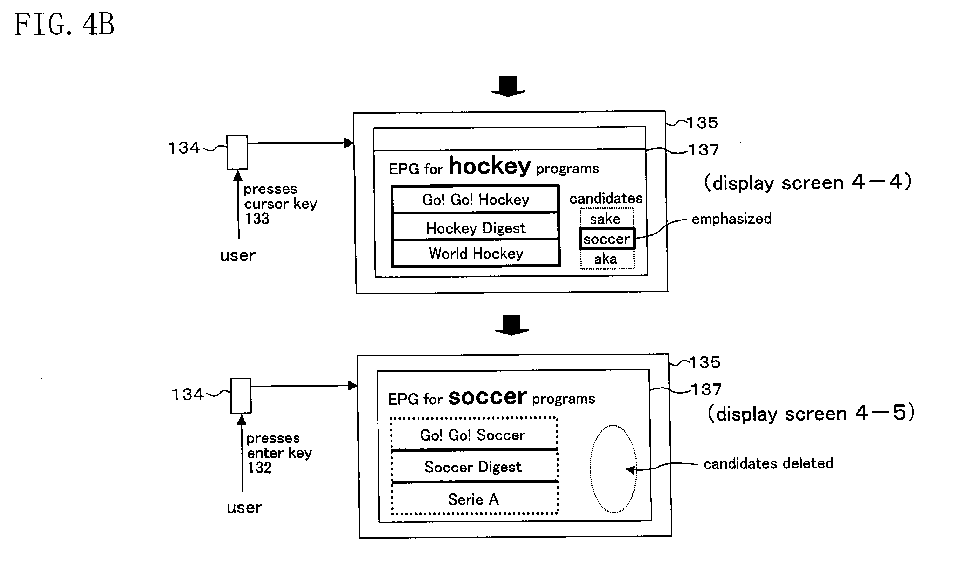

First, the program of the television station "BS Osaka" is shown on the display **137** (see display screen **4-1** in Fig. **4**).

### [Step ST21]

Facing the microphone **131** of the remote control **134,** the user utters the word "soccer" in order to view the electronic program guide (EPG) for soccer programs (see display screen Fig. **4-1** in Fig. **4**). The entered speech data are sent by the infrared light sending portion **130** to the infrared light receiving portion **136** of the television set **135.** The infrared light receiving portion **136** sends the received speech data to the speech recognition portion **11**. The speech recognition portion **11** outputs, as recognition results **S110,** "hockey," (a misrecognition) which is the best match between the information concerning the speech data and the lexicon entries included in the recognition lexicon **122**, and the second to fourth best matches "soccer," "sake," "aka". The recognition result **S110** "hockey" is sent to the task control portion **12,** and the recognition results **S110** "soccer," "sake," and "aka" are sent to the candidate creation portion **13.** The candidate creation portion **13** creates the task candidates **S111** "soccer," "sake" and "aka" and sends them to the candidate presentation portion **14**.

### [Step ST22]

The task control portion **12** shows on the display **137** the electronic program guide (first screen) based on the recognition result **S110** "hockey" (first task). The candidate presentation portion **14** presents on the display **137** "sake," "soccer" and "aka," which are the screen candidates for screens different from the first screen (see display screen **4-2** in Fig. **4**). As shown in the display screen **4-2**, by displaying "EPG for hockey programs" the user will know that what is shown on the screen at that time is the electronic program guide for hockey programs. Furthermore, in the displayed text "EPG for hockey program" the word "hockey," that is, the recognition result, is displayed with emphasis. The region where the EPG for hockey programs is shown is emphasized by a bold frame. On the other hand, the screen candidates are shown in smaller type to the side of the screen. And by marking them as "candidates," the user will know that what is shown are candidates. The region showing the "candidates" is shown in a thin dotted frame with small type.

It should be noted that it is also possible to let the user know that the screen that is displayed at that time is the electronic program guide for hockey programs by displaying "hockey" among the screen candidates in addition to displaying "EPG for hockey programs" or instead of displaying "EPG for hockey programs."

The candidate presentation portion **14** sends the presentation position information **S144**, which is the information about the position at which the screen candidates "sake," "soccer" and "aka" are shown on the display **137**, to the candidate selection portion **15**.

### [Steps ST23 and ST24]

Since the screen that is wished by the user is the electronic program guide for soccer programs, the user operates the cursor key **133** of the remote control **134** within three seconds (a predetermined time) after the screen candidates are displayed, and thus expresses his wish to select a screen candidate (see display screen **4-3** in Fig. **4A**). Based on the operation signal **S146** produced in response to the operation of the cursor key **133**, the candidate selection portion **15** produces preliminary candidate position information **S141,** and lets the frame of the candidates shown on the display **137** blink (see display screen **4-3** in Fig. **4A).** Furthermore, as shown in display screen **4-4** in Fig. **4B,** the screen candidate selected in accordance with the operation of the cursor key **133** is enclosed by a bold frame. It should be noted that it is also possible to change or invert the color of the selected candidate, or to display it in a larger font. Due to the operation signal **S146** produced with the enter key **132,** the candidate selection portion **15** determines "soccer" as the selection information **S112** (see display screen **4-4** in Fig. **4B).** The candidate selection portion **15** sends the selection information **S112** "soccer" to the task control portion **12.**

### [Step ST26]

Based on the selection information **S112,** the task control portion **12** displays the electronic program guide for the soccer program on the display **137**. In this situation, the electronic program guide for the soccer program is emphasized by displaying it large or changing its color, so that it is apparent that it has been corrected. Moreover, after receiving the selection information **S112**, the task control portion **12** sends the presentation-stop signal **142** to the candidate presentation portion **14.** In response to the presentation-stop signal **142**, the candidate presentation portion **14** stops the display of the task candidates shown on the display **137** (see display screen **4-5** in Fig. **4B).**

### Other Examples of Screen Displays

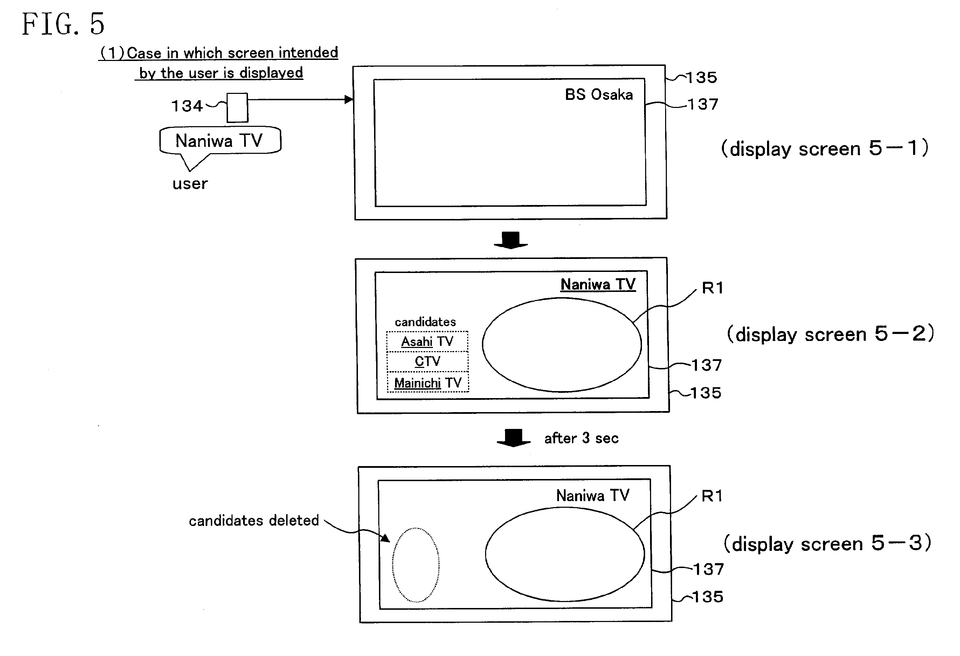

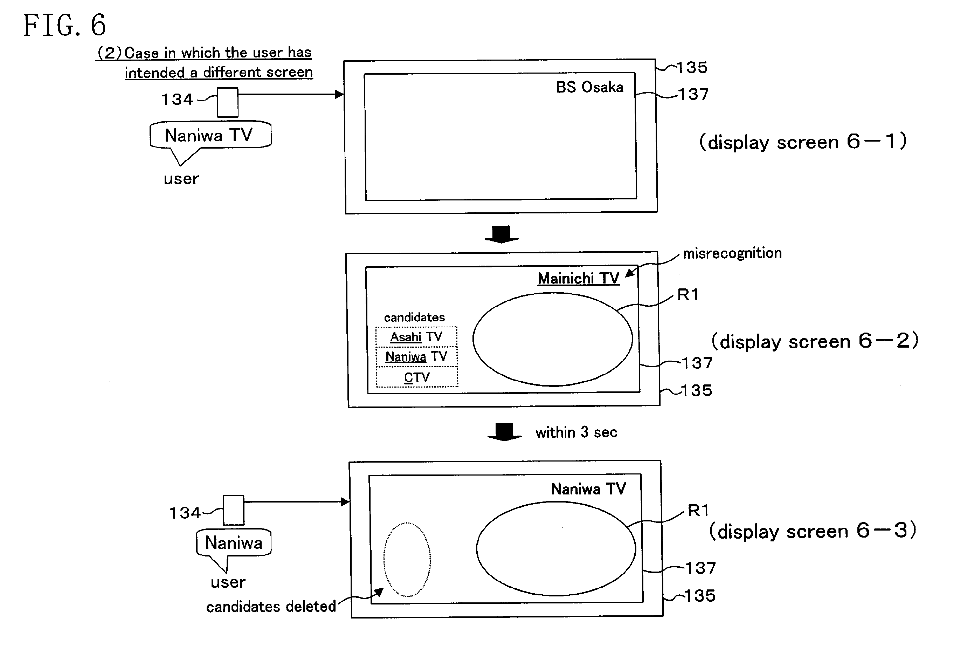

The following is a description of other examples of screen displays, with reference to Figs. **5** and **6**.

### (1) Case in which the screen intended by the user is displayed

First, the program of the television station "BS Osaka" is shown on the display **137** (see display screen **5-1** in Fig. **5**).

### [Step ST21]

Facing the microphone **131** of the remote control **134,** the user utters the word "Naniwa TV" in order to view the television station "Naniwa TV" (see display screen Fig. **5-1** in Fig. **5**). The entered speech data are sent via the infrared light sending portion **130** and the infrared light receiving portion **136** to the speech recognition portion **11.** The speech recognition portion **11** outputs, as a recognition result **S110,** "Naniwa TV," which is the best match between the information concerning the speech data and the lexicon entries included in the recognition lexicon **122.** The speech recognition portion **11** further outputs, as recognition results **S110,** "Asahi TV," "CTV," and "Mainichi TV," which are those lexicon entries in the recognition lexicon **122** that are associated with "Naniwa TV" Since "Naniwa TV," "Asahi TV," "CTV," and "Mainichi TV" are those lexicon entries in the recognition lexicon **122** that are words that stand for a broadcasting station (a channel), these lexicon entries are associated with each other, with broadcasting station (channel) serving as the keyword. The recognition result **S110** "Naniwa TV," is sent to the task control portion **12,** and the recognition results **S110** "Asahi TV," "CTV," and "Mainichi TV" are sent to the candidate creation portion **13.** The candidate creation portion **13** creates the task candidates **S111** "Asahi TV," "CTV" and "Mainichi TV" and sends them to the candidate presentation portion **14.**

### [Step ST22]

As shown in the display screen **5-2** in Fig. **5**, the task control portion **12** displays in a region **R1** of the display **137** the screen of the recognition result **S111** "Naniwa TV" (first task). In this situation, the text for the recognition result "Naniwa TV" is emphasized by underlining it. The candidate presentation portion **14** displays the screen candidates "Asahi TV," "CTV" and "Mainichi TV" in a region of the display **137** outside the region **R1** (see display screen **5-2** in Fig. **5).** In this situation, the portions "Asahi," "C" and "Mainichi," which are the words to be uttered by the user (that is, the words that should be uttered for a selection), are emphasized by underlining them. Since the word "*TV*" is included in all words (candidates), this portion does not have to be uttered and is therefore not emphasized on the display.

### [Steps ST23 and ST24]

If the user has shown no intention of selecting a screen candidate (i.e. made no utterance) for three seconds (a predetermined time) after the screen candidates are displayed (that is, if the candidate presentation portion **14** has received no presentation-stop signal **S142**), then the candidate presentation portion **14** sends at three seconds (a predetermined time) after the screen candidates have been displayed a trigger signal **S143** to the candidate selection portion **15**, and prevents the candidate selection portion **15** from creating a selection signal **S112** until the next speech data have been input. Then, the procedure advances to **ST25**.

### [Step ST25]

As shown in the display screen **5-3** in Fig. **5**, the candidate presentation portion **14** deletes (stops the display of) the screen candidates on the display **137**. Furthermore, the emphasis of the recognition result "Naniwa TV" is stopped.

### (2) Case in which the screen intended by the user is not displayed

First, the program of the television station "BS Osaka" is shown on the display **137** (see display screen **6-1** in Fig. **6).**

### [Step ST21]

Facing the microphone **131** of the remote control **134,** the user utters the word "Naniwa TV" in order to view the television station "Naniwa TV" (see display screen Fig. **6-1** in Fig. **6**). The entered speech data are sent via the infrared light sending portion **130** and the infrared light receiving portion **136** to the speech recognition portion **11.** The speech recognition portion **11** outputs, as the recognition result **S110,** "Mainichi TV" (a misrecognition), which is the best match between the information concerning the speech data and the lexicon entries included in the recognition lexicon **122.** The speech recognition portion **11** further outputs, as recognition results **S110,** "Asahi TV," "Naniwa TV," and "Mainichi TV," which are those lexicon entries in the recognition lexicon **122** that are associated with "Mainichi TV" The recognition result **S110** "Mainichi TV" is sent to the task control portion **12,** and the recognition results **S110** "Asahi TV," "Naniwa TV," and "CTV" are sent to the candidate creation portion **13.** The candidate creation portion **13** creates the task candidates **S111** "Asahi TV," "Naniwa TV" and "CTV" and sends them to the candidate presentation portion **14**.

### [Step ST22]

As shown in the display screen **6-2** in Fig. **6**, the task control portion 12 displays in a region **R1** of the display **137** the screen of the recognition result **S111** "Mainichi TV" (first task). In this situation, the text for the recognition result "Mainichi TV" is emphasized by underlining it. The candidate presentation portion **14** displays the screen candidates "Asahi TV," "Naniwa TV" and "CTV" in a region of the display **137** outside the region **R1** (see display screen **6-2** in Fig. **6).** In this situation, the portions "Asahi," "Naniwa" and "C," which are the words to be uttered by the user (that is, the words that should be uttered for a selection), are emphasized by underlining them.

### [Steps ST23, ST24 and ST26]

Since the screen that is wished by the user is "Naniwa TV," the user utters the word "Naniwa" into the microphone **131** of the remote control **134** within three seconds (a predetermined time) after the screen candidates are displayed (see display screen **6-3** in Fig. **6**). The entered speech data are sent via the infrared light sending portion **130** and the infrared light receiving portion **136** to the speech recognition portion **11.** The speech recognition portion **11** outputs, as the recognition result **S110,** "Naniwa TV", which is the best match between the information concerning the received speech data and the lexicon entries included in the recognition lexicon **122.** The recognition result **S110** "Naniwa TV" is sent to the task control portion **12.** As shown in display screen **6-3** in Fig. **6,** the task control portion **12** displays the screen of the recognition result **S110** "Naniwa TV" in the region **R1** of the display **137.** Furthermore, the task control portion **12** sends a presentation-stop signal **S142** to the candidate presentation portion **14.** In response to this presentation-stop signal **S142,** the candidate presentation portion **14** stops the display of the task candidates that are shown on the display **137** (see display screen **6-3** in Fig. **6).**

### Effects

With the first embodiment as explained above, the task candidates created by the candidate creation portion **13** are displayed and the task intended by the user is selected and executed at whichever is the faster timing of a first timing with which the second task is executed and a second timing at which a first predetermined time after displaying task candidates has elapsed, so that the user does not need to perform again from the beginning the procedure for executing the task intended by the user. Consequently, usage becomes more convenient and less troublesome for the user.

Moreover, the candidate presentation portion **14** automatically stops the presentation of the task candidates if the user shows no intent of selecting a task candidate even after the first predetermined time has passed, so that if the first task that has been executed is the task intended by the user, the user does not need to stop the presentation of the task candidates. Consequently, usage becomes more convenient and less troublesome for the user. Furthermore, the screen display region can be utilized effectively. For example, it is possible to display other information in the region in which the candidates were displayed. In the case of a sports program, it is possible to display data about the players, for example. It is also possible to display news or weather information.

Furthermore, the task control portion **12** automatically executes the first task based on the recognition result **S110** that has been output by the recognition portion **11,** so that if the first task that is executed is the task that was intended by the user, the user does not have to select a task candidate. Consequently, usage becomes more convenient and less troublesome for the user.

Furthermore, the candidate presentation portion **14** automatically presents the task candidates, so that if the first task that is executed is not the task intended by the user, the user does not have to perform an operation in order to have the task candidates presented. Consequently, usage becomes more convenient and less troublesome for the user.

Moreover, the task candidates created by the candidate creation portion **13** include tasks related to the recognition data that are good matches when comparing information reflecting the entered task content to be recognized with the recognition lexicon entries, so that even when a misrecognition has occurred, it is possible to include the correct recognition among the task candidates and to correct the misrecognition with the user's selection. Consequently, usage becomes more convenient for the user.

It should be noted that the present embodiment is not limited to the above description, and the various adaptations listed below are also possible, for example.
a) The present embodiment may be further provided with a cancel function.
b) The speech recognition portion **11** may perform the recognition using linguistic knowledge, grammatical knowledge or semantic knowledge, and it may perform such processes as keyword extraction.
c) The recognition lexicon entries are not limited to words and may also be phrases or sentences.
d) The selection of the task candidates may also be performed by speech.
e) One task or one task candidate may be determined using a plurality of recognition results
f) There may be only one task candidate.
g) A task of realizing the cancel function may be included as one task candidate.
h) The communication between remote control and television set is not limited to infrared light, and it is also possible to apply wireless data communication (transmission) technology such as the Bluetooth standard.
i) The presentation of the task candidates is not limited to screen displays and may be accomplished by speech.
j) The number of task candidates that are presented does not have to be fixed.
k) The task candidates may be presented such that they scroll over the display.
l) Some of the task candidates may be displayed even after the first predetermined time has elapsed.

### Second Embodiment

### Configuration of Digital Television System

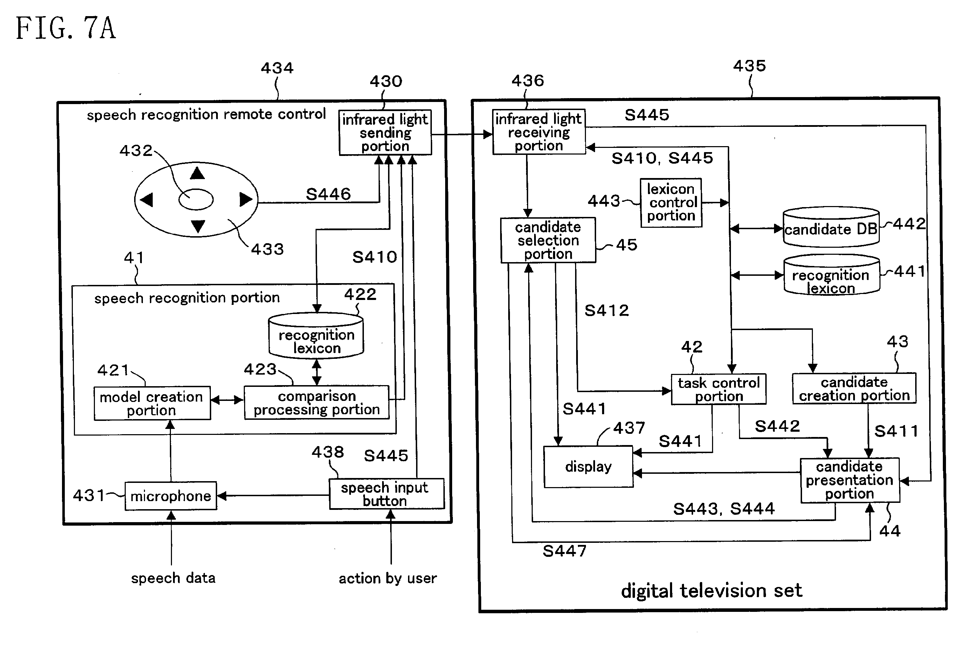

Fig. **7A** shows the overall configuration of a digital television system in accordance with a second embodiment. This system is provided with a digital television set **435** and a remote control **434.** The digital television set **435** includes an infrared light receiving portion **436,** a task control portion **42,** a candidate creation portion **43**, a candidate presentation portion **44**, an candidate selection portion **45**, a display **437**, a recognition lexicon **441**, a lexicon control portion **443**, and a candidate database (DB) **442.** The remote control **434** includes a microphone **431,** a speech entry button **438**, a recognition portion **41**, a cursor key **433**, an enter key **432**, and an infrared light sending portion **430**. The recognition portion **41** includes a model creation portion **421**, a recognition lexicon **422**, and a comparison processing portion **423**.

The microphone **431** receives speech data from the user while the speech entry button **438** is pressed, and sends them to the model creation portion **421**.

The model creation portion **421** converts the speech data that have been sent by the microphone **431** into characteristic quantities and stores them as a model.

The comparison processing portion **423** compares the lexicon entries included in the recognition lexicon **422** with the model stored by the model creation portion **421**, and produces a recognition result **S410**, which it sends to the infrared light sending portion **430**.

The infrared light sending portion **430** sends the recognition result **S410** to the infrared light receiving portion **436.**

The infrared light receiving portion **436** sends the recognition result **S410** sent by the infrared light sending portion **430** to the task control portion **42** and the candidate creation portion **43.**

Based on the recognition result **S410** sent by the infrared receiving portion **436,** the task control portion **42** switches the screen of the display **437** (first task).

Based on the recognition result **S410** that has been sent by the infrared light receiving portion **436,** the candidate creation portion **43** creates task candidates **S411** and sends those task candidates **S411** to the candidate presentation portion **44.**

The candidate presentation portion **44** presents the task candidates **S411** created by the candidate creation portion **43** on the display **437,** and sends a trigger signal **S443** and presentation position information **S444** to the candidate selection portion **45.**

If the candidate selection portion **45** has not received an operation signal **S446** produced by the cursor key **433** after the trigger signal **S443** has been received and before a first predetermined time has elapsed, then a presentation-stop signal **S447** is sent to the candidate presentation portion **44**.

In response to the presentation-stop signal **S447,** the candidate presentation portion **44** stops the presentation of the task candidates **S411** that are presented on the display **437** (second timing).

The infrared light sending portion **430** sends operation signals **S446** entered with the cursor key **433** and/or the enter key **432** to the infrared light receiving portion 436.

The infrared light receiving portion **436** sends the operation signals **S446** to the candidate selection portion **45**.

If the candidate selection portion **45** receives an operation signal **S446** produced with the cursor key **433** after the trigger signal **S443** sent by the candidate presentation portion **44** has been received and before a first predetermined time has elapsed, then preliminary candidate position information **S441** is produced based on the operation signal **S446** produced with the cursor key **433** and the presentation position information **S444** sent by the candidate presentation portion **44,** and what is shown on the display **137** is changed based on this preliminary candidate position information **S441.** If the candidate selection portion **45** receives the operation signal **S446** produced with the cursor key **433** in the time after the trigger signal **S443** has been received and before the first predetermined time has elapsed, then selection information **S412** based on the operation signal **S446** produced with the cursor key **433** and/or the enter key **432** and the presentation position information **S444** is produced, and this selection information **S412** is sent to the task control portion **412**.

The task control portion **42** receives the selection information **S412** produced by the candidate selection portion **45** and sends a presentation-stop signal **S442** to the candidate presentation portion **44.** Furthermore, the task control portion **42** switches the screen of the display **137** based on the selection information **S412** that has been sent by the candidate selection portion **45** (second task).

The candidate presentation portion **44** receives the presentation-stop signal **S442** sent by the task control portion **42,** and stops the presentation of the task candidates **S411** on the display **437** (first timing).

The infrared light sending portion **430** sends an action signal **S445** from the user, which is general information that has been prepared with the speech entry button **438** and reflects a task that is different from the first task, to the infrared receiving portion **436.**

The infrared receiving portion **436** sends the action signal **S445** to the candidate selection portion **45** and the candidate presentation portion **44.**

The candidate selection portion **45** receives the action signal **S445** and does not produce any selection information **S412** until it receives the next presentation position information **S444.**

The candidate presentation portion **44** receives the action signal **S445** and stops the presentation of the task candidates **S411** on the display **437** (third timing).

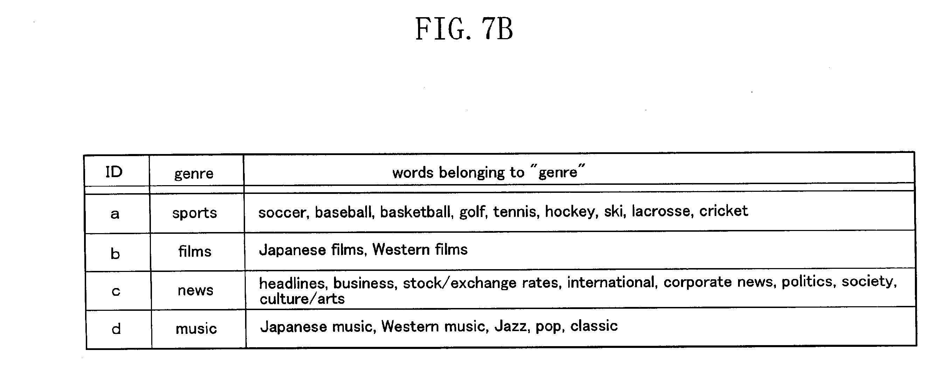

The table shown in Fig. **7B** is stored in the candidate **DB 442**. In the table shown in Fig. **7B**, four association regions (groups) based on genres have been set. Here, "association region" corresponds to "semantic closeness." That is to say, words belonging to the same association region (group) can be said to be semantically close to one another. In the table shown in Fig. **7B,** the four groups are associated with information (group IDs) *a* to *d* for identifying those groups. The groups are grouped together taking the genre as the keyword. The groups include a word indicating the genre of the group and words belonging to the genre indicated by that word. The group corresponding to ID *a* (group *a*) includes the word "sports" indicating the genre of group *a* and the words "soccer," "baseball," ..., "cricket" belonging to the genre "sports." Group *b* includes the word "films" indicating the genre of group *b* and the words "Japanese films" and "Western films" belonging to the genre "films." Group *c* includes the word "news" indicating the genre of group *c* and the words "headlines," "business," ..., "culture" belonging to the genre "news." Group *d* includes the word "music" indicating the genre of group *d* and the words "Japanese music," "Western music," ..., "classic" belonging to the genre "music."

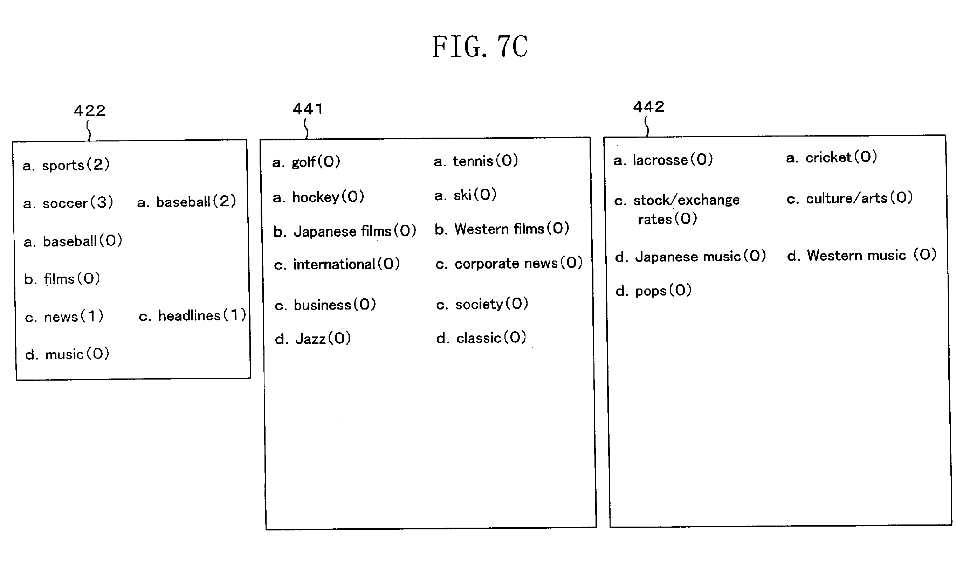

As shown in Fig. **7C**, the data indicating the words included in each group (glossary entries) are stored in the recognition lexicons **422** and **441** or the candidate DB **442**. The glossary entries stored in the recognition lexicons **422** and **441** are stored in the form of lexicon entries for speech recognition. The candidate DB **442** stores glossary entries for which lexicon entries for speech recognition have not been prepared so far. The various glossary entries are associated with respective IDs indicating the group to which the glossary entries belong and data indicating the number of times they have been selected by the user by speech using the speech recognition remote control **434** or by key input. In Fig. **7C,** the IDs indicating the groups are "a." (for group *a*), "b." (for group *b*), etc., and the data indicating the number of times they have been selected are given as (0) (meaning they have been selected zero times) (1), (meaning they have been selected once), etc.

In order to reduce misrecognitions in the speech recognition portion **41**, the number of glossary entries (lexicon entries) sets stored in the recognition lexicon **422** is limited. The glossary entries stored in the recognition lexicon **422** are determined based on predetermined criteria. Here, the glossary entries indicating the genres, namely "sports," "films," "news" and "music," as well as the glossary data that are selected relatively often (i.e. that are used frequently), namely "soccer," "baseball" and "headlines," are stored in the recognition lexicon **422.** Moreover, for the groups with the highest usage frequency of all groups (group *a* in this example), the number of glossary entries stored in the recognition lexicon **422** is made larger than for the other groups. Therefore, the glossary entry "basketball" is stored in the recognition lexicon **422.**

### Operation of Digital Television System

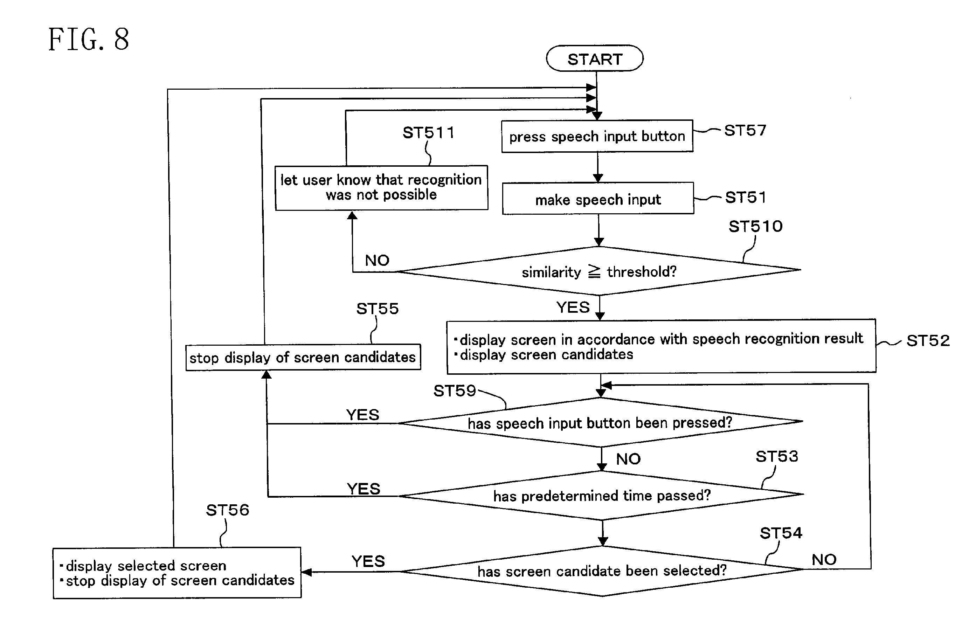

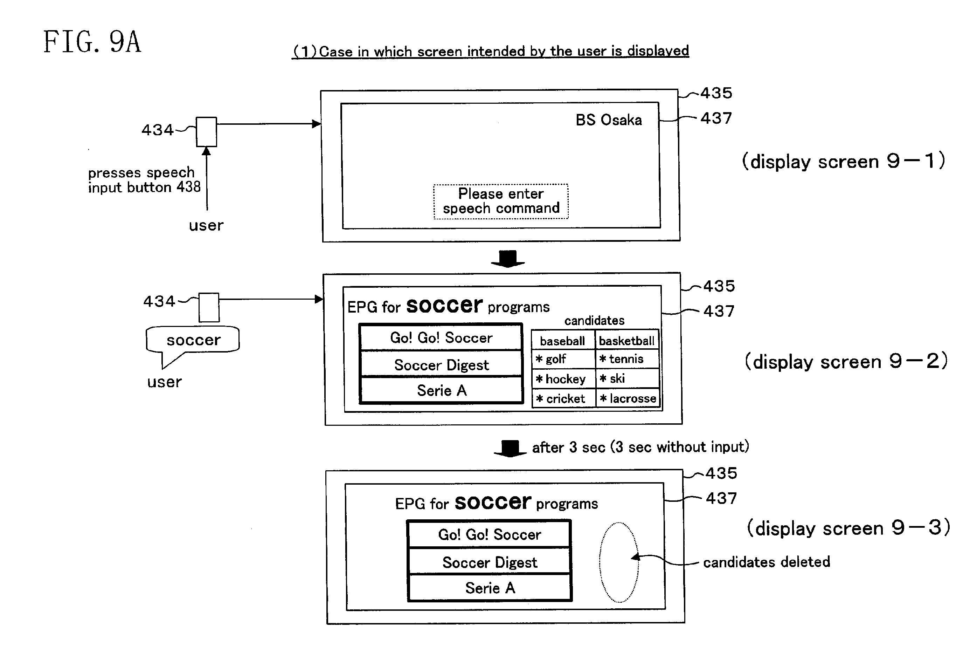

The following is an explanation of the operation of the system configured as described above. With reference to Fig. **8** and Figs. **9A** to **9H**, an example is described, in which an electronic television program guide is operated by speech and key operation.

### (1) Case in which the screen intended by the user is displayed

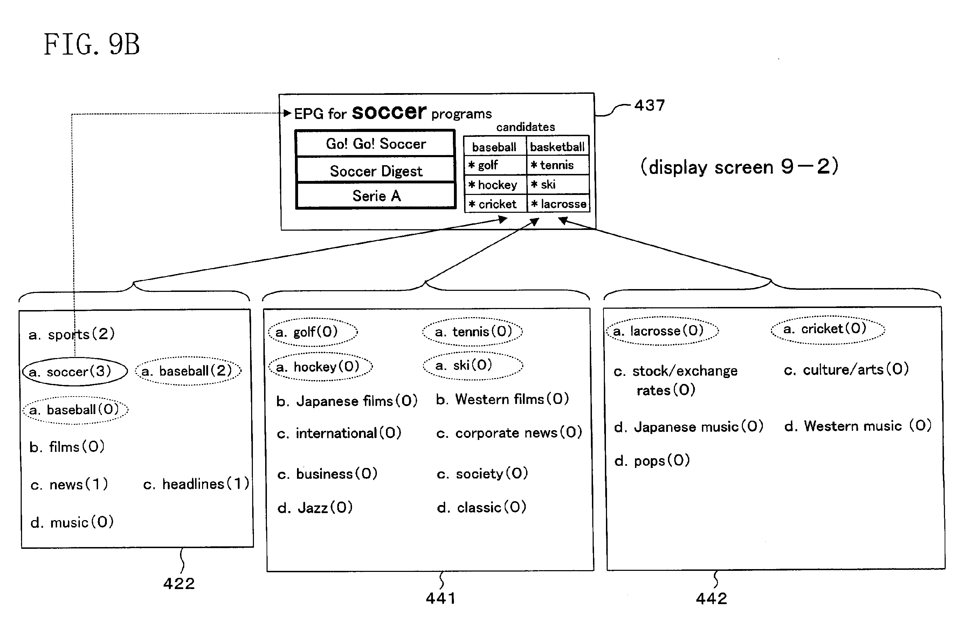

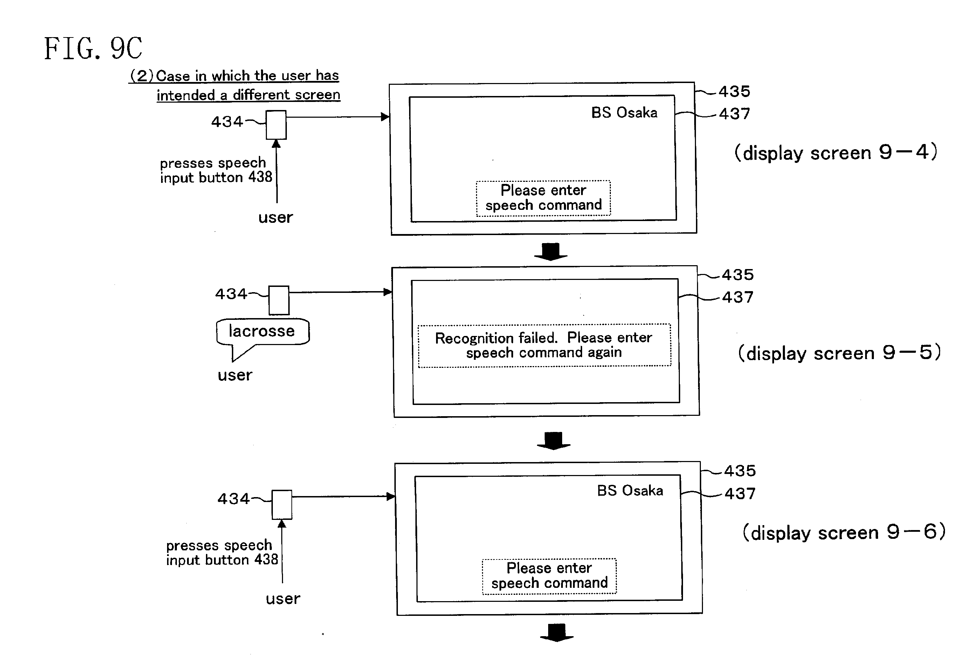

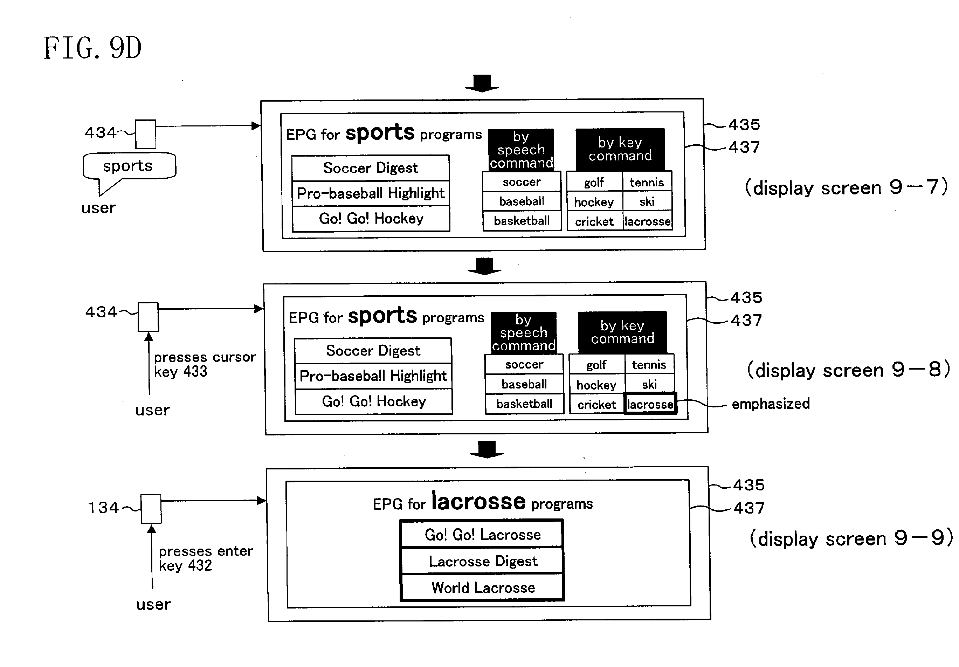

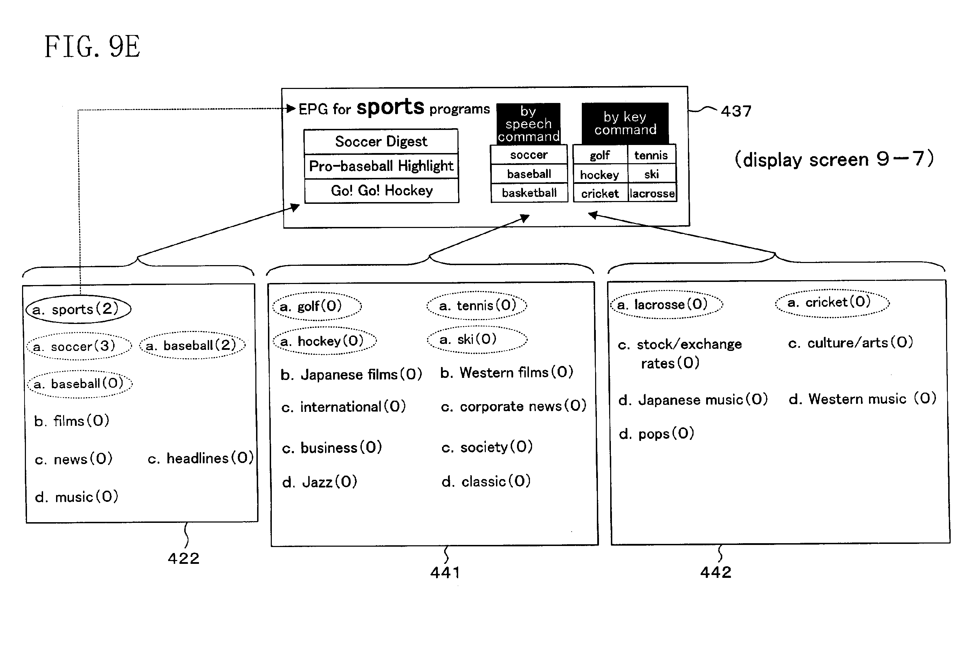

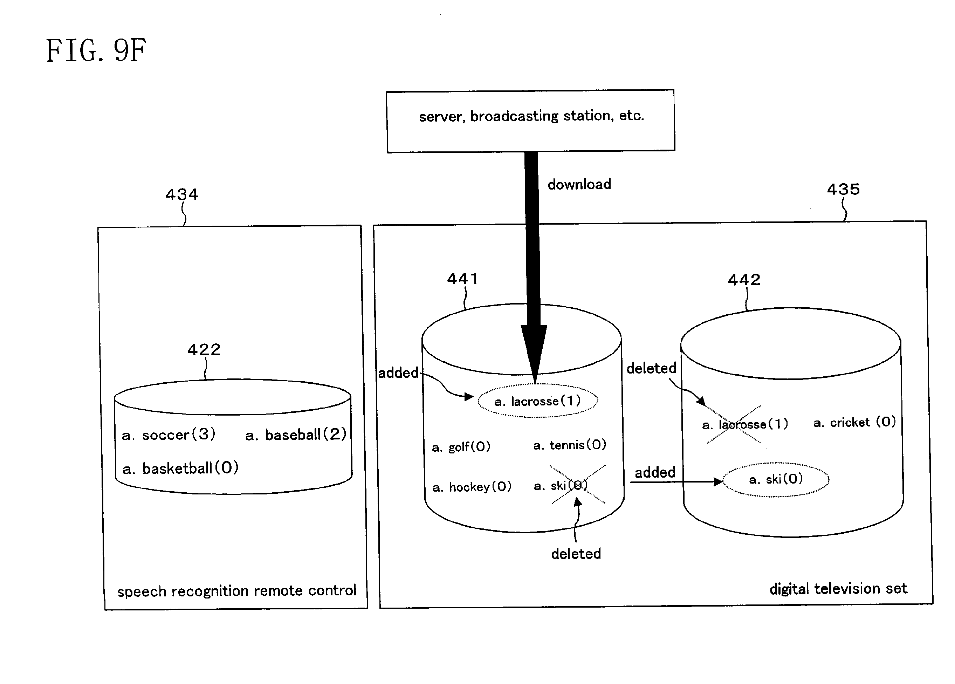

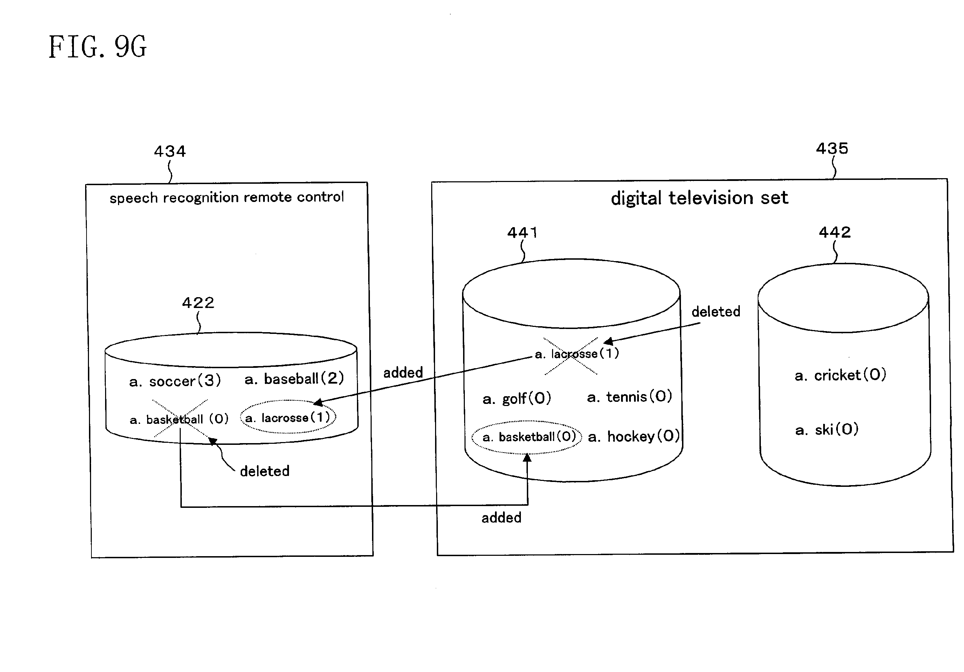

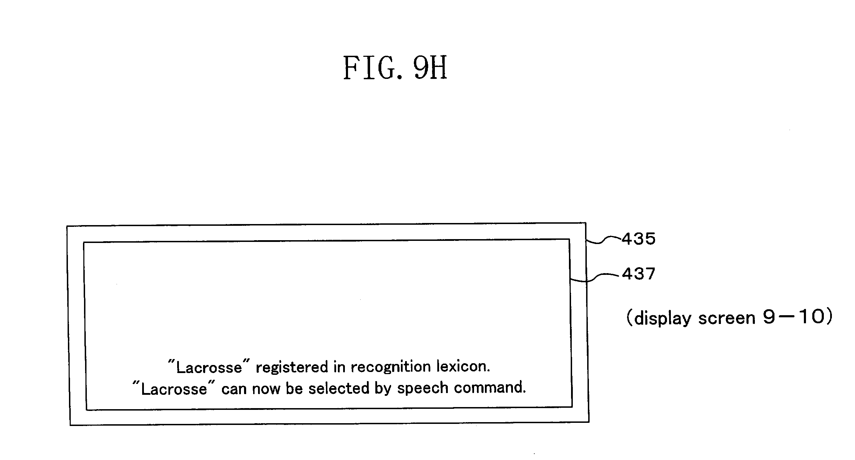

First, the program of the television station "BS Osaka" is shown on the display **437** (display screen **9-1** in Fig. **9**).

### [Step ST57]

The user presses the speech entry button **438** in order to make a speech input. In response to that, an action signal **S445** is sent to the candidate presentation portion **44.** In response to the action signal **S445,** if the candidate presentation portion **44** is displaying task candidates **S411** on the display **437,** then the display of the task candidates **S411** is stopped, and the message "please enter speech command" is shown on the display **437** (see display screen **9-1** in Fig. **9A**).

### [Step ST51]

While pressing down the speech entry button **438** of the remote control **434,** the user faces the microphone **431** and utters "soccer" (display screen **9-2** of Fig. **9A).** The entered speech data are sent to the recognition portion **41**. The recognition portion **41** selects from the lexicon entries included in the recognition lexicon **422** the lexicon entry that has the greatest similarity with the information concerning the speech data (in this example: "soccer").

### [Step ST510]

Next, the recognition portion **41** determines whether the degree of similarity to the selected lexicon entry is at least a predetermined threshold. If the degree of similarity is at least a predetermined threshold, then the procedure advances to Step **ST52.** If the degree of similarity is lower than the predetermined threshold, then the procedure advances to Step **ST511**. Here, it is assumed that the procedure advances to Step **ST52**.

It should be noted that the "predetermined threshold" does not necessarily have to be fixed to one value. It is also possible to adopt a configuration in which the user can change the threshold as appropriate in accordance with the usage environment or certain usage qualities (for example when the recognition rate is low).

### [Step ST52]

The recognition portion **41** outputs "soccer" as the recognition result **S410**. This recognition result **S410** is sent via the infrared light sending portion **430** to the infrared light receiving portion **436** of the television set **435.** The infrared light receiving portion **436** sends the received recognition result **S410** "soccer" to the task control portion **42** and the candidate creation portion **43.**

Based on the recognition result **S410** "soccer," the candidate creation portion **43** creates task candidates **411.** The candidate creation portion **43** references the table in the candidate DB **442** (see Fig. **7B**), and extracts the glossary entries "baseball," "basketball," "golf," "tennis," "hockey," "ski," "lacrosse" and "cricket," which belong to the same group (group *a*) as "soccer." It should be noted that the glossary entry "soccer" and the glossary entry "sports," which indicates the genre, are excluded. The candidate creation portion **43** sends the extracted glossary data as the task candidates **S411** to the candidate presentation portion **44.** The candidate creation portion **43** attaches to each of the task candidates **S411** information that indicates whether the extracted glossary entry is included in the recognition lexicon **422**.

Based on the recognition result **S410** "soccer," the task control portion **42** displays the electronic program guide for soccer programs, which is the first screen, on the display **437** (first task). The candidate presentation portion **44** displays on the display **437** "baseball," "basketball," "golf' "tennis," "hockey," "ski," "lacrosse" and "cricket," which are the screen candidates for screens different from the first screen (see display screen **9-2** in Figs. **9A** and **9B**). As shown in Fig. **9B**, no asterisk is put in front of "baseball" and "basketball, which are screen candidates that are included in the recognition lexicon **422**, whereas "golf' "tennis," "hockey," "ski," "cricket" and "lacrosse," which are screen candidates that are not included in the recognition lexicon **422**, are marked with an asterisk before them. This indicates to the user whether the displayed candidates are included in the recognition lexicon **422**. Thus, the user can know what can be selected by speech and what cannot be selected by speech (that is, what needs to be selected by the operation keys). At the same time as the screen candidates are displayed, the candidate presentation portion **44** sends to the candidate selection portion **45** a trigger signal **S443** and presentation position information **S444,** which is information about the position at which the screen candidates "baseball," "basketball," "golf' "tennis," "hockey," "ski," "cricket" and "lacrosse" are shown on the display **437**.

### [Steps ST59, ST53 and ST54]

If for a time of three seconds (first predetermined time) after the candidate selection portion **45** has received the trigger signal **S443**, the user does not press the speech entry button **438** to enter speech data, and if for a time of three seconds (predetermined time) after the candidate selection portion **45** has received the trigger signal **S443,** the cursor key **433** is not operated to express the intention to select a screen candidate, then the candidate selection portion **45** does not produce selection information **S412** until the next action signal **S445** is received.

### [Step ST55]

The candidate presentation portion **44** stops the display of the screen candidates on the display **437** (display screen **9-3** in Fig. **9A**).

### (2) Screen intended by the user is not displayed

First, the program of the television station "BS Osaka" is shown on the display **437** (display screen **9-4** in Fig. **9C**).

### [Step ST57]

The user presses the speech entry button **438** in order to make a speech input. In response, an action signal **S445** is sent to the candidate presentation portion **44.** In response to the action signal **S445,** if the candidate presentation portion **44** is displaying task candidates **S411** on the display **437,** then the display of the task candidates **S411** is stopped, and the message "please enter speech command" is shown on the display **437** (see display screen **9-4** in Fig. **9C**).

### [Step ST51]

The user wishes to view the EPG for "lacrosse" on the display **437**. Now, since "lacrosse" is a minor sport, the user is uncertain whether the EPG for "lacrosse" can be displayed by speech. To attempt such a display, the user faces the microphone **431** while pressing down the speech entry button **438** of the remote control **434,** and tentatively utters the word "lacrosse" (display screen **9-5** in Fig. **9C**). The entered speech data are sent to the recognition portion **41**. The recognition portion **41** selects from the lexicon entries included in the recognition lexicon **422** the lexicon entry that has the greatest similarity with the information concerning the speech data.

### [Step ST510]

Next, the recognition portion **41** determines whether the degree of similarity to the selected lexicon entry is at least a predetermined threshold. If the degree of similarity is at least a predetermined threshold, then the procedure advances to Step **ST52.** Here, it is assumed that the degree of similarity is lower than the predetermined threshold. The recognition portion **41** sends a signal which indicates this to the task control portion **42**. Then, the procedure advances to Step **ST511**.

### [Step ST511]

The task control portion **42** displays the message "Recognition failed. Please enter speech command again." on the display **437** (see display screen **9-5** in Fig. **9C**). Then the procedure returns to Step **ST57**. It should be noted that as a means for notifying the user, it is also possible to use sound (for example a beep), light (such as an optical signal from an LED or the like) or speech, for example.

### [Step ST57]

The user presses the speech input button **438** again. In response to that, the display **437** is cleared, and the message "please enter speech command" appears on the display **437** (display screen **9-6** in Fig. **9C**).

### [Step ST51]

The user knows that "lacrosse" belongs to the genre "sport." Thus, while pressing the speech input button of the remote control **434** and facing the microphone **431**, the user utters "sports" this time (display screen **9-7** in Fig. **9C**). The recognition portion **41** selects from the lexicon entries included in the recognition lexicon **422** the lexicon entry that has the greatest similarity with the information concerning the speech data (in this example: "sports").

### [Step ST510]

Next, the recognition portion **41** determines whether the degree of similarity to the selected lexicon data is at least a predetermined threshold. Here, it is assumed that the degree of similarity is greater than the predetermined threshold.

### [Step ST52]

The recognition portion **41** outputs "sports" as the recognition result **S410**. This recognition result **S410** is sent to the task control portion **42** and the candidate creation portion **43**.

Based on the recognition result **S410** "sports," the candidate creation portion **43** creates task candidates **S411**. The candidate creation portion **43** references the table in the candidate DB **442** (see Fig. **7B**), and extracts the glossary entries "soccer," "baseball," "basketball," "golf," "tennis," "hockey," "ski," "lacrosse" and "cricket," which belong to the same group (group *a*) as "sports." It should be noted that the glossary entry "sports" has been excluded. The candidate creation portion **43** sends the extracted glossary entries as the task candidates **S411** to the candidate presentation portion **44.** The candidate creation portion **43** attaches to each of the task candidates **S411** information that indicates whether the extracted glossary entry is included in the recognition lexicon **422**.

Based on the recognition result **S410** "sports," the task control portion **42** displays the text "EPG for sports programs" on the display **437** (first task). The candidate presentation portion **44** presents on the display **437** the screen candidates "soccer," "baseball," "basketball," "golf," "tennis," "hockey," "ski," "lacrosse" and "cricket" (see display screen **9-7** in Fig. **9D** and Fig. **9E**). As shown in Fig. **9E**, "soccer," "baseball" and "basketball," which are the screen candidates that are included in the recognition lexicon **422**, are displayed in association with the text "speech command OK." This indicates to the user that it is possible to select "soccer," "baseball" and "basketball" by speech. On the other hand, the screen candidates "golf," "tennis," "hockey," "ski," "cricket" and "lacrosse," which are the screen candidates that are not included in the recognition lexicon **422**, are displayed in association with the text "by operation keys." This indicates to the user that "golf," "tennis," "hockey," "ski," "cricket" and "lacrosse" cannot be selected by speech and must be selected with the operation keys.

Looking at the display screen **9-7**, the user knows that the desired item "lacrosse" cannot be selected by speech, but must be selected with the operation keys.

At the same time as the screen candidates are displayed, the candidate presentation portion **44** sends presentation position information **S444** and a trigger signal **S443** to the candidate selection portion **45.**

### [Step ST59, ST53 and ST54]

Within three seconds (first predetermined time) after the candidate selection portion **45** has received the trigger signal **S443,** the user operates the cursor key **433** on the remote control **434** to express the intention to select a screen candidate. Based on the operation signal **S446** produced with the cursor key **433,** the candidate selection portion **45** produces preliminary selection position information **S441**, and "lacrosse," which is the screen candidate that is currently assumed to be the preliminary screen candidate on the display **437**, is emphasized (for example by enclosing it in a bold frame or changing the color of the text) (display screen **9-8** in Fig. **9D).** With the operation signal **S446** produced by the enter key **432,** the candidate selection portion **45** determines "lacrosse" as the selection information **S412.** The candidate selection portion **45** sends the selection information **S412** "lacrosse" to the task control portion **42** (display screen **9-9** in Fig. **9D).**

### [Step ST56]

Based on the selection information **S412**, the task control portion **42** shows on the display **437** the electronic program guide for lacrosse programs (second task) (display screen **9-9** in Fig. **9D**).

### [Adding and Deleting Lexicon Data]

The possibility that the user again selects "lacrosse" can be assumed to be high. Thus, as shown in Fig. **9F**, the lexicon control portion **443** downloads the lexicon entry for speech recognition of "lacrosse" from a server or from the broadcasting station. The downloaded lexicon data are stored in the recognition lexicon **441** by the lexicon control portion **443**. When the recognition lexicon **441** is full, other lexicon entries are deleted from the recognition lexicon **441** by the lexicon control portion **443**. The deleted lexicon data are added to the candidate DB **442** by the lexicon control portion **443.**

Then, as shown in Fig. **9G,** the number of times that the downloaded "lacrosse" and the lexicon entries included in the recognition lexicon **422** have been selected are compared with one another by the lexicon control portion **443.** If there are lexicon entries that have been selected fewer times than "lacrosse," then those lexicon entries are deleted from the recognition lexicon **422** by the lexicon control portion **443**. The deleted lexicon data are added to the recognition lexicon **441** by the lexicon control portion **443**. Then, the lexicon entry for "lacrosse" is added to the recognition lexicon **422** by the lexicon control portion **443**.

When the lexicon entry for "lacrosse" has been added to the recognition lexicon **422**, the display screen **9-10** in Fig. **9H** appears on the display **437**. Thus, the user knows that from the next time on it will be possible to select "lacrosse" by speech.

### Effects

With the second embodiment of the present invention as explained above, the task candidates **S411** created by the candidate creation portion **43** are presented and selected by the user at whichever is the faster timing of a first timing with which the second task is executed, a second timing at which a first predetermined time after displaying the task candidates has elapsed, and a third timing at which general information reflecting a task that is different from the first task is entered, and the user does not need to perform again from the beginning the procedure for executing the task intended by the user. Consequently, usage becomes more convenient and less troublesome for the user.

Moreover, the candidate presentation portion **44** automatically stops the presentation of the task candidates **S411** if the user shows no intent of selecting a task candidate even after the first predetermined time has passed, so that if the first task that has been executed is the task intended by the user, the user does not need to stop the presentation of the task candidates **S411.** Consequently, usage becomes more convenient and less troublesome for the user.

Furthermore, the task control portion **42** automatically executes the first task based on the recognition result **S410** that has been output by the recognition portion **41**, so that if the executed task is the task that was intended by the user, then the user does not have to select a task candidate. Consequently, usage becomes more convenient and less troublesome for the user.

Furthermore, the candidate presentation portion **44** automatically presents the task candidates **S411,** so that if the first task that is executed is not the task intended by the user, the user does not have to perform an operation in order to present the task candidates. Consequently, usage becomes more convenient and less troublesome for the user.

Moreover, the task candidates **411** created by the candidate creation portion **43** are not candidates that are acoustically close but candidates that are semantically close to the recognition result **S410** attained with the recognition portion **41**. Thus, the convenience for the user is improved.

Furthermore, if task candidates are produced from the recognition lexicon entries, then the description included among the recognition lexicon data can be presented to the user, so that the recognition ratio is increased. Furthermore, if task candidates are produced that are not among the recognition lexicon entries, then the user can immediately execute tasks that are not included among the recognition lexicon entries. Consequently, usage is convenient for the user.

It should be noted that the present embodiment is not limited to the above description, and the various adaptations listed below are also possible, for example.
a) The present embodiment may be further provided with a cancel function.
b) The recognition portion **41** may perform the recognition using linguistic knowledge, grammatical knowledge or semantic knowledge, and it may perform such processes as keyword extraction.
c) The recognition lexicon entries **422** are not limited to words and may also be phrases or sentences.
d) One task or one task candidate may be determined using a plurality of recognition results.
e) There may be only one task candidate **411**.
f) A task of realizing the cancel function may be included as one of the task candidates **S411**.
g) As task candidates **S411**, tasks may be included that are related to recognition data that are good matches when comparing information reflecting the entered task content to be recognized with the recognition lexicon **422**.
h) Here, the association regions in the table shown in Fig. **7B** have been set based on genres (regions of association by genre). However, the criteria for setting the association regions are not limited to this.

For example, the association regions may also be set based on associated keywords (regions of association by term). In that case, associated regions are set for each reference term. The association region corresponding to a certain reference term includes keywords that are associated with that reference term. For example: "Nakata" and "World Cup" may be included in the association region for the reference term "soccer." "Color, "black" and "apple" may be included in the association region for the reference term "red." "Soccer," "baseball" and "golf' are included in the association region for the reference term "sports."

The association regions may also be set based on the user's personal taste and/or behavioral patterns (regions of association by habits). For example, the keywords "soccer," "sports digest" and "today's news," which are keywords of programs that the user often views, may be included in the association region for the reference term "my favorite programs." Or the keywords "e-mail" and "prepare bath," which take into account the user and the time of day, may be included in the association region for the reference term "things to do now."

The association regions may also be set based on related device operations (regions of association by function). For example, in the case of video operation, the keywords "stop," "skip" and "rewind" may be included in the association region for the reference term "play."
i) Recognition lexicon entries **422** may be added as necessary.
j) The information that the cancel function has been carried out may be used as general information reflecting a task that is different from the first task.
k) The presentation of the task candidates is not limited to screen displays and may also be accomplished by speech for example.
l) The number of task candidates that are presented does not have to be fixed.
m) Some of the task candidates may be displayed even after the first predetermined time has elapsed.
n) The task candidates may be presented such that they scroll over the display.
o) The communication between remote control and television set is not limited to infrared light, and it is also possible to use the Bluetooth standard, for example.

### Third Embodiment

### Configuration of Digital Television System

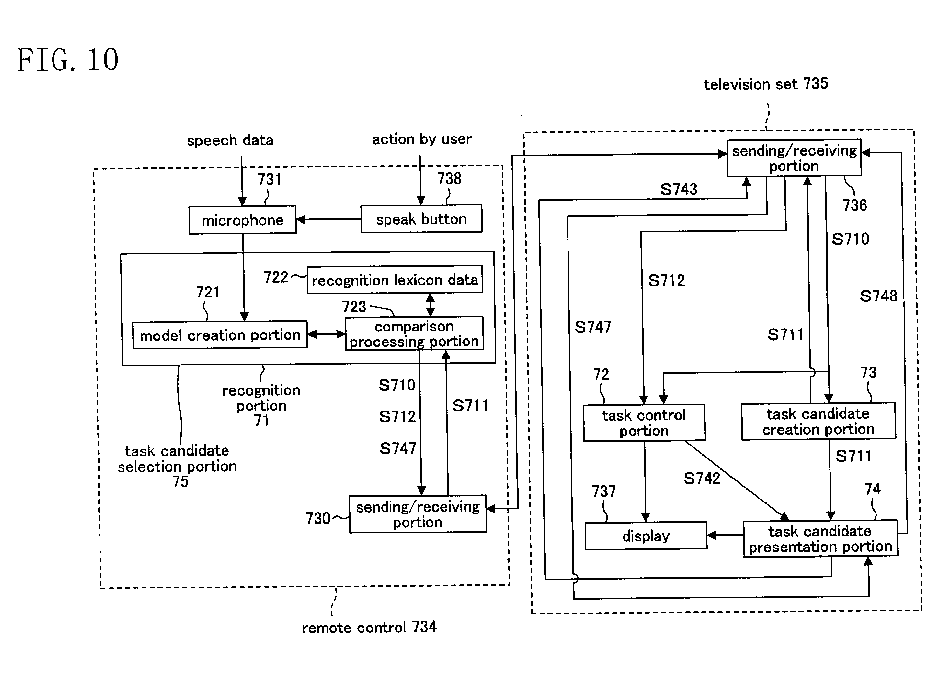

Fig. **10** shows the overall configuration of a digital television system in accordance with a third embodiment. This system is provided with a digital television set **735** and a remote control **734**. The digital television set **735** includes a sending/receiving portion **736,** a task control portion **72,** a task candidate creation portion **73**, a task candidate presentation portion **74**, and a display **737**. The remote control **734** includes a microphone **731**, a speak button **738**, a recognition portion **71** (task candidate selection portion **75),** and a sending/receive portion **730.** The recognition portion **71** (task candidate selection portion **75**) includes a model creation portion **721**, recognition lexicon data **722**, and a comparison processing portion **723**.

The microphone **731** receives speech data from the user while the speak button **738** is pressed, and sends them to the model creation portion **721**.

The model creation portion **721** converts the speech data that have been sent by the microphone **731** into characteristic quantities and stores them as a model.

The comparison processing portion **723** compares the recognition lexicon data **722** with the model stored by the model creation portion **721**, and creates a recognition result **S710,** which it sends to the infrared light sending portion **730.**

The sending/receiving portion **730** sends the recognition result **S710** to the sending/receiving portion **736.**

The sending/receiving portion **736** sends the recognition result **S710** sent by the sending/receiving portion **730** to the task control portion **72** and the task candidate creation portion **73**.

Based on the recognition result **S710** sent by the sending/receiving portion **736,** the task control portion **72** switches the screen of the display **737** (first task).

Based on the recognition result **S710** that has been sent by the sending/receiving portion **736,** the task candidate creation portion **73** creates task candidates **S711** and sends those task candidates **S711** to the task candidate presentation portion **74** and the sending/receiving portion **736.**

The task candidate presentation portion **74** presents the task candidates **S711** created by the task candidate creation portion **73** on the display **737**, and sends a trigger signal **S743** to the sending/receiving portion **736.** Furthermore, the task candidate presentation portion **74** sends a switching signal **S748** to the sending/receiving portion **736**.

Until the sending/receiving portion **736** receives the next switching signal **S748,** no selection information **S712** is sent to the task candidate creation portion **73**, but received selection information **S712** is sent to the task control portion **72**. The sending/receiving portion **736** sends the received trigger signal **S743** and the task candidates **S711** to the sending/receiving portion **730.** The sending/receiving portion **730** sends the received trigger signal **S743** and the task candidates **S711** to the comparison processing portion **723**.

If the model creation portion **721** has received the speech data before a first predetermined time has elapsed after the comparison processing portion **723** has received the trigger signal **S743**, then the recognition portion **71**, which serves as the task candidate selection portion **75**, performs a recognition process in the comparison processing portion **723** while restricting the recognition lexicon data **722** to the task candidates **S711**, and outputs the recognition result as the selection information **S712**.

The sending/receiving portion **730** receives the selection information **S712** and sends the selection information **S712** to the sending/receiving portion **736.**

The sending/receiving portion **736** sends the received selection information **S712** to the task control portion **72**.

The task control portion **72** receives the selection information **S712** and sends a presentation-stop signal **S742** to the task candidate presentation portion **74**. Furthermore, the task control portion **72** switches the screen of the display **737** based on the selection information **S712** that has been sent by the sending/receiving portion **736** (second task).

The task candidate presentation portion **74** receives the presentation-stop signal **742** sent by the task control portion **72,** stops the presentation of the task candidates **S711** on the display **737** (first timing), and sends a switching signal **S748** to the sending/receiving portion **736.**

If the model creation portion **721** does not receive speech data before a first predetermined time has elapsed after the comparison processing portion **723** has received the trigger signal **S743,** then the recognition portion **71,** which serves as the task candidate selection portion **75**, sends a presentation-stop signal **S747** to the sending/receiving portion **730.**

The sending/receiving portion **730** sends the received presentation-stop signal **S747** to the sending/receiving portion **736.**

The sending/receiving portion **736** sends the received presentation-stop signal **S747** to the task candidate presentation portion **74**.

The task candidate presentation portion **74** receives the presentation-stop signal **S747** and stops the presentation of the task candidates **S711** on the display **737** (second timing). Furthermore, the task candidate presentation portion **74** receives the presentation-stop signal **S747** and sends a switching signal **S748** to the sending/receiving portion **736.**

Until receiving the next switching signal **S748,** the sending/receiving portion **736** sends received recognition results **S710** to the task control portion **72** and the task candidate creation portion **73.**

### Operation of Digital Television System

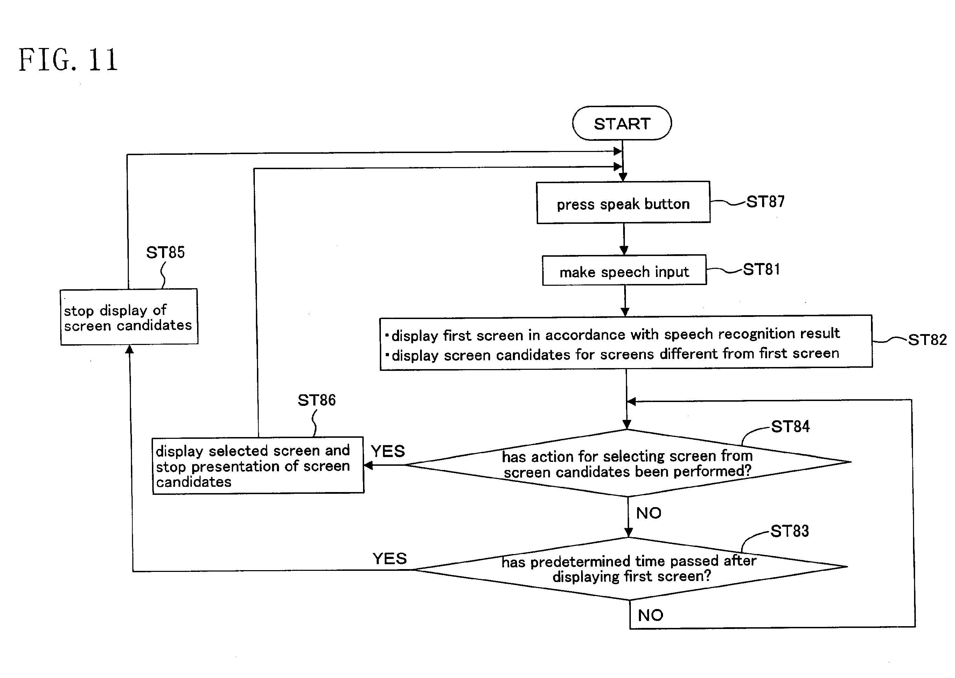

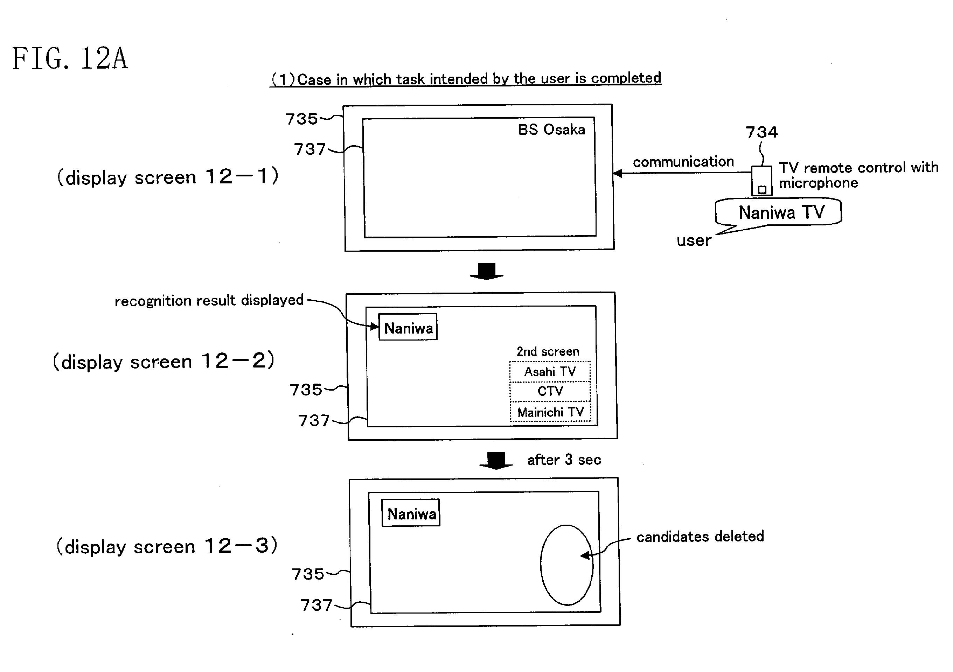

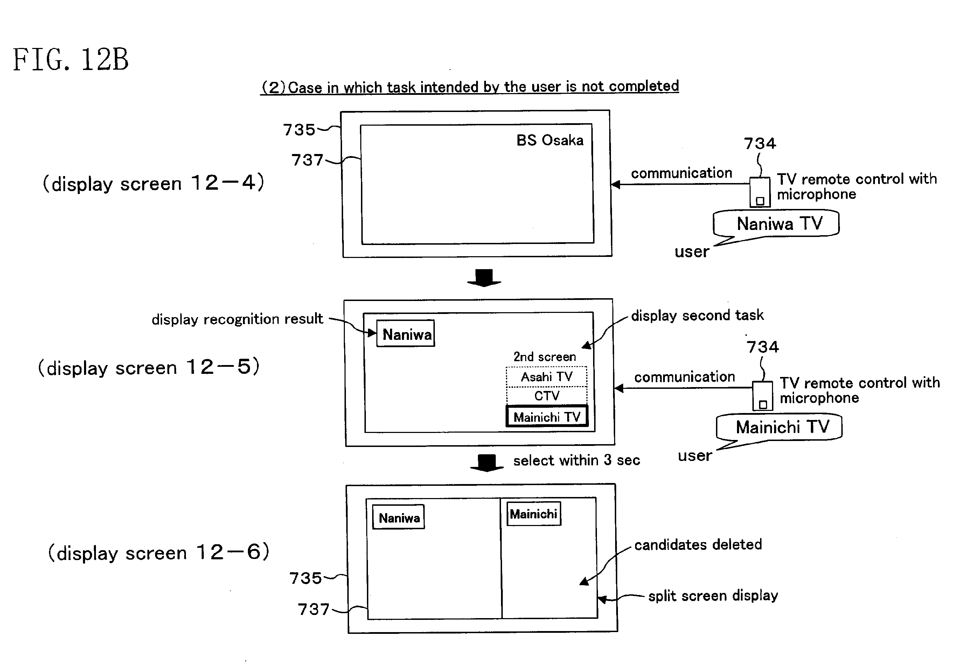

The following is an explanation of the operation of the system configured as described above. Here, an example is described with reference to Fig. **11** and Figs. **12A** and **12B**, in which a television program is operated by speech.

### (1) Case in which the screen intended by the user is displayed

First, the program of the television station "BS Osaka" is shown on the display **737** (see display screen **12-1** in Fig. **12A).**

### [Step ST87]

The user presses the speak button **738** in order to make a speech input.

### [Step ST81]

While pressing down the speak button **738**, the user enters the speech data "Naniwa TV" into the microphone **731** of the remote control **734** (display screen **12-1** in Fig. **12A**). The entered speech data are sent to the recognition portion **71**. The recognition portion **71** outputs, as the recognition result **S710,** "Naniwa TV," which is the best match between the information concerning the speech data and the recognition lexicon data **722,** and sends the recognition result **S710** via the sending/receiving portion **730** to the sending/receiving portion **736** of the television set **735.** The sending/receiving portion **736** sends the received recognition result **S710** "Naniwa TV" to the task control portion **72** and the task candidate creation portion **73**. Based on the recognition result **S710** "Naniwa TV," the task candidate creation portion **73** creates the task candidates **S711** "Asahi TV," "CTV" and "Mainichi TV," which are related to the same genre "broadcasting station (channel)." The task candidate creation portion **73** sends the task candidates **S711** to the task candidate presentation portion **74** and the sending/receiving portion **736.**

### [Step ST82]

Based on the recognition result **S710** "Naniwa TV," the task control portion **72** displays the program of the television station Naniwa TV, which is the first screen, on the display **737** (first task). The candidate presentation portion **74** displays on the display **737** "Asahi TV," "CTV" and "Mainichi TV," which are the screen candidates for screens different from the first screen (see display screen **12-2** in Fig. **12A**). At the same time as the screen candidates are displayed, the task candidate presentation portion **74** sends to the sending/receiving portion **736** a trigger signal **S743.** The sending/receiving portion **736** sends the received trigger signal **S743** and the task candidates **S711** to the sending/receiving portion **730.** The sending/receiving portion **730** sends the received trigger signal **S743** and the task candidates **S711** to the comparison processing portion **723**. The task candidate presentation portion **74** sends a switching signal **S748** to the sending/receiving portion **736.** Until receiving the next switching signal **S748,** the sending/receiving portion **736** sends received selection information **S712** to the task control portion **72**, but does not send received selection information **S712** to the task candidate creation portion **73.** If the sending/receiving portion **736** has received the next switching signal **S748,** it sends the received recognition result **S710** to the task control portion **72** and the task candidate creation portion **73**.

### [Steps ST84 and ST83]

If for a first predetermined time after the recognition portion **71,** which serves as the candidate selection portion **75,** has received the trigger signal **S443,** the user does not press the speak button **738** to enter speech data and express the intention to select a screen candidate, then the candidate selection portion **75** sends a presentation-stop signal **S747** to the sending/receiving portion **730.** The sending/receiving portion **730** sends the received presentation-stop signal **S747** to the sending/receiving portion **736.** The sending/receiving portion **736** sends the received presentation-stop signal **S747** to the task candidate presentation portion **74**. The task candidate presentation portion **74** receives the presentation-stop signal **S747** and stops the presentation of the screen candidates on the display **737** (display screen **12-3** of Fig. **12A).** The task candidate presentation portion **74** receives the presentation-stop signal **S747** and sends a switching signal **S748** to the sending/receiving portion **736.**

### (2) Case in which the display of the screen intended by the user is not completed

First, the program of the television station "BS Osaka" is shown on the display **737** (see display screen **12-4** in Fig. **12B).**

### [Step ST87]

The user presses the speak button **738** in order to make a speech input.

### [Step ST81]

While pressing down the speak button **738**, the user enters the speech data "Naniwa TV" into the microphone **731** of the remote control **734** (display screen **12-4** in Fig. **12B).** The entered speech data are sent to the recognition portion **71.** The recognition portion **71** outputs, as the recognition result **S710,** "Naniwa TV," which is the best match between the information concerning the speech data and the recognition lexicon data **722,** and sends the recognition result **S710** via the sending/receiving portion **730** to the sending/receiving portion **736** of the television set **735.** The sending/receiving portion **736** sends the received recognition result **S710** "Naniwa TV" to the task control portion **72** and the task candidate creation portion **73.** Based on the recognition result **S710** "Naniwa TV," the task candidate creation portion **73** creates the task candidates **S711** "Asahi TV," "CTV" and "Mainichi TV," which are related to the same genre "broadcasting station (channel)." The task candidate creation portion **73** sends the task candidates **S711** "Asahi TV," "CTV" and "Mainichi TV," to the task candidate presentation portion **74** and the sending/receiving portion **736.**

### [Step ST82]

Based on the recognition result **S710** "Naniwa TV," the task control portion **72** displays the program of the television station Naniwa TV, which is the first screen, on the display **737** (first task). The candidate presentation portion **74** displays on the display **737** "Asahi TV," "CTV" and "Mainichi TV," which are the screen candidates for screens different from the first screen (see display screen **12-5** in Fig. **12B).** At the same time as the screen candidates are displayed, the task candidate presentation portion **74** sends to the sending/receiving portion **736** a trigger signal **S743.** Furthermore, the task candidate presentation portion **74** sends a switching signal **S748** to the sending/receiving portion **736.** The sending/receiving portion **736** makes arrangements to the effect that the next received selection information **S712** is sent to the task control portion **72**, but is not sent to the task candidate creation portion **73**. The sending/receiving portion **736** sends the received trigger signal **S743** and the task candidates **S711** to the sending/receiving portion **730.** The sending/receiving portion **730** sends the trigger signal **S743** and the task candidates **S711** to the recognition portion **71**, which serves as the task candidate selection portion **75**.

### [Steps ST84 and ST83]

Within a first predetermined time after the candidate selection portion **75** has received the trigger signal **S443**, the user presses the speak button **738** to enter the speech data "Mainichi TV" using the microphone **731**. The microphone **731** sends the speech data to the model creation portion **721**. The model creation portion **721** converts the speech data "Mainichi TV" into characteristic quantities and stores them. Restricting the lexicon to "Asahi TV," "CTV" and "Mainichi TV," which are the received task candidates **S711**, the comparison processing portion **723** performs keyword spotting using the characteristic quantities stored by the model creation portion **271** and the recognition lexicon data **722**, and creates "Mainichi TV" as the selection information **S712** (recognition result **S710**). The comparison processing portion **723** sends the selection information **S712** to the sending/receiving portion **730.** The sending/receiving portion **730** sends the selection information **S711** to the sending/receiving portion **736.** The sending/receiving portion **736** sends the received selection information **S711** to the task control portion **72**.

### [Step ST86]

Based on the selection information **S712** sent by the sending/receiving portion **736,** the task control portion **72** changes the screen of the display **737,** divides the screen into two portions, and additionally displays the program of Mainichi TV (second task). As shown in the display screen **12-6** of Fig. **12B,** the display of the "program of Naniwa TV" is corrected, but instead of displaying the "program of Mainichi TV" alone, a plurality of programs, namely the "program of Naniwa TV" and "the program of Mainichi TV" are displayed simultaneously in accordance with the recognition result. After receiving the selection information **S712**, the task control portion **72** sends a presentation-stop signal **S742** to the candidate presentation portion **74.** The candidate presentation portion **74** receives the presentation-stop signal **S742** and stops the display of the task candidates **S711** that were shown on the display **737** (display screen **12-6** in Fig. **12B).** The task candidate presentation portion **74** receives the presentation-stop signal **S742** and sends a switching signal **S748** to the sending/receiving portion **736.** The sending/receiving portion **736** makes arrangements to the effect that the next received recognition result **S710** is sent to the task control portion **72** and the task candidate creation portion **73.**

### Effects

With the third embodiment of the present invention as explained above, the task candidates **S711** created by the candidate creation portion **43** are presented and selected by the user at whichever is the faster timing of a first timing with which the second task is executed and a second timing at which a first predetermined time after presenting the task candidates **S711** has elapsed, so that the user does not need to perform again from the beginning the procedure for executing the task intended by the user. Consequently, usage becomes more convenient and less troublesome for the user.

Moreover, the candidate presentation portion **74** automatically stops the presentation of the task candidates **S711** if the user shows no intent of selecting a task candidate even after the first predetermined time has passed, so that if the first task that has been executed is the task intended by the user, the user does not need to stop the presentation of the task candidates **S711.** Consequently, usage becomes more convenient and less troublesome for the user.

Furthermore, the task control portion **72** automatically executes the first task based on the recognition result **S710** that has been output by the recognition portion **71**, so that if the first task that is executed is the task that was intended by the user, then the user does not have to select a task candidate **S711**. Consequently, usage becomes more convenient and less troublesome for the user.

Furthermore, the candidate presentation portion **74** automatically presents the task candidates **S711,** so that if the first task that is executed is not the task intended by the user, the user does not have to perform an operation in order to present the task candidates **S711**. Consequently, usage becomes more convenient and less troublesome for the user.

Moreover, the task candidates **S711** include candidates of tasks that reflect a semantic relation to the first task, which is based on the recognition result **710** output by the recognition portion **71**, so that the task intended by the user can be selected immediately. Consequently, usage is convenient for the user.

Furthermore, the task control portion **72** can simultaneously perform a plurality of task controls (such as displaying the program of Mainichi TV while displaying the program of Naniwa TV), based on the recognition result **S710.** Consequently, usage is convenient for the user.

It should be noted that the present embodiment is not limited to the above description, and the various adaptations listed below are also possible, for example.
a) The present embodiment may be further provided with a cancel function.
b) The recognition portion **71** may perform the recognition using linguistic knowledge, grammatical knowledge or semantic knowledge.
c) A task of realizing the cancel function may be included as one of the task candidates.
d) As task candidates **S711**, tasks may be included that are related to recognition data that are good matches when comparing information reflecting the entered task content to be recognized with the recognition lexicon data **722**.
e) An example has been given, in which task candidates of the same genre (for example "Asahi TV," "CTV" and "Mainichi TV" for "Naniwa TV") are given as the task candidates **S711** in consideration of the semantic relation to the task based on the recognition result **S710** that has been output by the recognition portion **71**, but the semantic relation is not limited to genres, and it is also possible to include associated task candidates (for example Tanaka" and "World Cup" for "soccer" or "color, "black" and "apple" for "red"), task candidates that take into account the personal taste of the user (for example, for "my favorite programs," the task candidates "soccer," "sports digest" and "today's news," which are programs that the user often views, or for "things to do now," the task candidates "mail" and "prepare bath," which are task candidates that take into account the user and the time of day), or task candidates related to the operated device (for example, "stop," "skip" and "rewind" for "play" in the operation of a video player).
f) The presentation of the task candidates **S711** is not limited to screen displays and may be accomplished by speech.
g) The number of task candidates that are presented does not have to be fixed.
h) Some of the task candidates may be displayed even after the first predetermined time has elapsed.
i) The task candidates may be presented such that they scroll over the display.
j) The communication between remote control and television set is not limited to infrared light, and it is also possible to use Bluetooth Standard or the like.

### Fourth Embodiment

### Configuration of Video System

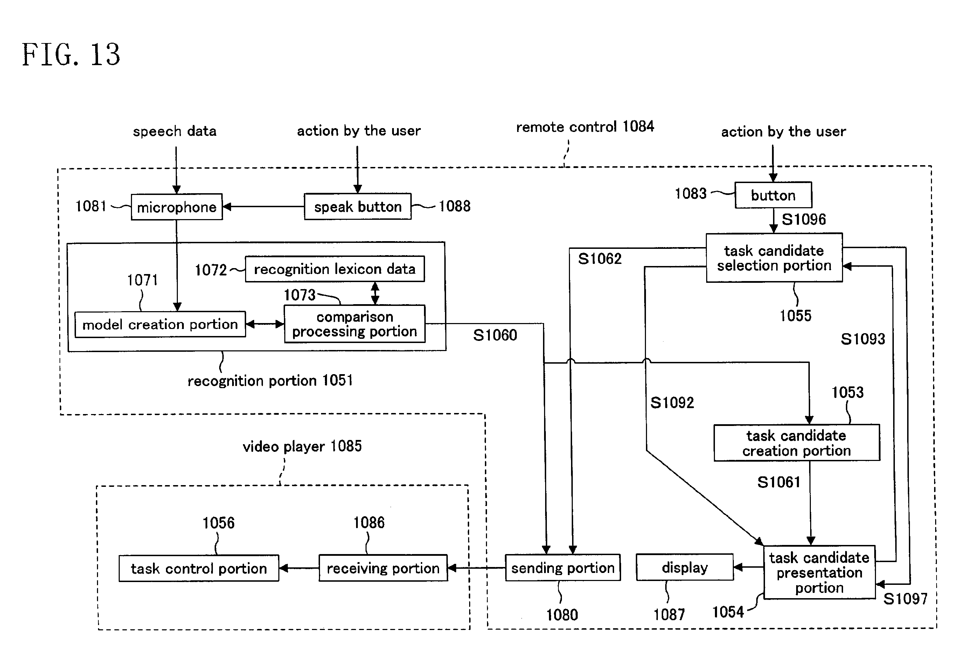

Fig. **13** is a block diagram showing the overall configuration of a video system in accordance with a fourth embodiment. The system shown in Fig. **13** includes a video player **1085** and a remote control **1084**. The video player **1085** includes a receiving portion **1086** and a task control portion **1056.** The remote control **1084** includes a microphone **1081,** a speak button **1088,** a recognition portion **1051,** a task candidate creation portion **1053,** a task candidate presentation portion **1054,** a display **1087**, a button **1083**, a task candidate selection portion **1055**, and a sending portion **1080**. The recognition portion **1051** includes a model creation portion **1071**, recognition lexicon data **1072,** and a comparison processing portion **1073.**

The microphone **1081** receives speech data from the user while the speak button **1088** is pressed, and sends them to the model creation portion **1071**.

The model creation portion **1071** converts the speech data that have been sent by the microphone **1081** into characteristic quantities, creates a model and stores that model.

The comparison processing portion **1073** compares the recognition lexicon data **1072** with the model stored by the model creation portion **1071,** creates a recognition result **S1060,** and sends this recognition result **S1060** to the sending portion **1080** and the task candidate creation portion **1053**.

The sending portion **1080** sends the received recognition result **S1060** to the receiving portion **1086.**

The receiving portion **1086** sends the received recognition result **S1060** to the task control portion **1056.**

Based on the received recognition result **S1060**, the task control portion **1056** operates the video player (first task).

Based on the received recognition result **S1060,** the task candidate creation portion **1053** creates task candidates **S1061** and sends those task candidates **S1061** to the task candidate presentation portion **1054.**

The task candidate presentation portion **1054** presents the received task candidates **S1061** on the display **1087,** and sends a trigger signal **S1093** to the task candidate selection portion **1055.**

If the task candidate selection portion **1055** does not receive an operation signal **S1096** produced with the button **1083** after the trigger signal **S1093** has been received and before a first predetermined time has elapsed, then a presentation-stop signal **S1092** is sent to the candidate presentation portion **1054**.

The task candidate presentation portion **1054** receives the presentation-stop signal **S1092** and stops the display of the task candidates **S1061** that are presented on the display **1087** (second timing).

If the task candidate selection portion **1055** has received an operation signal **S1096** produced by the button **1083** after the trigger signal **S1093** sent by the task candidate presentation portion **1054** has been received and before a first predetermined time has elapsed, then selection information **S1062** is produced based on the operation signal **S1096,** and this selection information **S1062** is sent to the sending portion **1080.** Moreover, the task candidate selection portion **1055** receives the action signal **S1096** and sends a presentation-stop signal **S1092** to the task candidate presentation portion **1054**.

The sending portion **1080** sends the received selection information **S1062** to the receiving portion **1086**.

The receiving portion **1086** sends the received selection information **S1062** to the task control portion **1056**.

The task control portion **1056** performs the operation of the video player based on the received selection information **S1062** (second task).

The task candidate presentation portion **1054** receives the presentation-stop signal **S1092** and stops the presentation of the task candidates **S1061** that are presented on the display **1087** (first timing).

### Operation of Video System

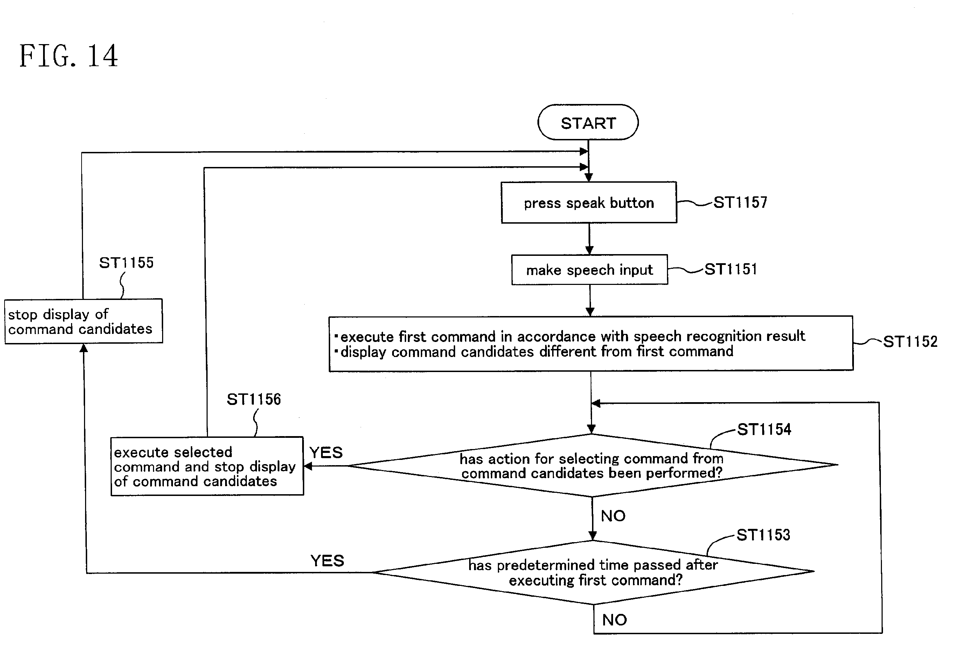

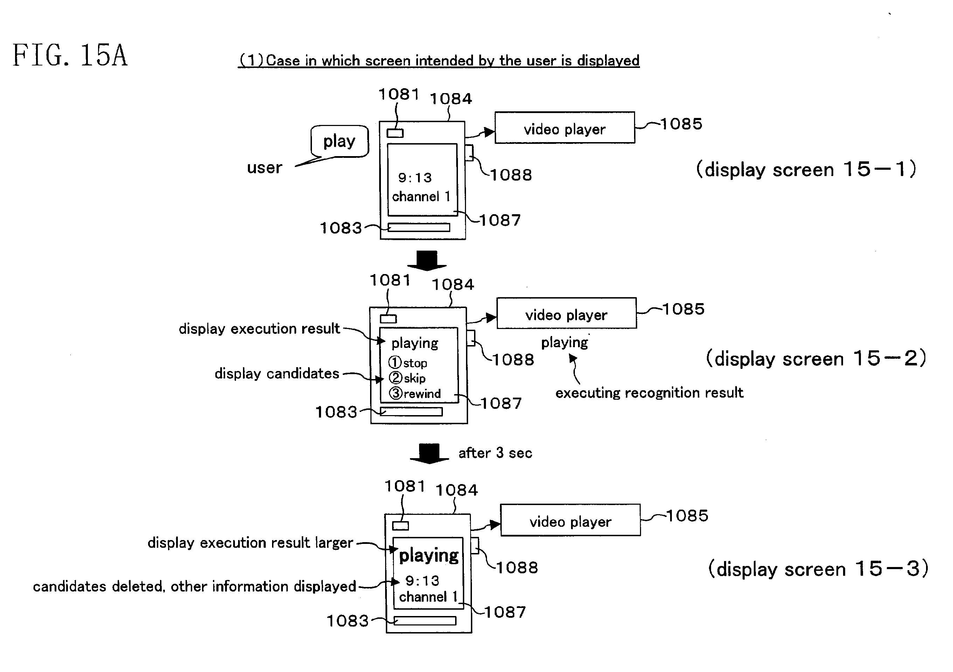

The following is an explanation of the system configured as described above. Referring to Fig. **14** and Figs. **15A** to **15C,** the following describes an example, in which a video player is operated by speech and button operation.

### (1) Case in which the task intended by the user is executed

### [Step ST1157]

The user presses the speak button **1088** in order to make a speech input.

### [Step ST1151]

While pressing down the speak button **1088**, the user enters the speech data "play" into the microphone **1081** of the remote control (display screen **15-1** in Fig. **15A).** The entered speech data are sent to the recognition portion **1051**. The recognition portion **1051** outputs as the recognition result **S1060** "play," which is the best match between the information concerning the speech data and the recognition lexicon data **1072**, and sends the recognition result **S1060** via the sending portion **1080** and the receiving portion **1086** to the task control portion **1056** of the video player **1085.**

### [Step ST1152]

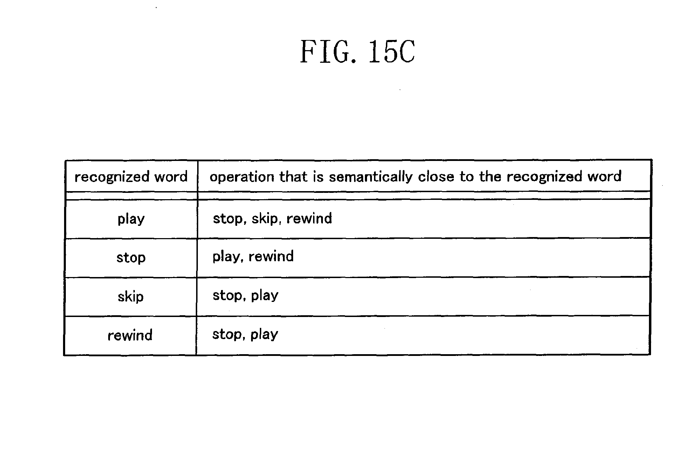

Based on the received recognition result **S1060** "play," the task control portion **1056** performs a play operation on the video player (first task). Furthermore, the recognition portion **1051** sends a recognition result **S1060** to the task candidate creation portion **1053**. The task candidate creation portion **1053** includes a table as shown in Fig. **15C.** The table shown in Fig. **15C** associates recognition terms with operations that are semantically close to those recognition terms. Here, "operations that are semantically close" means operations that, based on the operation indicated by the recognition term, have a high probability of being functionally used. That is to say, in the table shown in Fig. **15C**, four association regions have been set based on the device operation (regions of association by function). With the four association regions, the four recognition terms (reference terms) "play," "stop," "skip" and "rewind" are associated with one another. These association regions include those words that indicate operations that have a high possibility of being functionally used based on the operation indicated by the corresponding recognition term. The task candidate creation portion **1053** references the table shown in Fig. **15C** and creates, as task candidates **S1061,** "① stop," "② skip," and "③ rewind," which, based on the received recognition result **S1060** "play" have a high probability of being functionally used, and sends those task candidates to the task candidate presentation portion **1054**. The task candidate presentation portion **1054** displays the received task candidates **S1061** "① stop," "② skip," and "③ rewind" on the display **1087** (display screen **15-2** in Fig. **15A).** The task candidate presentation portion **1054** receives the task candidates **S1061** and sends a trigger **S1093** to the task candidate selection portion **1055.**

### [Steps ST1154 and ST1153]

If for a first predetermined time (here: three seconds) after the task candidate selection portion **1055** has received the trigger signal **S1093,** the user does not press the button **1083** to express the intention to select a task candidate **S1061,** then the task candidate selection portion **1055** does not produce selection information **S1062** until the next trigger signal **S1093** is received. The task candidate selection portion **1055** sends a presentation-stop signal **S1092** to the task candidate presentation portion **1054.**

### [Step ST1155]

The task candidate presentation portion **1054** receives the presentation-stop signal **S1092** and stops the display of the task candidates **1061** on the display **437** (display screen **15-3** in Fig. **15A).**

### (2) Case in which the task intended by the user is not executed

The user presses the speak button **1088** in order to make a speech input.

### [Step ST1151]

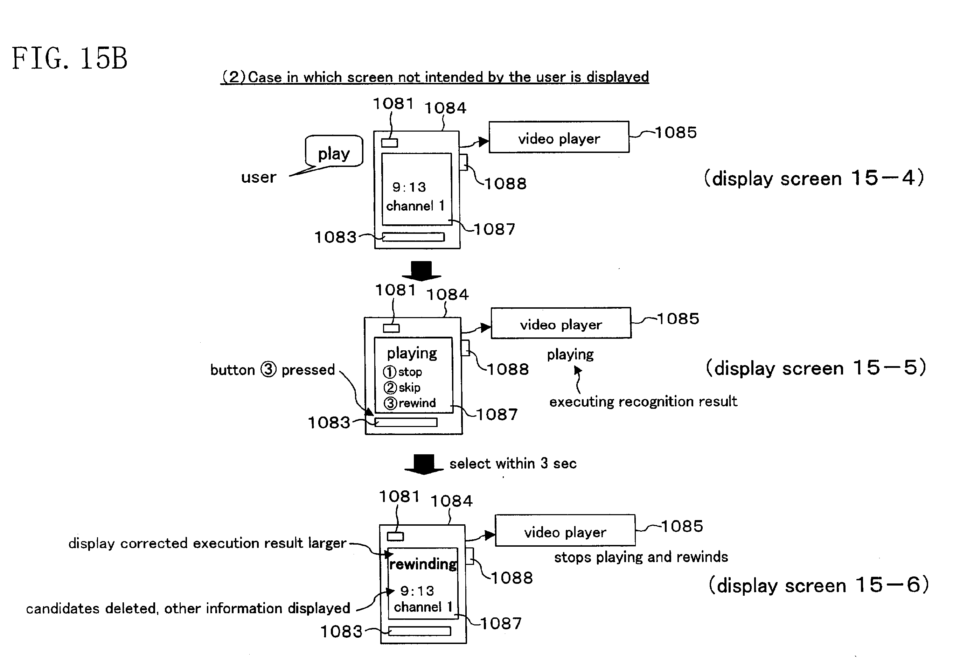

While pressing down the speak button 1088, the user enters the speech data "play" into the microphone **1081** of the remote control (display screen **15-4** in Fig. **15B).** The entered speech data are sent to the recognition portion **1051.** The recognition portion **1051** outputs the recognition result **S1060** "play," which is the best match between the information concerning the speech data and the recognition lexicon data **1072**, and sends the recognition result **S1060** via the sending portion **1080** and the receiving portion **1086** to the task control portion **1056** of the video player **1085.**

### [Step ST1152]

Based on the received recognition result **S1060** "play," the task control portion **1056** performs a play operation on the video player (first task). The recognition portion **1051** sends the recognition result **S1060** to the task candidate creation portion **1053.** The task candidate creation portion **1053** creates, as task candidates **S1061,** "① stop," "② skip," and "③ rewind," which, based on the received recognition result **S1060** "play" have a high probability of being functionally used, and sends those task candidates **S1061** to the task candidate presentation portion **1054.** The task candidate presentation portion **1054** displays the received task candidates **S1061** "① stop," "② skip," and "③ rewind" on the display **1087** (display screen **15-2** in Fig. **15B).** The task candidate presentation portion **1054** receives the task candidates **S1061** and sends a trigger signal **S1093** to the task candidate selection portion **1055.**

### [Steps ST1154 and ST1153]

Within a first predetermined time (here: three seconds) after the task candidate selection portion **1055** has received the trigger signal **S1093,** the user presses the button **1083** and selects a task candidate **S1061.** Here, as shown in display screen **15-5** of Fig. **15B,** the button □ is pressed and "③ rewind" is selected. Based on the operation signal **S1096** produced with the button **1083** the task candidate selection portion **1055** produces the selection information **S1062** "rewind" and sends it to the sending portion **1080.** The sending portion **1080** sends the received selection information **S1062** via the receiving portion **1086** to the task control portion **1056.**

### [Step ST1156]

Based on the received selection information **S1062,** the task control portion **1056** executes the rewinding of the video player. After producing the selection information **S1062,** the task candidate selection portion **1055** sends a presentation-stop signal **S1092** to the task candidate presentation portion **1054.** The task candidate presentation portion **1054** receives the presentation-stop signal **S1092** and stops the display of the task candidates **S1061** that are shown on the display **1087** (display screen **15-6** in Fig. **15B).**

### Effects

With the fourth embodiment as explained above, the task candidates **S1061** created by the candidate creation portion **1053** are presented and selected by the user at whichever is the faster timing of a first timing with which the second task is executed and a second timing at which a first predetermined time after presenting the task candidates **S1061** has elapsed, so that the user does not need to perform again from the beginning the procedure for executing the task intended by the user. Consequently, usage becomes more convenient and less troublesome for the user.

Moreover, the task candidate presentation portion **1054** automatically stops the presentation of the task candidates **S1061** if the user shows no intent of selecting a task candidate even after the first predetermined time has passed, so that if the first task that has been executed is the task intended by the user, the user does not need to stop the presentation of the task candidates **S1061.** Consequently, usage becomes more convenient and less troublesome for the user.

Furthermore, the task control portion **1056** automatically executes the first task based on the recognition result **S1060** that has been output by the recognition portion **1051**, so that if the task that is executed is the task that was intended by the user, then the user does not have to select a task candidate. Consequently, usage becomes more convenient and less troublesome for the user.

Furthermore, the task candidate presentation portion **1054** automatically presents the task candidates **S1061,** so that if the first task that is executed is not the task intended by the user, the user does not have to perform an operation in order to present the task candidates. Consequently, usage becomes more convenient and less troublesome for the user.

Moreover, the task candidates **S1061** include candidates of tasks that reflect a semantic relation to the first task, based on the recognition result **S1060** output by the recognition portion **1051,** so that the task intended by the user can be selected immediately. Consequently, usage is convenient for the user.

It should be noted that the present embodiment is not limited to the above description, and the various adaptations listed below are also possible, for example.
a) It is possible to further provide the present invention with a cancel function.
b) The recognition portion **1051** may perform the recognition using linguistic knowledge, grammatical knowledge or semantic knowledge, and it may perform such processes as keyword extraction.
c) The recognition lexicon data **1072** are not limited to words and may also be phrases or sentences.
d) One task or one task candidate may be determined using a plurality of recognition results.
e) There may be only one task candidate **411**.
f) A task of realizing the cancel function may be included as one of the task candidates.
g) As task candidates **S1061,** tasks may be included that are related to recognition data that are good matches when comparing information reflecting the entered task content to be recognized with the recognition lexicon data **1072**.
h) Recognition lexicon data **1072** may be added as necessary.
i) The presentation of the task candidates **S1061** is not limited to screen displays and may be accomplished by speech.
j) The number of task candidates **S1061** that are presented does not have to be fixed.
k) Some of the task candidates **S1061** may be displayed even after the first predetermined time has elapsed.
l) The task candidates **S1061** may be presented such that they scroll over the display **1087.**
m) The communication between remote control and video player may also be performed using infrared light or Bluetooth Standard or the like.

### Fifth Embodiment

### Configuration of Car Navigation System

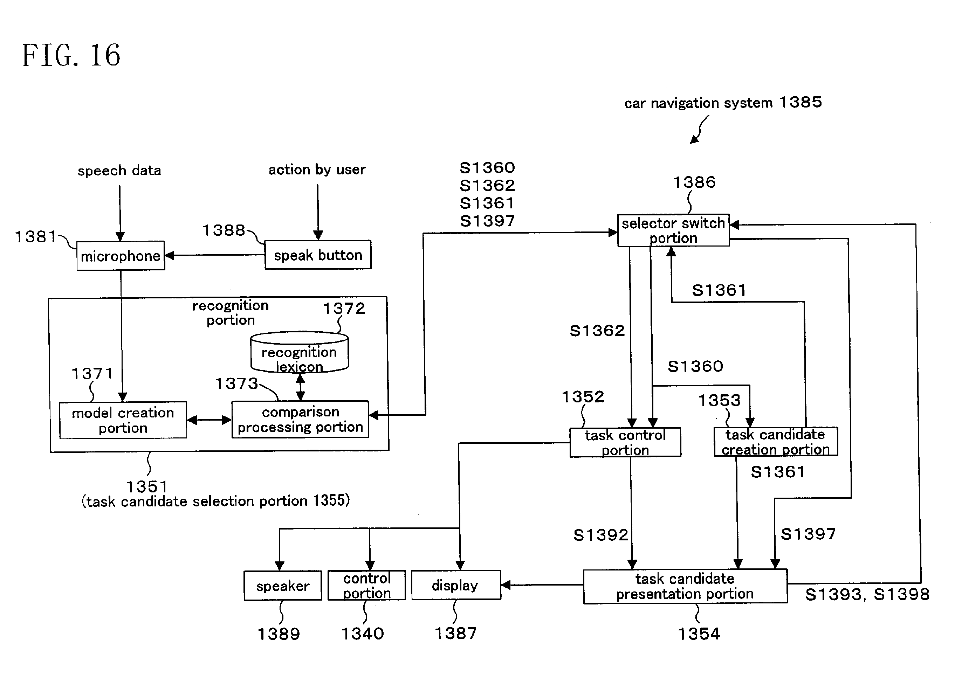

Fig. **16** is a block diagram showing the overall configuration of a car navigation system in accordance with a fifth embodiment. The car navigation system **1385** shown in Fig. **16** is provided with a microphone **1381**, a speak button **1388**, a recognition portion **1351** (task candidate selection portion **1355**), a selector switch portion **1386**, a task candidate creation portion **1353**, a task candidate presentation portion **1354**, a display **1387**, a speaker **1389**, a control portion **1340**, and a task control portion **1352**. The recognition portion **1351** includes a model creation portion **1371**, recognition lexicon data **1372,** and a comparison processing portion **1373.**

The microphone **1381** receives speech data from the user while the speak button **1388** is pressed, and sends them to the model creation portion **1371**.

The model creation portion **1371** converts the speech data that have been sent by the microphone **1381** into characteristic quantities, creates a model, and stores that model.

The comparison processing portion **1373** compares the recognition lexicon data **1372** with the model stored by the model creation portion **1371**, and creates a recognition result **S1360**, which it sends to the sending portion **1080** and the selector switch portion **1386**.

The selector switch portion **1386** sends the received recognition result **S1360** to the task control portion **1352** and the task candidate creation portion **1353**.

Based on the recognition result **S1360** sent by the selector switch portion **1386**, the task control portion **1352** switches the screen of the display **1387,** puts out a spoken announcement from the speaker **1389**, and sets a destination with the control portion **1340** (first task).

Based on the recognition result **S1360** sent by the selector switch portion **1386,** the task candidate creation portion **1353** creates task candidates **S1361** and sends those task candidates **S1361** to the task candidate presentation portion **1354** and the selector switch portion **1386**.

The task candidate presentation portion **1354** presents the task candidates **S1361** created by the task candidate creation portion **1353** on the display **1387,** and sends a trigger signal **S1393** to the selector switch portion **1386.** Furthermore, the task candidate presentation portion **1354** sends a switching signal **S1398** to the selector switch portion **1386.**

Until receiving the next switching signal **S1398**, the selector switch portion **1386** sends out no selection information **S1362** to the task candidate creation portion **1353,** but sends out received selection information **S1362** to the task control portion **1352.** The selector switch portion **1386** sends the received trigger signal **S1393** and the task candidates **S1361** to the comparison processing portion **1373.**

If the model creation portion **1371** receives speech data before a first predetermined time has passed after the comparison processing portion **1373** has received the trigger signal **S1393**, then the recognition portion **1351**, which also serves as the task candidate selection portion **1355** performs a recognition process in the comparison processing portion **1373** while restricting the recognition lexicon data **1372** to the task candidates **S1361**, and outputs the recognition result as the selection information **S1362.**

The selector switch portion **1386** receives the selection information **S1362** output by the comparison processing portion **1373** and sends the selection information **S1362** to the task control portion **1352.**

The task control portion **1352** receives the selection information **S1362** and sends a presentation-stop signal **S1392** to the task candidate presentation portion **1354.** Furthermore, the task control portion **1352** switches the screen of the display **1387** based on the received selection information **S1362,** puts out a spoken announcement from the speaker **1389**, and sets a destination with the control portion **1340** (second task).

The task candidate presentation portion **1354** receives the presentation-stop signal **S1392** sent by the task control portion **1352,** and stops the presentation of the task candidates **S1361** on the display **1387** (first timing), and sends a switching signal **S1398** to the selector switch portion **1386.**

If the model creation portion **1371** does not receive speech data before a first predetermined time has elapsed after the comparison processing portion **1373** has received the trigger signal **S1393,** then the recognition portion **1351,** which serves as the task candidate selection portion **1355,** sends a presentation-stop signal **S1397** to the selector switch portion **1386.**

The selector switch portion **1386** sends the received presentation-stop signal **S1397** to the task candidate presentation portion **1354**.

The task candidate presentation portion **1354** receives the presentation-stop signal **S1397** and stops the presentation of the task candidates **S1361** that have been presented on the display **1387** (second timing). Furthermore, the task candidate presentation portion **1354** receives the presentation-stop signal **S1397** and sends a switching signal **S1398** to the selector switch portion **1386.**

Until receiving the next switching signal **S1398,** the selector switch portion **1386** sends received recognition results **S1360** to the task control portion **1352** and the task candidate creation portion **1353**.

### Operation of Car Navigation System

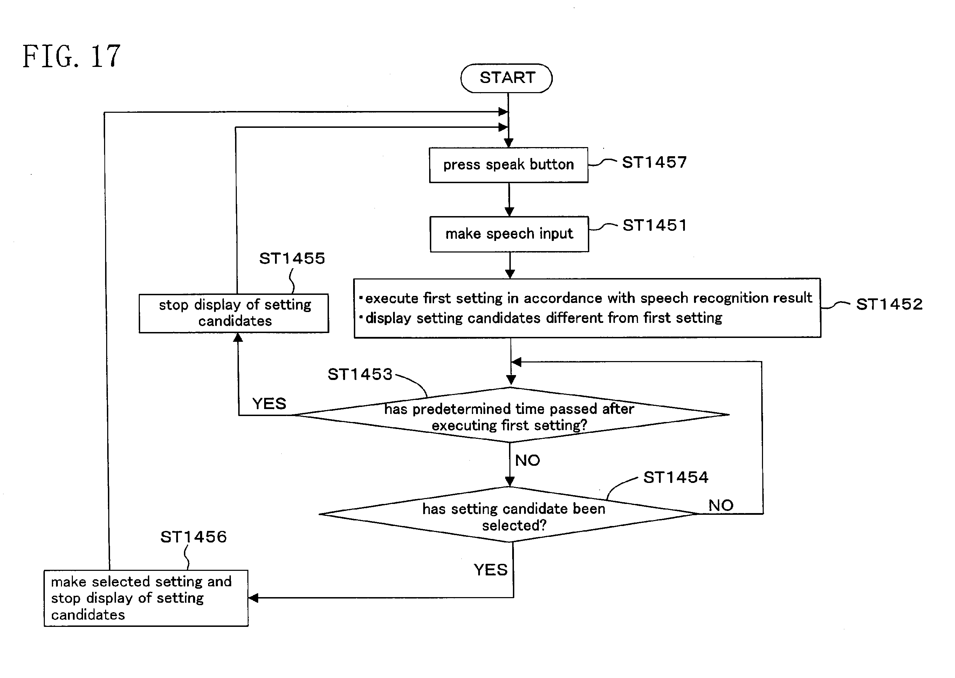

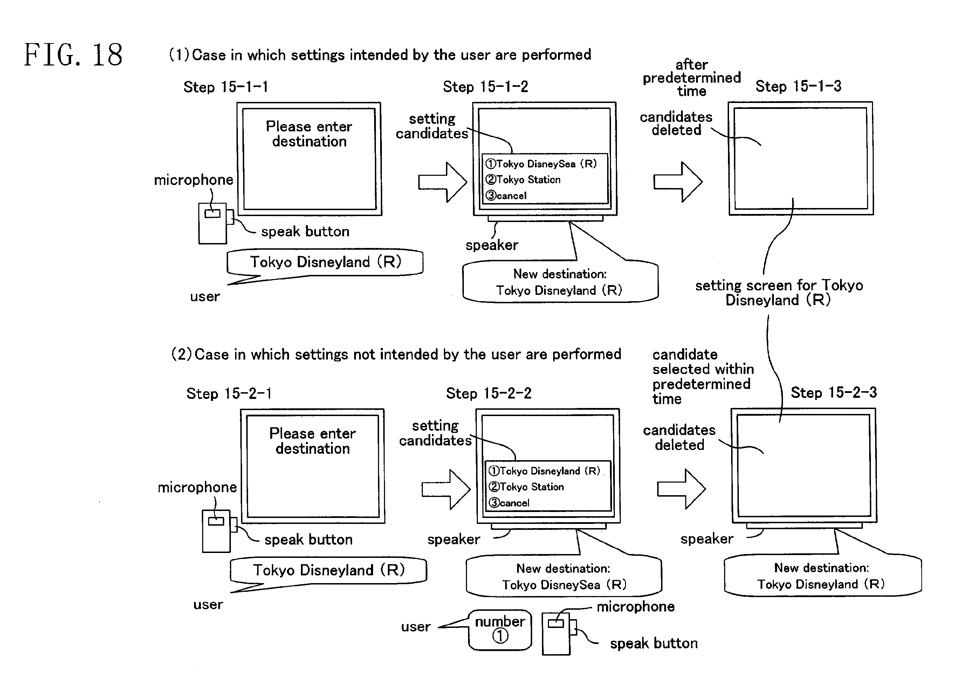

The following is an explanation of the operation of the car navigation system configured as described above. Referring to Fig. **17** and Fig. **18,** the following describes an example, in which a car navigation system is operated by speech.

### (1) Case in which the task intended by the user is executed

The message "Please enter destination" is shown on the display **1387** (Step **15-1-1** in Fig. **18).**

### [Step ST1457]

The user presses the speak button **1388** in order to enter a destination by speech.

### [Step ST1451]

After pressing down the speak button **1388,** the user enters the speech data "Tokyo Disneyland ®" into the microphone **1381** (Step **15-1-1** in Fig. **18).** The entered speech data are sent to the recognition portion **1351.** The recognition portion **1351** outputs, as the recognition results **S1360,** "Tokyo Disneyland ®," "Tokyo DisneySea ®" and "Tokyo Station," which are the best matches between the information concerning the speech data and the recognition lexicon data **1372**, and sends the recognition result **S1360** to the selector switch portion **1386**. Here, the recognition lexicon data **1372** include word lexicon data, and the comparison processing portion **1373** includes an acoustic model for each phoneme. The comparison processing portion **1373** creates the recognition results **S1360** using the acoustic model for each phoneme and the word lexicon data of the recognition lexicon data **1372.** The selector switch portion **1386** sends the received recognition result **S1360** "Tokyo Disneyland ®" to the task control portion **1352,** and sends the received recognition results **S1360** "Tokyo DisneySea ®" and "Tokyo Station" to the task candidate creation portion **1353.** Based on the recognition results **S1360** "Tokyo DisneySea ®" and "Tokyo Station" the task candidate creation portion **1353** creates the task candidates **S1361** "① Tokyo DisneySea ®" and "② Tokyo Station." The task candidate creation portion **1353** also creates the task candidate **S1361** "③ cancel." The task candidate creation portion **1353** sends the task candidates **S1361** to the task candidate presentation portion **1354** and the selector switch portion 1386.

### [Step ST1452]

Based on the received recognition result **S1360** "Tokyo Disneyland ®," the task control portion **1352** displays a map of the surroundings of Tokyo Disneyland ® on the display **1387,** and the announcement "New destination: Tokyo Disneyland ®" is played from the speaker **1389**. Then, the control portion **1340** searches a route to the first setting, Tokyo Disneyland ®, and sets this route (first task).

The task candidate presentation portion **1354** shows the task candidates **S1361** "① Tokyo DisneySea ®," "② Tokyo Station" and "③ cancel" on the display **1387** (Step **15-1-2** in Fig. **18).** At the same time as the task candidates **S1361** are displayed, the task candidate presentation portion **1354** sends a trigger signal **S1393** to the selector switch portion **1386.** The selector switch portion **1386** sends the received trigger signal **S1393** and the task candidates **S1361** to the comparison processing portion **1373**. The task candidate presentation portion **1354** sends a switching signal **S1398** to the selector switch portion **1386.** Until receiving the next switching signal **S1398,** the selector switch portion **1386** sends received selection information **S1362** to the task control portion **1352,** but does not send received selection information **S1362** to the task candidate creation portion **1353.** After the selector switch portion **1386** has received the next switching signal **S1398,** it sends received recognition results **S1360** to the task control portion **1352** and the task candidate creation portion **1353.**

### [Steps ST1454 and ST1453]

If for a first predetermined time after the recognition portion **1351,** which also serves as the task candidate selection portion **1355**, has received the trigger signal **S1393,** the user does not press the speak button **1388** to express the intention to select a task candidate, then the task candidate selection portion **1355** sends a presentation-stop signal **S1397** to the selector switch portion **1386.** The selector switch portion **1386** sends the received presentation-stop signal **S1392** to the task candidate presentation portion **1354**. The task candidate presentation portion **1354** receives the presentation-stop signal **S1392** and stops the display of the task candidates on the display **1387** (Step **15-1-3** in Fig. **18**). The task candidate display portion **1354** receives the presentation-stop signal **S1392** and sends a switching signal **S1398** to the selector switch portion **1386**.

### (2) Case in which the task intended by the user is not executed

The message "Please enter destination" is shown on the display **1387** (Step **15-2-1** in Fig. **18).**

### [Step ST1457]

The user presses the speak button **1388** in order to enter a destination by speech.

### [Step ST1451]

After pressing down the speak button **1388**, the user enters the speech data "Tokyo Disneyland ®" into the microphone **1381** (Step **15-2-1** in Fig. **18).** The entered speech data are sent to the recognition portion **1351**. The recognition portion **1351** outputs, as the recognition results **S1360,** "Tokyo DisneySea ®," "Tokyo Disneyland ®" and "Tokyo Station," which are the best matches between the information concerning the speech data and the recognition lexicon data **1372**, and sends the recognition results **S1360** to the selector switch portion **1386**. The selector switch portion **1386** sends the received recognition result **S1360** "Tokyo DisneySea ®" to the task control portion **1352**, and sends the received recognition results **S1360** "Tokyo Disneyland ®" and "Tokyo Station" to the task candidate creation portion **1353.** Based on the recognition results **S1360** "Tokyo Disneyland ®" and "Tokyo Station," the task candidate creation portion **1353** creates the task candidates **S1361** "① Tokyo Disneyland ®" and "② Tokyo Station." The task candidate creation portion **1353** also creates the task candidate **S1361** "③ cancel." Here, numbers (①, ②, ③ etc.), for which speech recognition is easier than for "Tokyo Disneyland ®" or "Tokyo Station," are added. Furthermore, the numbers (①, ②, ③ etc.) are registered in the recognition lexicon data **1372**. The task candidate creation portion **1353** sends the task candidates **S1361** to the task candidate presentation portion **1354** and the selector switch portion **1386**.

### [Step ST1452]

Based on the received recognition result **S1360** "Tokyo DisneySea ®," the task control portion **1352** displays a map of the surroundings of Tokyo DisneySea ® on the display **1387,** and the announcement "New destination: Tokyo DisneySea ®" is played from the speaker **1389**. Then, the control portion **1340** searches a route to the first setting, Tokyo DisneySea ®, and sets this route (first task).

The task candidate presentation portion **1354** shows the task candidates **S1361** "① Tokyo Disneyland ®," "② Tokyo Station" and "③ cancel" on the display **1387** (Step **15-2-2** in Fig. **18).** At the same time as the task candidates **S1361** are displayed, the task candidate presentation portion **1354** sends a trigger signal **S1393** to the selector switch portion **1386.** The selector switch portion **1386** sends the received trigger signal **S1393** and the task candidates **S1361** to the comparison processing portion **1373.** The task candidate presentation portion **1354** sends a switching signal **S1398** to the selector switch portion **1386.** Until receiving the next switching signal **S1398,** the selector switch portion **1386** sends received selection information **S1362** to the task control portion **1352,** but does not send received selection information **S1362** to the task candidate creation portion **1353.** After the selector switch portion **1386** has received the next switching signal **S1398**, it sends received recognition results **S1360** to the task control portion **1352** and the task candidate creation portion **1353**.

### [Steps ST1453 and ST1454]

Within the first predetermined time after the recognition portion **1351**, which also serves as the task candidate selection portion **1355**, has received the trigger signal **S1393,** the user presses the speak button **1388** and enters the speech data "number ①." The microphone 1381 sends the speech data to the model creation portion **1371**. The model creation portion **1371** converts the speech data "number ①" into characteristic quantities and stores them. Using the recognition lexicon data **1372** and the characteristic quantities stored by the model creation portion **1371**, the comparison processing portion **1373** produces the recognition result **S1360** "number ①," and, based on the recognition result **S1360** "number ①" and the task candidate **S1361** "① Tokyo Disneyland ®," it produces the selection information **S1362** "① Tokyo Disneyland ®." The comparison processing portion **1373** sends the selection information **S1362** to the selector switch portion **1386.** The selector switch portion **1386** sends the received selection information S1362 to the task control portion **1352**.

### [Step ST1456]

Based on the received selection information **S1362,** the task control portion **1352** displays a map of the surroundings of Tokyo Disneyland ® on the display **1340,** and the announcement "New destination: Tokyo Disneyland ®" is played from the speaker **1389.** Then, the control portion **1340** searches a route to Tokyo Disneyland ®, and sets this route (second task).

After receiving the selection information **S1362,** the task control portion **1352** sends a presentation-stop signal **S1392** to the task candidate presentation portion **1354**. The task candidate presentation portion **1354** receives the presentation-stop signal **S1392** and stops the display of the task candidates **S1361** on the display **1387** (Step **15-2-3** in Fig. **18).** The task candidate display portion **1354** receives the presentation-stop signal **S1392** and sends a switching signal **S1398** to the selector switch portion **1386.** The selector switch portion **1386** makes arrangements to the effect that the next received recognition result **S1360** is sent to the task control portion **1352** and the task candidate creation portion **1353.**

### Effects

With the fifth embodiment as explained above, the task candidates **S1361** created by the task candidate creation portion **1353** are presented and selected by the user at whichever is the faster timing of a first timing with which the second task is executed and a second timing at which a first predetermined time after presenting the task candidates **S1361** has elapsed, so that the user does not need to perform again from the beginning the procedure for executing the task intended by the user. Consequently, usage becomes more convenient and less troublesome for the user.

Moreover, the task candidate presentation portion **1354** automatically stops the presentation of the task candidates **S1361** if the user shows no intent of selecting a task candidate even after the first predetermined time has passed, so that if the first task that has been executed is the task intended by the user, the user does not need to stop the presentation of the task candidates **S1361.** Consequently, usage becomes more convenient and less troublesome for the user.

Furthermore, the task control portion **1352** automatically executes the first task based on the recognition result **S1360** that has been output by the recognition portion **1351,** so that if the first task that is executed is the task that was intended by the user, then the user does not have to select a task candidate. Consequently, usage becomes more convenient and less troublesome for the user.

Furthermore, the task candidate presentation portion **1354** automatically presents the task candidates **S1361,** so that if the first task that is executed is not the task intended by the user, the user does not have to perform an operation in order to present the task candidates. Consequently, usage becomes more convenient and less troublesome for the user.

Furthermore, the task candidates created by the task candidate creation portion **1353** include tasks related to the recognition data that are good matches when comparing information reflecting the entered task content to be recognized with the recognition lexicon data **1372**, so that even when a misrecognition has occurred, it is possible to include the correctly recognized task among the task candidates **S1361** and to correct the misrecognition with the user's selection. Consequently, usage becomes more convenient for the user.

Furthermore, the task control portion **1352** can perform a plurality of task controls base on the recognition result **S1360** (such as displaying a map of the surroundings of Tokyo Disneyland ® on the display **1387,** playing the announcement "New destination: Tokyo Disneyland ®" from the speaker **1389,** and searching and setting the route to Tokyo Disneyland ® in the control portion **1340).** Consequently, usage becomes more convenient for the user.

Furthermore, the selection of the task candidates **S1361** is performed after adding to the task candidates **S1361** words (here, for example, numbers) whose recognition is easier than that of the recognition results **S1360,** so that erroneous selections do not occur. Consequently, usage becomes more convenient for the user.

Furthermore, since a cancel function is included as one of the task candidates **S1361,** it is possible to cancel and return to the original state instead of executing the desired task. Consequently, usage becomes more convenient for the user.

It should be noted that the present embodiment is not limited to the above description, and the various adaptations listed below are also possible, for example.
a) The recognition portion **1351** may perform the recognition using linguistic knowledge, grammatical knowledge or semantic knowledge, for example.
b) Task candidates **S1361** may be included that have a semantic relation with the task based on the recognition result **S1360** output by the recognition portion **1351**.
c) The presentation of the task candidates **S1361** is not limited to screen displays and may be accomplished by speech.
d) The number of task candidates **S1361** that are presented does not have to be fixed.
e) Some of the task candidates **S1361** may be displayed even after the first predetermined time has elapsed.
f) The task candidates **S1361** may be presented such that they scroll over the touch-panel display **1387.**

### Sixth Embodiment

### Configuration of Mobile Phone

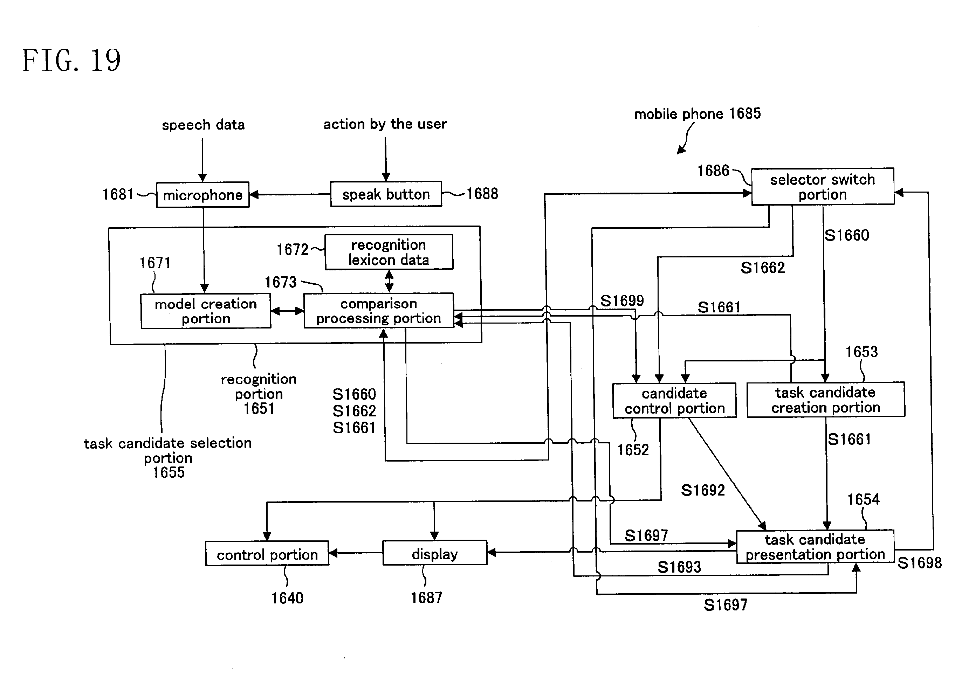

Fig. **19** is a block diagram showing the overall configuration of a mobile phone in accordance with a sixth embodiment. The mobile phone **1685** shown in Fig. **19** includes a microphone **1681**, a speak button **1688**, a recognition portion **1651** (task candidate selection portion **1655**), a selector switch portion **1686**, a task candidate creation portion **1653**, a task candidate presentation portion **1654**, a display **1687**, a control portion **1640**, and a task control portion **1652**. The recognition portion **1651** (task candidate selection portion **1655**) includes a model creation portion **1671**b, recognition lexicon data **1672**, and a comparison processing portion **1073**.

The microphone **1681** receives speech data from the user while the speak button **1688** is pressed, and sends them to the model creation portion **1671**.

The model creation portion **1671** converts the speech data that have been sent by the microphone **1681** into characteristic quantities, creates a model, and stores that model.

The comparison processing portion **1673** compares the recognition lexicon data **1672** with the model stored by the model creation portion, and creates a recognition result **S1660,** which it sends to the selector switch portion **1686.**

The selector switch portion **1686** sends the received recognition result **S1660** to the task control portion **1652** and the task candidate creation portion **1653**.

Based on the recognition result **S1660** sent by the selector switch portion **1686,** the task control portion **1652** switches the screen of the display **1687.** Furthermore, the task control portion **1652** receives trigger signals **S1699** sent by the comparison processing portion **1673** (after a second predetermined time has passed), and, based on the recognition result **S1660** sent by the selector switch portion **1686,** changes the screen of the display **1687** and initiates a call to a number to be called with the control portion **1640** (first task).

Based on the recognition result **S1660** that has been sent by the selector switch portion **1686**, the task candidate creation portion **1653** creates task candidates **S1661** and sends those task candidates **S1661** to the candidate presentation portion **1654** and the comparison processing portion **1673**.

The task candidate presentation portion **1654** presents the task candidates **S1661** created by the task candidate creation portion **1653** on the display **1687**, and sends a trigger signal **S1693** to the comparison processing portion **1673.** The task candidate presentation portion **1654** also sends a switching signal **S1698** to the selector switch portion **1686**.

Until receiving the next switching signal **S1698**, the selector switch portion **1686** does not send selection information **S1662** to the task candidate creation portion **1653,** but sends received selection information **S1662** to the task control portion **1652.**

If the model creation portion **1671** has received speech data before a first predetermined time has elapsed after the comparison processing portion **1673** has received the trigger signal **S1693,** then the recognition portion **1651,** which serves as the task candidate selection portion **1655**, performs a recognition process in the comparison processing portion **1673** while restricting the recognition lexicon data **1672** to the task candidates **S1661,** and outputs the recognition result as the selection information **S1662.**

The selector switch portion **1686** receives the selection information **S1662** that has been output by the comparison processing portion **1673** and sends the selection information **S1662** to the task control portion **1652.**

The task control portion **1652** receives the selection information **S1662** and sends a presentation-stop signal **S1692** to the task candidate presentation portion **1654.** Furthermore, the task control portion **1652** switches the screen of the display **1687** based on the received selection information **S1662** and initiates a call to the number to be called with the control portion **1640** (second task).

The task candidate presentation portion **1654** receives the presentation-stop signal **S1692** sent by the task control portion **1652,** and stops the presentation of the task candidates **S1661** on the display **1687** (first timing), and sends a switching signal **S1698** to the selector switch portion **1686**.

If, in the recognition portion **1651**, which serves as the task candidate selection portion **1655**, the model creation portion **1671** has not received any speech data before a first predetermined time has elapsed after the comparison processing portion **1673** has received the trigger signal **S1693,** then the comparison processing portion **1673** sends a presentation-stop signal **S1697** to the task candidate presentation portion **1654.** The comparison processing portion **1673** also sends a trigger signal **S1699** to the task control portion **1652.**

The task candidate presentation portion **1654** receives the presentation-stop signal **S1697** and stops the presentation of the task candidates **S1661** that are presented on the display **1687** (second timing). Furthermore, the task candidate presentation portion **1654** receives the presentation-stop signal **S1697** and sends a switching signal **S1698** to the selector switch portion **1686.**

Until receiving the next switching signal **S1698,** the selector switch portion **1686** sends received recognition results **S1660** to the task control portion **1652** and the task candidate creation portion **1353.**

### Operation of the Mobile Phone

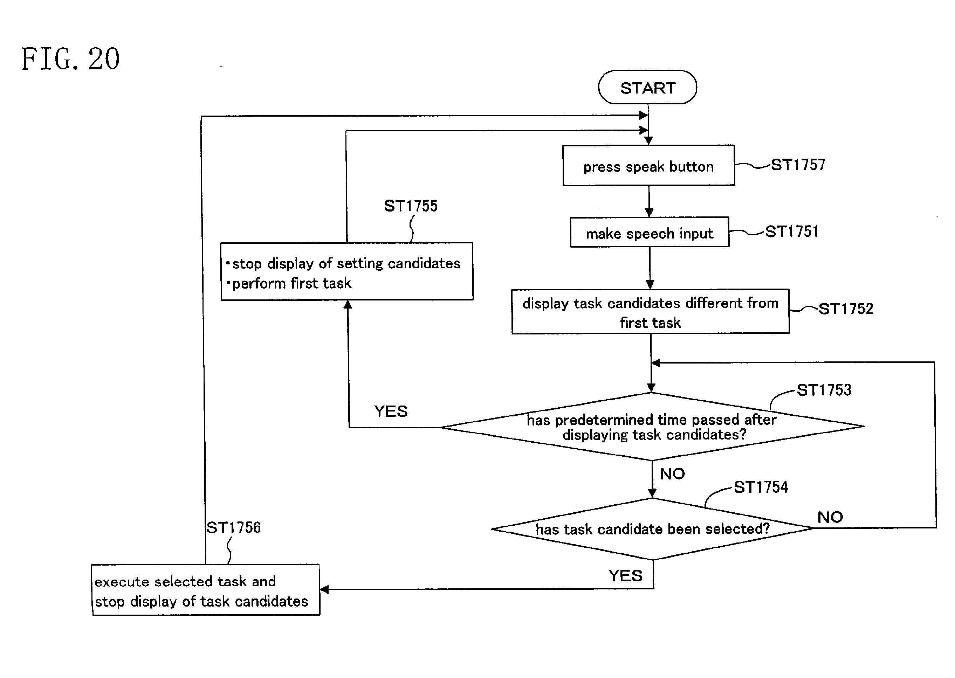

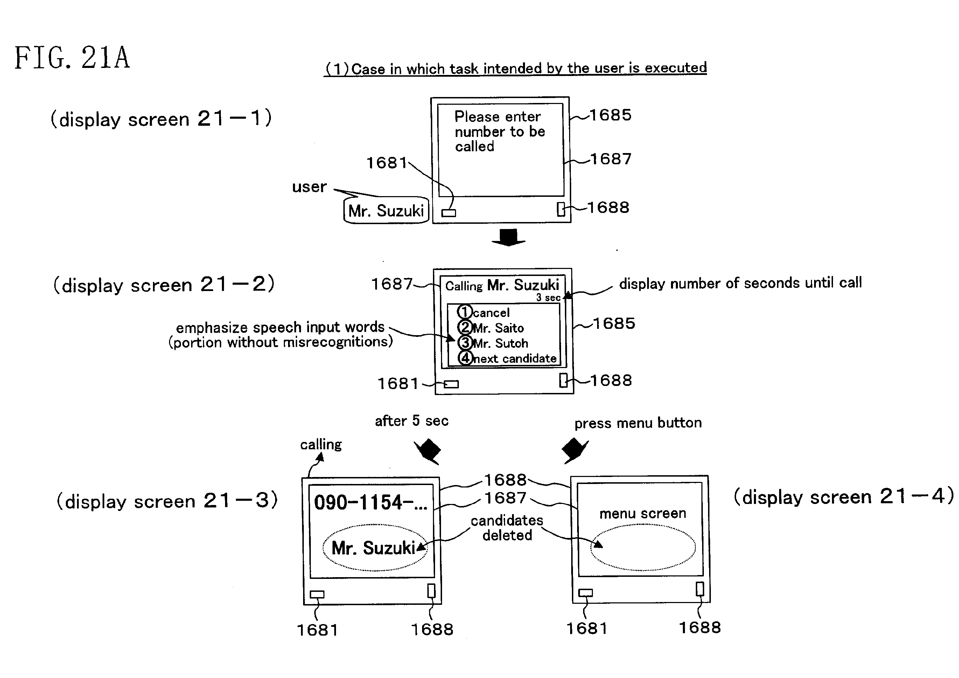

The following is an explanation of the operation of the mobile phone **1685** configured as described above. Here, an example is described with reference to Fig. **20** and Figs. **21A** to **21B**, in which a calling operation with the mobile phone is carried out by speech.

### (1) Case in which the task intended by the user is performed

First, the message "please enter number to be called" is shown on the display **1687** (see display screen **21-1** in Fig. **21A**).

### [Step ST1757]

The user presses the speak button 1688 in order to enter by speech the number to be called.

### [Step ST1751]

After pressing the speak button **1688**, the user enters the speech data "Mr. Suzuki" into the microphone **1681** (display screen **21-1** in Fig. **21A**). The entered speech data are sent to the recognition portion **1651.** The recognition portion **1651** outputs, as the recognition results, **S1660** "Mr. Suzuki," "Mr. Saitoh" and "Mr. Sutoh," which are the best matches between the information concerning the speech data and the recognition lexicon data **1672**, and sends the recognition results **S1660** to the selector switch portion **1686.** The selector switch portion **1686** sends the received recognition result **S1660** "Mr. Suzuki" to the task control portion **1652,** and sends the received recognition results **S1660** "Mr. Saitoh" and "Mr. Sutoh" to the task candidate creation portion **1653.** Based on the recognition results **S1660** "Mr. Saitoh" and "Mr. Sutoh," the task candidate creation portion **1653** creates the task candidates **S1661** "② Mr. Saitoh" and "③ Mr. Sutoh." The task candidate creation portion **1653** also creates the task candidates **S1661** "① cancel" and "④ next candidate." The task candidate creation portion **1653** sends the task candidates **S1661** to the task candidate presentation portion **1654** and the comparison processing portion **1673**.

### [Step ST1752]

Based on the recognition result **S1660** "Mr. Suzuki," the task control portion **1652** displays "Calling Mr. Suzuki" and the remaining number of seconds "3 sec" until the first predetermined time (5 sec) on the display **1687** (first task).

The task candidate presentation portion **1654** displays on the display **1687** the task candidates **S1661** "① cancel," "② Mr. Saitoh," "③ Mr. Sutoh" and "④ next candidate" (display screen **21-2** in Fig. **21A**). At the same time as the task candidates **S1661** are displayed, the task candidate presentation portion **1654** sends a trigger signal **S1693** to the comparison processing portion **1673.** The task candidate presentation portion **1654** also sends a switching signal **S1698** to the selector switch portion **1698.** Until receiving the next switching signal **S1698,** the selector switch portion **1686** sends received selection information **S1662** to the task control portion **1652,** but does not send received selection information **S1662** to the task candidate creation portion **1653.** After the selector switch portion **1686** has received the next switching signal **S1698,** it sends received recognition results **S1660** to the task control portion **1652** and the task candidate creation portion **1653.**

### [Steps ST1753 and ST1754]

If, in the recognition portion **1651** which serves as the task candidate selection portion **1655**, the user does not press the speak button **1688** to enter speech data and express the intention to select a task candidate within a first predetermined time (5 sec) after the comparison processing portion **1673** has received the trigger signal **S1693,** then the comparison processing portion **1673** of the task candidate selection portion **1655** sends a presentation-stop signal **S1697** to the task candidate presentation portion **1654.** The comparison processing portion **1673** sends a trigger signal **S1699** to the task control portion **1652.** The task candidate presentation portion **1654** receives the presentation-stop signal **S1697** and stops the display of the task candidates on the display **1687.** The task control portion **1652** receives the trigger signal **S1699,** and (after a second predetermined time (here: 5 sec) has passed) initiates a call to Mr. Suzuki based on the recognition result **S1660** "Mr. Suzuki" (first task) (display screen **21-3** of Fig. **21A).** The task candidate presentation portion **1654** receives the presentation-stop signal **S1697** and sends a switching signal **S1698** to the selector switch portion **1686.** It should be noted that if the menu button is pressed during the above-noted first predetermined time (5 sec), then a menu screen is shown on the display **1687** (display screen **21-4** of Fig. **21A).**

### (2) Case in which the task intended by the user is not executed

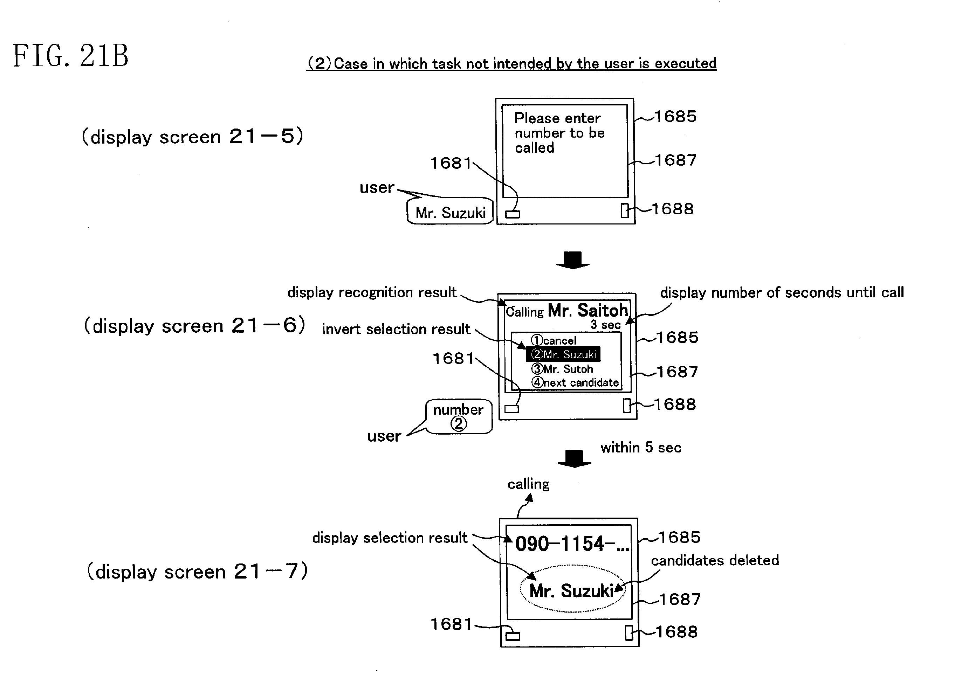

First, the message "please enter number to be called" is shown on the display **1687** (display screen **21-5** in Fig. **21B**).

### [Step ST1757]

The user presses the speak button **1688** in order to enter by speech the number to be called.

### [Step ST1751]

After pressing the speak button **1688**, the user enters the speech data "Mr. Suzuki" into the microphone **1681** (display screen **21-5** in Fig. **21B**). The entered speech data are sent to the recognition portion **1651.** The recognition portion **1651** outputs, as the recognition results, **S1660** "Mr. Saitoh," "Mr. Suzuki" and "Mr. Sutoh," which are the best matches between the information concerning the speech data and the recognition lexicon data **1672,** and sends the recognition results **S1660** to the selector switch portion **1686.** The selector switch portion **1686** sends the received recognition result **S1660** "Mr. Saitoh" to the task control portion **1652,** and sends the received recognition results **S1660** "Mr. Suzuki" and "Mr. Sutoh" to the task candidate creation portion **1653.** Based on the recognition results **S1660** "Mr. Suzuki" and "Mr. Sutoh," the task candidate creation portion **1653** creates the task candidates **S1661** "② Mr. Suzuki" and "③ Mr. Sutoh." The task candidate creation portion **1653** also creates the task candidates **S1661** "① cancel" and "④ next candidate." The task candidate creation portion **1653** sends the task candidates **S1661** to the task candidate presentation portion **1654** and the comparison processing portion **1673**.

### [Step ST1752]

Based on the recognition result **S1660** "Mr. Saitoh," the task control portion **1652** displays "Calling Mr. Saitoh" and the remaining number of seconds "3 sec" until the first predetermined time on the display **1687** (first task).

The task candidate presentation portion **1654** displays on the display **1687** the task candidates **S1661** "① cancel," "② Mr. Suzuki," "③ Mr. Sutoh" and "④ next candidate" (display screen **21-6** in Fig. **21B).** At the same time as the task candidates **S1661** are displayed, the task candidate presentation portion **1654** sends a trigger signal **S1693** to the comparison processing portion **1673.** The task candidate presentation portion **1654** sends a switching signal **S1698** to the selector switch portion **1686.** Until receiving the next switching signal **S1698,** the selector switch portion **1686** sends received selection information **S1662** to the task control portion **1652,** but does not send any received selection information **S1662** to the task candidate creation portion **1653.** After the selector switch portion **1686** has received the next switching signal **S1698,** it sends received recognition results **S1660** to the task control portion **1652** and the task candidate creation portion 1653.

### [Steps ST1753 and ST1754]

Within five seconds (first predetermined time) after the comparison processing portion **1673** in the recognition portion **1651**, which also serves as the task candidate selection portion **1655,** has received the trigger signal **S1693,** the user presses the speak button **1688** to enter the speech data "two". The microphone **1681** sends the speech data to the model creation portion **1671.** The model creation portion **1671** converts the speech data "two" into characteristic quantities and stores them. The comparison processing portion **1673** creates the recognition result **S1660** "two" using the characteristic quantities stored by the model creation portion **1673** and the recognition lexicon data **1672,** and creates the selection information **S1662** "Mr. Suzuki" based on the recognition result **S1660** "two" and the task candidate **S1661** "② Mr. Suzuki." The comparison processing portion **1673** sends the selection information **S1662** to the selector switch portion **1686.** The selector switch portion **1686** sends the received selection information **S1662** to the task control portion **1652.**

### [Step ST1756]

After a second predetermined time has passed and based on the received selection information **S1662,** the task control portion **1652** displays Mr. Suzuki's telephone number as well as "Mr. Suzuki" on the display **1687,** and initiates a call to Mr. Suzuki (second task).

After receiving the selection information **S1662,** the task control portion **1652** sends a presentation-stop signal **S1692** to the task candidate presentation portion **1654.** The task candidate presentation portion **1654** receives the presentation-stop signal **S1692** and stops the display of the task candidates **S1661** shown on the display **1687** (display screen **21-7** in Fig. **21B).** The task candidate presentation portion **1654** receives the presentation-stop signal **S1692** and sends a switching signal **S1698** to the selector switch portion **1686.** The selector switch portion **1686** makes arrangements to the effect that the subsequently received recognition result **S1660** is sent to the task control portion **1652** and the task candidate creation portion **1653.**

### Effects

With the sixth embodiment as explained above, the task candidates **S1661** created by the task candidate creation portion **1653** are presented and selected by the user at whichever is the faster timing of a first timing with which the second task is executed and a second timing at which a first predetermined time after presenting the task candidates **S1661** has elapsed, so that the user does not need to perform again from the beginning the procedure for executing the task intended by the user. Consequently, usage becomes more convenient and less troublesome for the user.

Moreover, the task candidate presentation portion **1654** automatically stops the presentation of the task candidates **S1661** if the user shows no intent of selecting a task candidate even after the first predetermined time has passed, so that if the first task that has been executed is the task intended by the user, the user does not need to stop the presentation of the task candidates **S1661.** Consequently, usage becomes more convenient and less troublesome for the user.

Furthermore, the task control portion **1652** automatically executes the first task based on the recognition result **S1660** that has been output by the recognition portion **1651,** so that if the first task that is executed is the task that was intended by the user, then the user does not have to select a task candidate. Consequently, usage becomes more convenient and less troublesome for the user.

Furthermore, the task candidate presentation portion **1654** automatically presents the task candidates **S1661,** so that if the first task that is executed is not the task intended by the user, the user does not have to perform an operation in order to present the task candidates. Consequently, usage becomes more convenient and less troublesome for the user.

Furthermore, the task candidates **S1661** created by the task candidate creation portion **1653** include tasks related to the recognition data that are good matches when comparing information reflecting the entered task content to be recognized with the recognition lexicon data **1672,** so that even when a misrecognition has occurred, it is possible to include the correctly recognized task among the task candidates **S1661** and to correct the misrecognition with the user's selection. Consequently, usage becomes more convenient for the user.

Furthermore, since the first task (initiating a call) based on the recognition result **S1660** is executed after the second predetermined time, execution of a first task not intended by the user can be prevented. Consequently, usage becomes more convenient for the user.

Furthermore, the selection of the task candidates **S1661** is performed after adding to the task candidates **S1661** words (here, for example, numbers) whose recognition is easier than that of the recognition results **S1660,** so that erroneous selections do not occur. Consequently, usage becomes more convenient for the user.

Furthermore, since a cancel function is included as one of the task candidates **S1661**, it is possible to cancel and return to the original state instead of executing the desired task. Consequently, usage becomes more convenient for the user.

It should be noted that the present embodiment is not limited to the above description, and the various adaptations listed below are also possible, for example.
a) The recognition portion **1651** may perform the recognition using linguistic knowledge, grammatical knowledge or semantic knowledge, for example.
b) Task candidates **S1661** may be included that have a semantic relation with the task based on the recognition result **S1660** output by the recognition portion **1651** (for example "read Mr. Suzuki's mail" or "view Mr. Suzuki's personal information" for "Mr. Suzuki").
c) The presentation of the task candidates **S1661** is not limited to screen displays and may be accomplished by speech.
d) The number of task candidates **S1661** that are presented does not have to be fixed.
e) As shown in the display screen **21-4** of Fig. **21A,** it is also possible to use the information "menu screen button has been pressed," which is general information reflecting a task that is different from the first task.
f) The recognition portion **1651** is not limited to speech recognition means, and may also perform character recognition or the like.
g) The first predetermined time and the second predetermined time related to the execution of the first task may be set independently.
h) Some of the task candidates **S1661** may be displayed even after the first predetermined time has elapsed.
i) It is also possible to use for example character recognition instead of speech recognition.

### Seventh Embodiment

### Configuration of Translation Apparatus

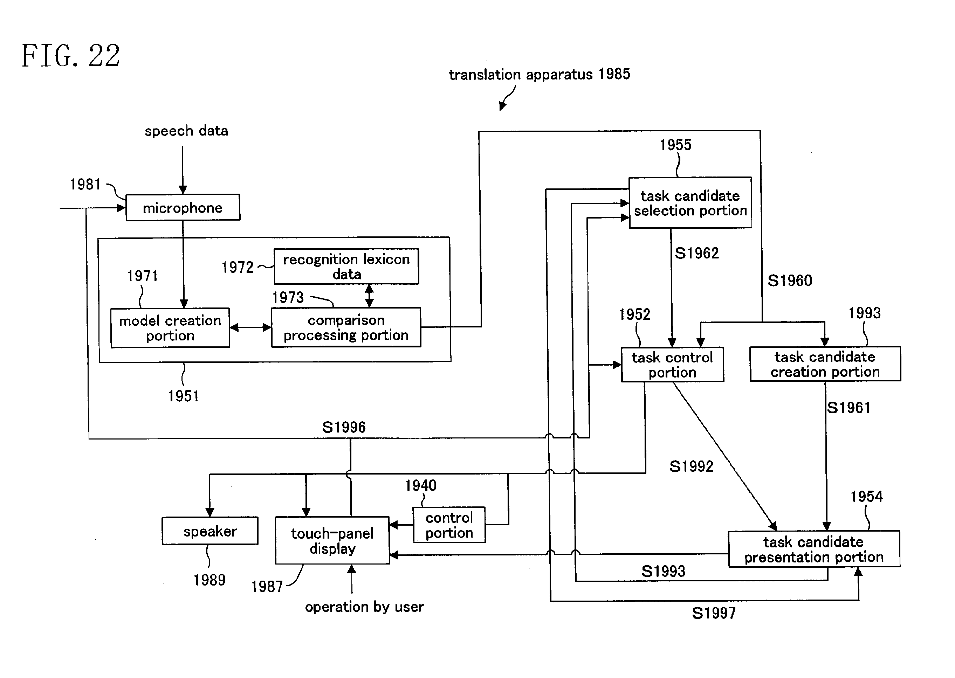

Fig. **22** is a block diagram showing the overall configuration of a translation apparatus in accordance with a seventh embodiment. The translation apparatus **1985** shown in Fig. **22** includes a microphone **1981,** a recognition portion **1951,** a task control portion **1952**, a task candidate creation portion **1993**, a task candidate presentation portion **1954**, a task candidate selection portion **1955**, a touch-panel display **1987**, a control portion **1940**, and a speaker **1989**. The recognition portion **1951** includes a model creation portion **1971**, recognition lexicon data **1972**, and a comparison processing portion **1973**.

When a portion marked "speak button" on the touch-panel display **1987** is pressed with a pen, an operation signal **S1996** is sent to the microphone **1981.**

After receiving the operation signal **S1996,** the microphone **1981** receives speech data, and sends them to the model creation portion **1971.**

The model creation portion **1971** converts the speech data that have been sent by the microphone **1981** into characteristic quantities, and stores them as a model.

The comparison processing portion **1973** compares the recognition lexicon data **1972** with the model stored by the model creation portion **1971,** and creates a recognition result **S1960,** which it sends to the task control portion **1952** and the task candidate creation portion **1993.**

Based on the received recognition result **S1960,** the task control portion **1952** displays the recognition result that is the best match on the touch-panel display **1987,** changes the speak button on the touch-panel display **1987** into a synthetic voice button, lets the control portion **1940** translate the recognition result that is the best match, and displays the translation result on the touch-panel display **1987** (first task).

Based on the received recognition result **S1960,** the task candidate creation portion **1993** creates task candidates **S1961** and sends those task candidates **S1961** to the candidate presentation portion **1954.**

The task candidate presentation portion **1954** displays the received task candidates **S1961** on the touch-panel display **1987**, and sends a trigger signal **S1993** to the task candidate selection portion **1955.**

If the task candidate selection portion **1955** does not receive an operation signal **S1996** produced by a selection of a candidate with the touch-panel display **1987** after the trigger signal **S1993** has been received and before a first predetermined time has elapsed, then a presentation-stop signal **S1997** is sent to the candidate presentation portion **1954**.

After receiving the presentation-stop signal **S1997,** the candidate presentation portion **1954** stops the presentation of the task candidates **S1961** that are presented on the touch-panel display **1987** (second timing).

If the task candidate selection portion **1955** has received an operation signal **S1996** produced by a selection of a candidate with the touch-panel display **1987** after the trigger signal **S1993** has been received and before a first predetermined time has elapsed, then it produces selection information **S1962** based on the received operation signal **S1996** and sends the selection signal **S1962** to the task selection portion **1952.**

Based on the received selection signal **S1962,** the task control portion **1952** displays the selected recognition result on the touch-panel display **1987,** lets the control portion **1940** translate the selected recognition result, and displays the translation result on the touch-panel display **1987** (second task).

The task control portion **1952** receives the selection information **S1962** produced by the task candidate selection portion **1955** and sends a presentation-stop signal **S1992** to the task candidate presentation portion **1954.**

The task candidate presentation portion **1954** receives the presentation-stop signal **S1992** sent by the task control portion **1952,** and stops the presentation of the task candidates **S1961** displayed on the touch-panel display **1987** (first timing).

The task control portion **1952** receives an operation signal **S1996** (general information reflecting a task that is different from the first task) produced with the touch-panel display **1987** by pressing the synthetic voice button, and sends a presentation-stop signal **S1992** to the task candidate presentation portion **1954.**

The task candidate selection portion **1955** receives the operation signal **S1996** produced with the touch-panel display **1987** by pressing the synthetic voice button, and does not produce selection information **S1962** until receiving the next trigger signal **S1993.**

The task candidate presentation portion **1954** receives the presentation-stop signal **S1992,** and stops the display of the task candidates **S1961** that are displayed on the touch-panel display **1987** (third timing).

### Operation of the Translation Apparatus

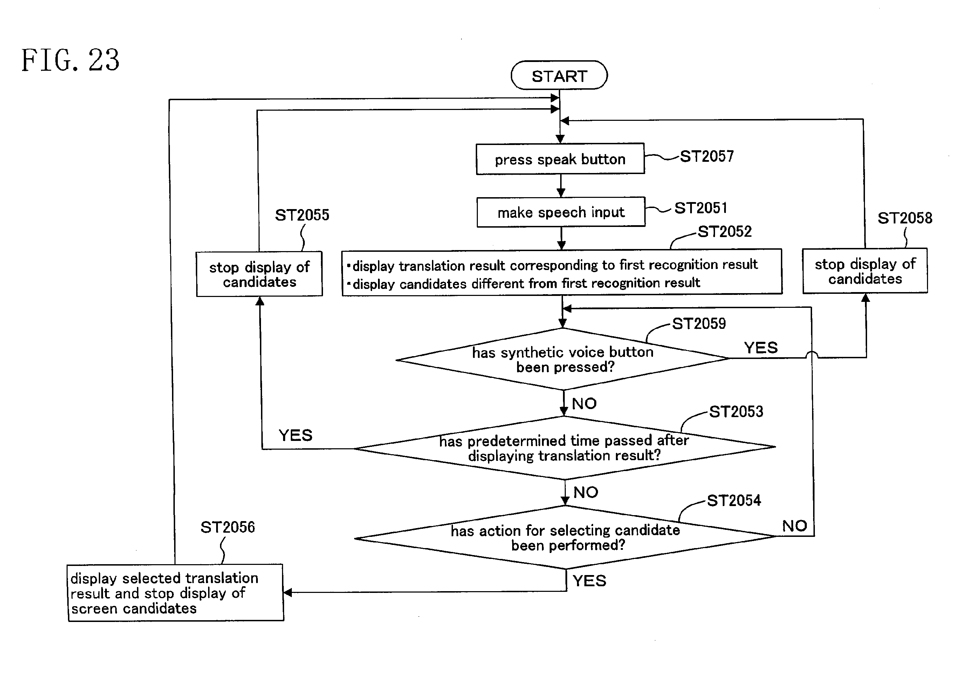

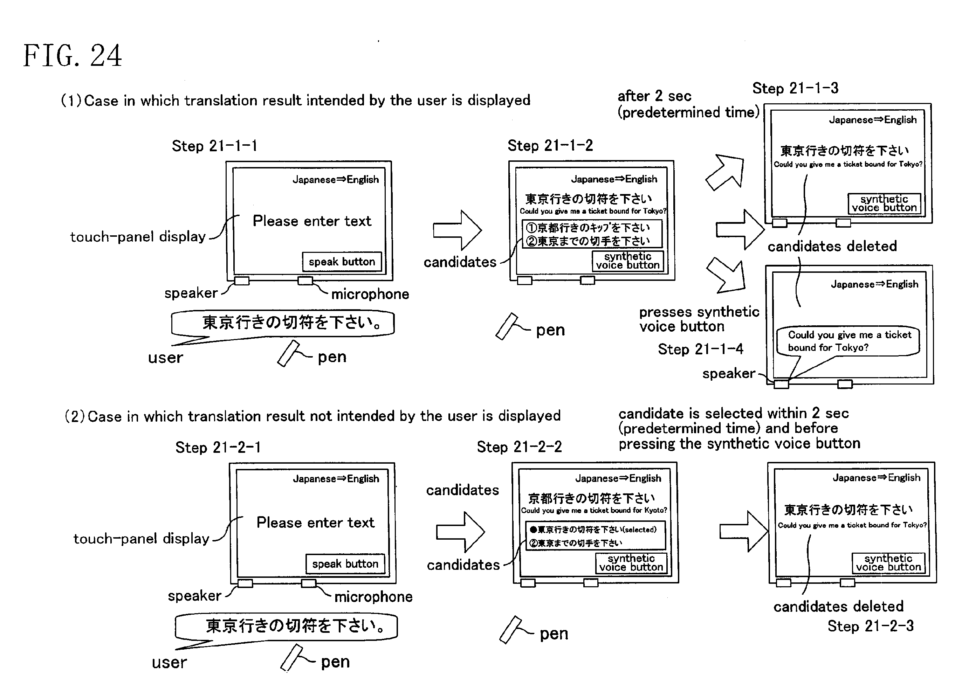

The following is an explanation of the operation of the translation apparatus **1985** configured as described above. Here, an example is described with reference to Fig. **23** and Fig. **24,** in which the translation apparatus **1985** is operated by operating a touch panel using speech and pen.
(1) Example **1** of a case in which the translation result intended by the user is displayed

### [Step ST2057]

The user presses the speak button on the touch-panel display **1987** with a pen in order to make a speech input.

### [Step ST2051]

The user enters the speech data 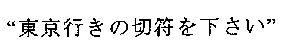 (which is Japanese for "Could you give me a ticket bound for Tokyo?") into the microphone **1981** (Step **21-1-1** in Fig. **24**). The entered speech data are sent to the recognition portion **1951.** The recognition portion **1951** outputs, as the recognition results, **S1960** 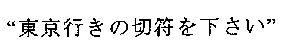 (Japanese for "Could you give me a ticket bound for Tokyo?"), 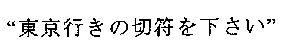 (Japanese for "Could you give me a ticket bound for Kyoto?"), and " 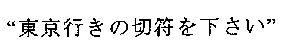 (Japanese for "Could you give me a stamp for Tokyo?"), which are the best matches between the information concerning the speech data and the recognition lexicon data **1972**, sends the recognition result **S1960** 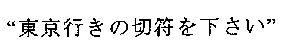 to the task control portion **1952,** and sends the recognition results **S1960** 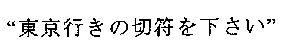 and 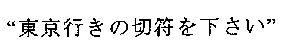 to the task candidate creation portion **1993**. Here, the recognition results **S1960** are produced by extracting keywords from the speech data and selecting the sample sentences (of the recognition lexicon data **1972)** that include the most of the keywords extracted from the speech data. Based on the recognition results **S1960,** the task candidate creation portion **1961** creates "① 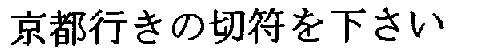 " and "② 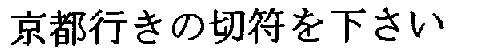 " as task candidates **S1961.** The task candidate creation portion **1961** sends the task candidates **S1961** to the task candidate presentation portion **1954.**

### [Step ST2052]

Based on the recognition result **S1960** 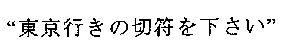 , the task control portion **1952** displays 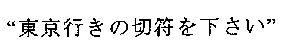 on the touch-panel display **1987**, changes the speak button on the touch-panel display **1987** into a synthetic voice button, lets the control portion **1940** translate the phrase 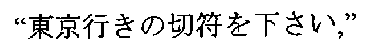 and displays the translation result on the touch-panel display **1987** (first task).

The task candidate presentation portion **1954** displays the task candidates **S1961** "① 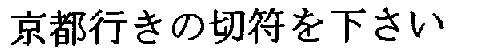 and "② 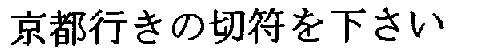 on the touch-panel display **1987** (Step **21-1-2** in Fig. **24).**

### [Steps ST2059, ST2053 and ST2054]

If within two seconds (first predetermined) after the task candidate selection portion **1955** has received the trigger signal **S1993,** the task candidate selection portion **1955** does not receive an operation signal **S1996** produced by the synthetic voice button on the touch-panel display **1987,** and the task candidate selection portion **1955** does not receive an operation signal **S1996** for selecting a task candidate **1961** with the touch-panel display **1987,** then the task candidate selection portion **1955** sends a presentation-stop signal **S1996** to the task candidate presentation portion **1954.** Furthermore, the task candidate selection portion does not send selection information **S1962** until it has received the next trigger signal **S1993.**

### [Step ST2055]

The task candidate presentation portion **1954** stops the display of the task candidates **S1961** on the touch-panel display **1987** (Step **21-1-3** in Fig. **24).** Here, the phrase "Could you give me a ticket bound for Tokyo?" is emitted from the speaker **1989** when pressing the synthetic voice button on the touch-panel display **1987**.

### (2) Example 2 of a case in which the translation result intended by the user is displayed

### [Step ST2057]

The user presses the speak button on the touch-panel display **1987** with a pen in order to make a speech input.

### [Step ST2051]

The user enters the speech data 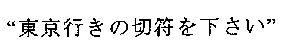 (which is Japanese for "Could you give me a ticket bound for Tokyo?") into the microphone **1981** (Step **21-1-1** in Fig. **24**). The entered speech data are sent to the recognition portion **1951.** The recognition portion **1951** outputs, as the recognition results, **S1960** 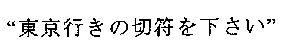 (Japanese for "Could you give me a ticket bound for Tokyo?"), 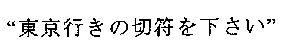 (Japanese for "Could you give me a ticket bound for Kyoto?"), and " 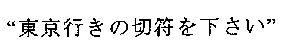 (Japanese for "Could you give me a stamp for Tokyo?"), which are the best matches between the information concerning the speech data and the recognition lexicon data **1972,** sends the recognition result **S1960** 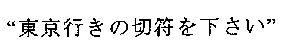 to the task control portion **1952,** and sends the recognition results **S1960** 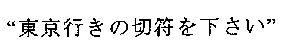 and 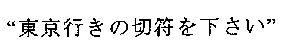 to the task candidate creation portion **1993.** Here, the recognition results **S1960** are produced by extracting keywords from the speech data and selecting the sample sentences (which are the recognition lexicon data **1972)** that include the most of the keywords extracted from the speech data. Based on the recognition results **S1960,** the task candidate creation portion **1961** creates "① 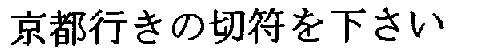 and "② 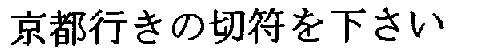 as task candidates **S1961.** The task candidate creation portion **1961** sends the task candidates **S1961** to the task candidate presentation portion **1954.**

### [Step ST2052]

Based on the recognition result **S1960** 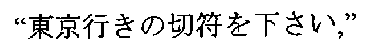 the task control portion **1952** displays 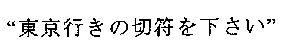 on the touch-panel display **1987,** changes the speak button on the touch-panel display **1987** into a synthetic voice button, lets the control portion **1940** translate the phrase 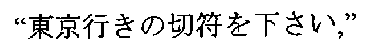 and displays the translation result on the touch-panel display **1987** (first task). The task candidate presentation portion **1954** displays the task candidates **S1961** "① 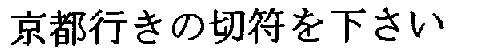 and "② 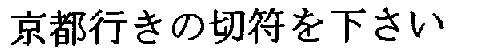 on the touch-panel display **1987** (Step **21-1-2** in Fig. **24**).

### [Steps ST2059, ST2053 and ST2054]

If within two seconds (first predetermined time) after the task candidate selection portion **1955** has received the trigger signal **S1993,** the task candidate selection portion **1955** receives an operation signal **S1996** produced by the synthetic voice button on the touch-panel display **1987**, then the task candidate selection portion **1955** sends a presentation-stop signal **S1996** to the task candidate presentation portion **1954**. Furthermore, the task candidate selection portion **1955** does not send selection information **S1962** until it has received the next trigger signal **S1993.** The task control portion **1952** receives the operation signal **S1996,** and sends a presentation-stop signal **S1992** to the task candidate presentation portion **1954.** The task candidate presentation portion **1954** receives the presentation-stop signal **S1992,** and stops the display of the task candidates **S1961** displayed on the touch-panel display **1987**. The task control portion **1952** outputs the translation result "Could you give me a ticket bound for Tokyo?" from the speaker **1989** (Step **21-1-4** in Fig. **24**).

### (3) Case in which the translation result intended by the user is not displayed

### [Step ST2057]

The user presses the speak button on the touch-panel display **1987** with a pen in order to make a speech input.

### [Step ST2051]

The user enters the speech data 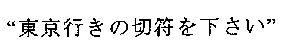 (which is Japanese for "Could you give me a ticket bound for Tokyo?") into the microphone **1981** (Step **21-2-1** in Fig. **24**). The entered speech data are sent to the recognition portion **1951.** The recognition portion **1951** outputs, as the recognition results, **S1960** 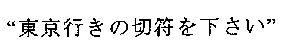 (Japanese for "Could you give me a ticket bound for Kyoto?"), 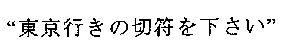 (Japanese for "Could you give me a ticket bound for Tokyo?"), and 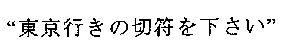 (Japanese for "Could you give me a stamp for Tokyo?"), which are the best matches between the information concerning the speech data and the recognition lexicon data **1972,** sends the recognition result **S1960** 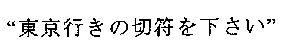 to the task control portion **1952,** and sends the recognition results **S1960** 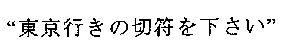 and 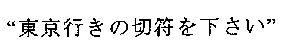 to the task candidate creation portion **1993**. Here, the recognition results **S1960** are produced by extracting keywords from the speech data and selecting the sample sentences (which are the recognition lexicon data **1972)** that include the most of the keywords extracted from the speech data. Based on the recognition results **S1960,** the task candidate creation portion **1961** creates "① 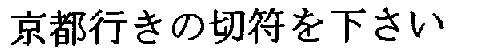 and "② 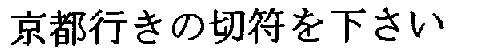 as task candidates **S1961.** The task candidate creation portion **1961** sends the task candidates **S1961** to the task candidate presentation portion **1954.**

### [Step ST2052]

Based on the recognition result **S1960** 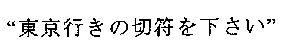 the task control portion **1952** displays 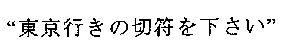 on the touch-panel display **1987,** changes the speak button on the touch-panel display **1987** into a synthetic voice button, lets the control portion **1940** translate the phrase 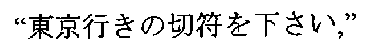 and displays the translation result "Could you give me a ticket bound for Kyoto?" on the touch-panel display **1987** (first task). The task candidate presentation portion **1954** displays the task candidates **S1961** "① 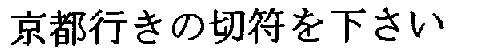 and "② 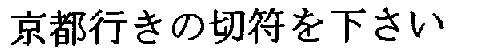 on the touch-panel display **1987** (Step **21-2-2** in Fig. **24).**

### [Steps ST2059, ST2053 and ST2054]

If within two seconds (first predetermined) after the task candidate selection portion **1955** has received the trigger signal **S1993,** the task candidate selection portion **1955** receives an operation signal **S1996** (selection of 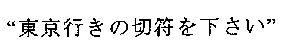 ) in order to select a task candidate **S1961** with the touch-panel display **1987,** then the task candidate selection portion **1955** produces the selection information **S1962** 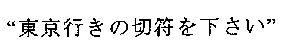 based on the received operation signal **S1996** (Step **21-2-2** in Fig. **24**).

### [Step ST2056]

Based on the selection information **S1962,** the task control portion **1952** displays 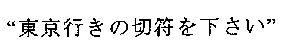 on the touch-panel display **1987,** lets the control portion **1940** translate 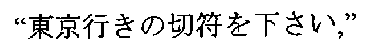 and displays the translation result "Could you give me a ticket bound for Tokyo?" on the touch-panel display **1987**. Here, the phrase "Could you give me a ticket bound for Tokyo?" is output from the speaker **1989** when pressing the synthetic voice button on the touch-panel display **1987** (Step **21-2-3** in Fig. **24).**

### Effects

With the seventh embodiment as explained above, the task candidates **S1961** created by the task candidate creation portion **1993** are presented and selected by the user at whichever is the faster timing of a first timing with which the second task is executed, a second timing at which a first predetermined time after presenting the task candidates **S1961** has elapsed, and a third timing at which general information reflecting a task that is different from the first task is entered, so that the user does not need to perform again from the beginning the procedure for executing the task intended by the user. Consequently, usage becomes more convenient and less troublesome for the user.

Moreover, the task candidate presentation portion **1954** automatically stops the presentation of the task candidates **S1961** if the user shows no intent of selecting a task candidate even after the first predetermined time has passed, so that if the first task that has been executed is the task intended by the user, the user does not need to stop the presentation of the task candidates **S1961.** Consequently, usage becomes more convenient and less troublesome for the user.

Furthermore, the task control portion **1952** automatically executes the first task based on the recognition result **S1960** that has been output by the recognition portion **1951,** so that if the executed task is the task that was intended by the user, then the user does not have to select a task candidate. Consequently, usage becomes more convenient and less troublesome for the user.

Furthermore, the task candidate presentation portion **1954** automatically presents the task candidates **S1961,** so that if the first task that is executed is not the task intended by the user, the user does not have to perform an operation in order to present the task candidates. Consequently, usage becomes more convenient and less troublesome for the user.

Furthermore, the task candidates **S1961** created by the task candidate creation portion **1993** include tasks related to the recognition data that are good matches when comparing information reflecting the entered task content to be recognized with the recognition lexicon data **1972**, so that even when a misrecognition has occurred, it is possible to include the correctly recognized task among the task candidates **S1961** and to correct the misrecognition with the user's selection. Consequently, usage becomes more convenient for the user.

It should be noted that the present embodiment is not limited to the above description, and the various adaptations listed below are also possible, for example.
a) The present invention may be further provided with a cancel function.
b) A task of realizing the cancel function may be included as one of the task candidates **S1961**.
c) Additions to the recognition lexicon data **1972** may be made as necessary.
d) The general information reflecting a task that is different from the first task may be the information that the cancel function has been performed.
e) The presentation of the task candidates **S1961** is not limited to screen display and may also be performed by speech or the like.
f) The recognition portion **1951** is not limited to speech recognition method, and may also perform character recognition or the like.
g) The number of task candidates **S1961** that are presented does not have to be fixed.
h) Some of the task candidates **S1961** may be displayed even after the first predetermined time has elapsed.
i) The task candidates **S1961** may also include tasks having a semantic relation to the task based on the recognition result **S1960.**

### Eighth Embodiment

### Configuration of Monitoring System

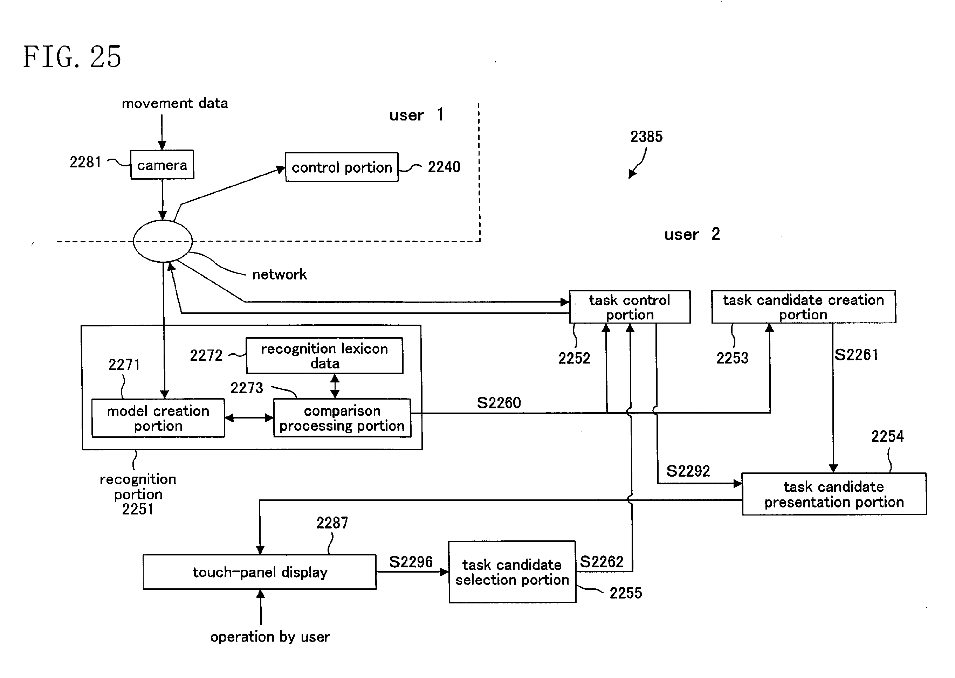

Fig. **25** is a block diagram showing the overall configuration of a translation apparatus in accordance with an eighth embodiment. The monitoring system **2385** shown in Fig. **25** includes, on the side of a user **1,** a camera **2281** and a control portion **2240,** and connected by a network on the side of a user **2,** a recognition portion **2251,** a task control portion **2252**, a task candidate creation portion **2253**, a task candidate presentation portion **2254**, a task candidate selection portion **2255**, and a touch-panel display **2287**. The recognition portion **2251** includes a model creation portion **2271**, recognition lexicon data **2272**, and a comparison processing portion **2273**.

The camera **2281** receives data about the movement of the user **1,** and sends those movement data via the network to the model creation portion **2251** and the task control portion **2252**.

The task control portion **2252** presents the movement data on the touch-panel display **2287**.

The model creation portion **2271** converts the received movement data into characteristic quantities, creates a model and stores that model.

The comparison processing portion **2273** compares the recognition lexicon data **2272** with the model stored by the model creation portion **2271**, and creates a recognition result **S2260,** which it sends to the task control portion **2252** and the task candidate creation portion **2253**.

After a second predetermined time has passed after receiving the recognition result **S2260,** the task control portion **2252** controls the control portion **2240** based on the received recognition result **S2260** (first task).

Based on the received recognition result **S2260,** the task candidate creation portion **2253** creates task candidates **S2261** and sends those task candidates **S2261** to the task candidate presentation portion **2254.**

The task candidate presentation portion **2254** presents the received task candidates **S2261** on the touch-panel display **2287.**

If the task candidate selection portion **2255** has received an operation signal **S2296** produced by an operation of selecting a task candidate **S2261** performed by the user **2** while the task candidates **S2261** are presented on the touch-panel display **2287,** then the task candidate selection portion **2255** produces selection information **S2262** and sends the selection information **S2262** to the task control portion **2252.**

Based on the received selection information **S2262,** the task control portion **2252** controls the control portion **2240.** Moreover, the task control portion **2252** sends a presentation-stop signal **S2292** to the task candidate presentation portion **2254.** The task candidate presentation portion **2254** receives the presentation-stop signal **S2292** and stops the presentation of the task candidates **S2261** displayed on the touch-panel display **2287.**

If the task candidate selection portion **2255** does not receive an operation signal **S2296** produced by an operation of selecting a task candidate **S2261** performed by the user **2** while the task candidates **S2261** are presented on the touch-panel display **2287** (that is, if the first predetermined time after the task candidate presentation portion **2254** has received the task candidates **S2261** has passed), then the task candidate presentation portion **2254** stops the display of the task candidates **S2261** that are displayed on the touch-panel display **2287.**

### Operation of the Monitoring System

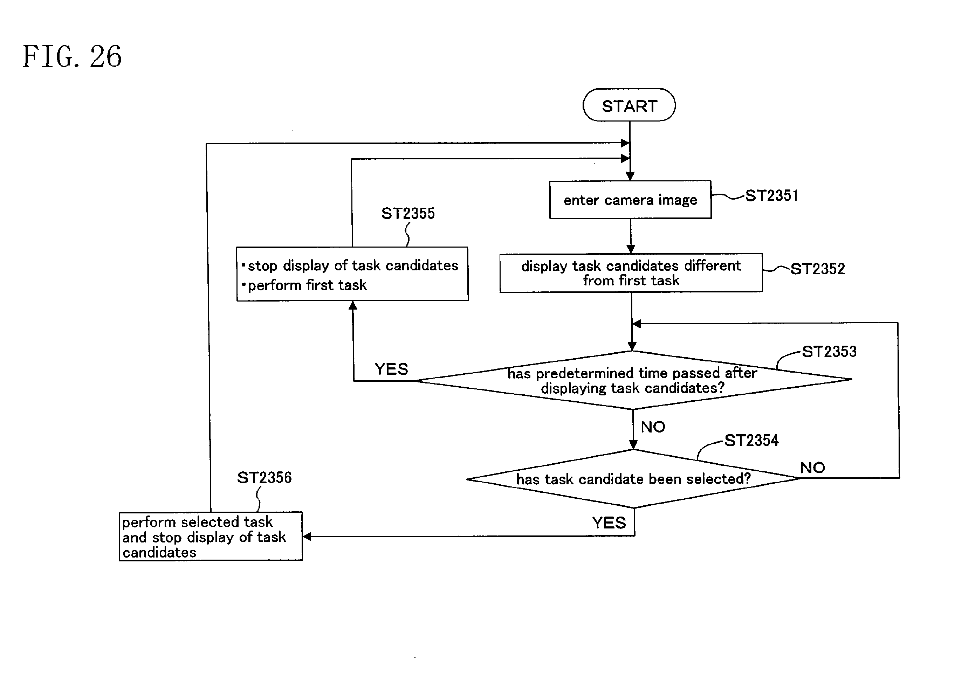

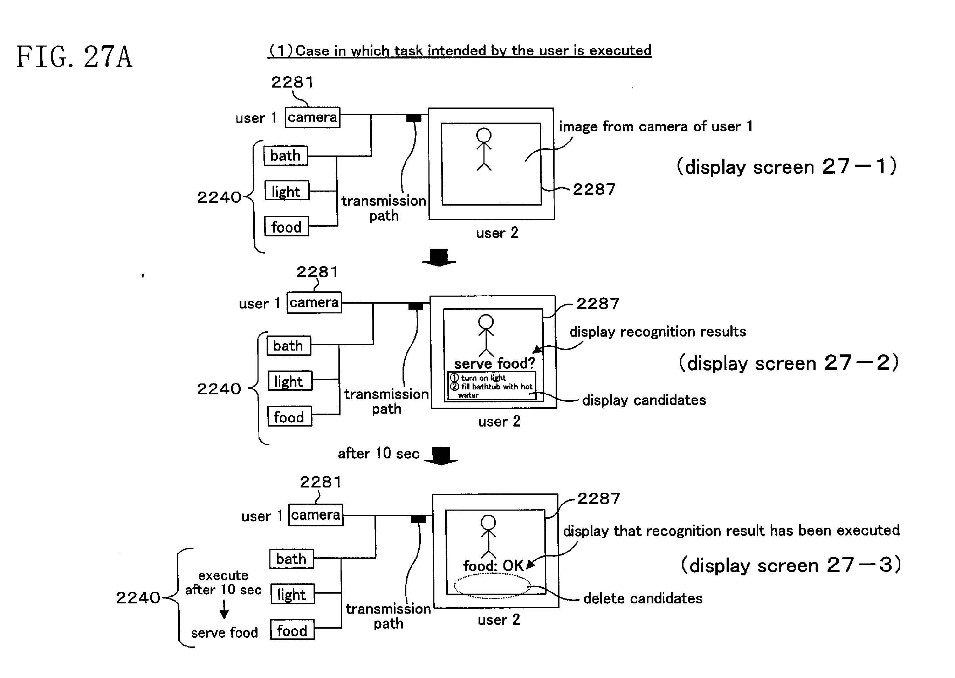

The following is an explanation of the operation of the monitoring system **2385** configured as described above. Here, an example is described with reference to Fig. **26** and Figs. **27A** to **27B**, in which a behavior monitoring system is operated remotely via a network.

### (1) Case in which the task intended by the user is executed

### [Step ST2351]

The camera **2281** receives movement data of the user **1** and sends those data via a network such as the internet to the recognition portion **2251** and the task control portion **2252**. Using the touch-panel display **2287**, the task control portion **2252** presents the received movement data to the user **2** (display screen **27-1** in Fig. **27A**). The recognition portion **2251** outputs, as recognition results **S2260,** "behavioral pattern when hungry," "behavioral pattern when wanting the lights turned on" and "behavioral pattern when wanting to take a bath," which are the best matches between the information concerning the movement data and the behavioral patterns of the recognition lexicon data **2272**. The recognition portion **2251** sends the recognition result **S2260** "behavioral pattern when hungry," which is the best match, to the task control portion **2252,** and sends the recognition results **S2260** "behavioral pattern when wanting the lights turned on" and "behavioral pattern when wanting to take a bath" to the task candidate creation portion **2253**. Based on the received recognition results **S2260,** the task candidate creation portion **2253** creates the task candidates **S2261** "turn on the lights" and "fill bathtub with hot water," and sends them to the task candidate presentation portion **2254.**

### [Step ST2352]

The task candidate presentation portion **2254** displays the task candidates **S2261** "turn on the lights" and "fill bathtub with hot water" on the touch-panel display **2287**. The task control portion **2252** displays on the touch-panel display **2287** the message "serve food?" which is the task based on the recognition result **S2260** "behavioral pattern when hungry" (display screen **27-2** in Fig. **27A**).

### [Steps ST2353 and ST2354]

If the task candidate presentation portion **2254** does not receive a non-presentation signal **S2292** from the task control portion **2252** after receiving the task candidates **S2261** and before a first predetermined time has passed, then the task candidate presentation portion **2254** stops the display of the task candidates **S2261** displayed on the touch panel display **2287**. When a second predetermined time has passed after the task candidate presentation portion **2254** has received the recognition result **S2260,** then the task "serve food," which is based on the recognition result **S2260,** is executed with the control portion **2240** (first task) (display screen **27-3** in Fig. **27A).**

### (2) Case in which the task intended by the user is not executed

### [Step ST2351]

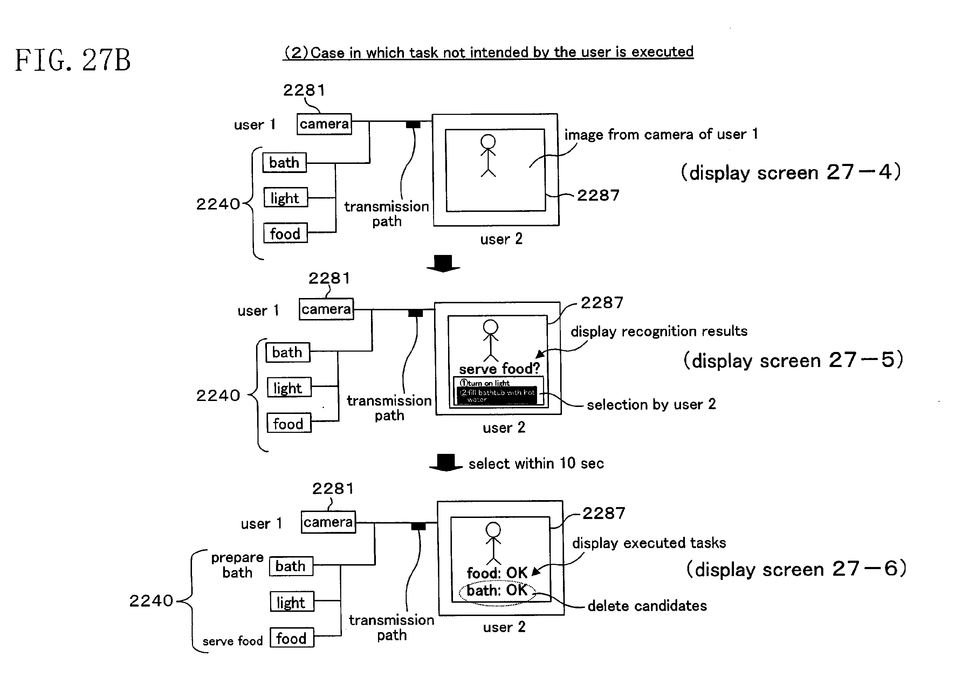

The camera **2281** receives movement data of the user **1** and sends those data via a network such as the internet to the recognition portion **2251** and the task control portion **2252**. Using the touch-panel display **2287**, the task control portion 2252 presents the received movement data to the user **2** (display screen **27-4** in Fig. **27B).** The recognition portion **2251** outputs, as recognition results **S2260,** "behavioral pattern when hungry," "behavioral pattern when wanting the lights turned on" and "behavioral pattern when wanting to take a bath," which are the best matches between the information concerning the movement data and the behavioral patterns of the recognition lexicon data **2272**. The recognition portion **2251** sends the recognition result **S2260** "behavioral pattern when hungry," which is the best match, to the task control portion **2252,** and sends the recognition results **S2260** "behavioral pattern when wanting the lights turned on" and "behavioral pattern when wanting to take a bath" to the task candidate creation portion **2253**. Based on the received recognition results **S2260,** the task candidate creation portion **2253** creates the task candidates **S2261** "turn on the lights" and "fill bathtub with hot water," and sends them to the task candidate presentation portion **2254**.

### [Step ST2352]

The task candidate presentation portion **2254** displays the task candidates **S2261** "turn on the lights" and "fill bathtub with hot water" on the touch-panel display **2287**. The task control portion **2252** displays on the touch-panel display **2287** the message "serve food?" which is the task based on the recognition result **S2260** "behavioral pattern when hungry" (display screen **27-5** in Fig. **27B**).

### [Steps ST2353 and ST2354]

The user **2** observes the behavioral pattern of the user **1** on the touch-panel display **2287,** and selects a task that is optimal for the behavioral pattern of the user **1.** While the task candidates **S2261** are displayed on the touch-panel display **2287,** the user **2** selects one of the task candidates **S2261.** The task candidate selection portion **2255** receives an operation signal **S2296,** produces the selection information **S2262** "fill bathtub with hot water" based on that operation signal **S2296,** and sends that selection information **S2262** to the task control portion **2252.** The task control portion **2252** executes with the control portion **2240** the task "serve food" (first task) based on the recognition result **S2260,** and the task "fill bathtub with hot water" (second task) based on the received selection information **S2262.** Furthermore, the task control portion **2252** displays "food: OK" and "bath: OK" on the touch-panel display **2287**, in order to let the user **2** know that the first task and the second task have been executed. The task control portion **2252** sends a presentation-stop signal **S2292** to the task candidate presentation portion **2254.** The task candidate presentation portion **2254** receives the presentation-stop signal **S2292** and stops the display of the task candidates **S2261** that are displayed on the touch-panel display **2287** (display screen **27-6** in Fig. **27B**).

### Other Example of Operation of the Monitoring System

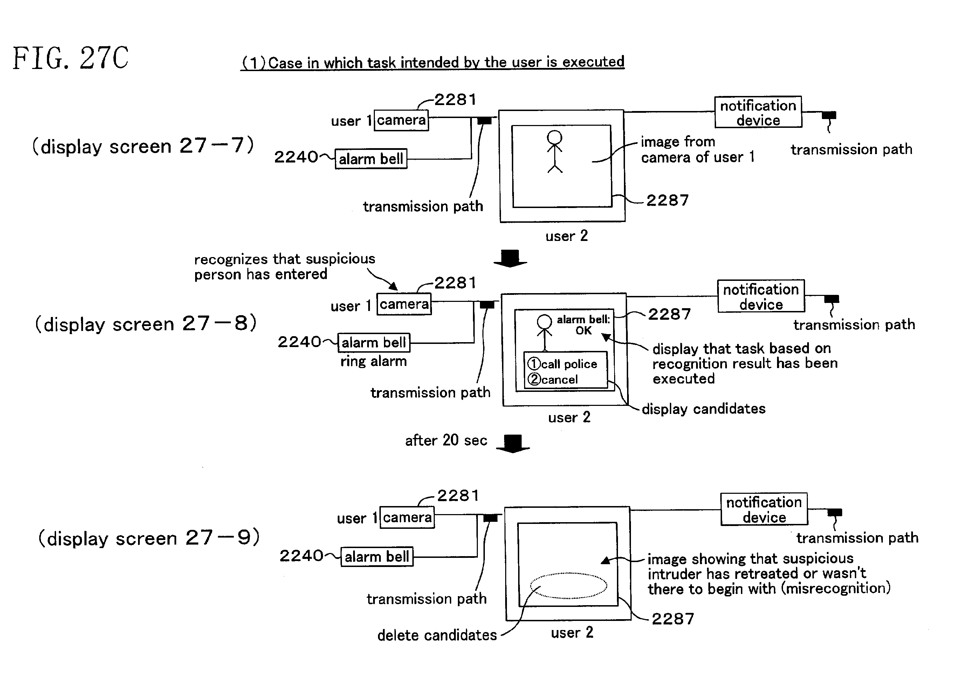

The following is an explanation of another example of the operation of the monitoring system **2385**, with reference to Figs. **27C** to **27E**.

### (1) Case in which the task intended by the user is executed

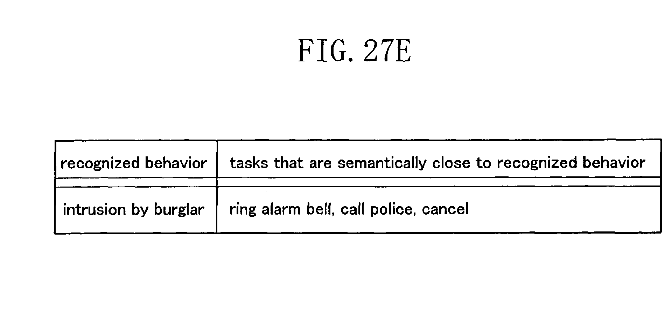

The camera **2281** receives movement data of the user **1** and sends those data via a network such as the internet to the recognition portion **2251** and the task control portion **2252**. Using the touch-panel display **2287**, the task control portion **2252** presents the received movement data to the user **2** (display screen **27-7** in Fig. **27C**). The recognition portion **2251** outputs, as the recognition result **S2260,** the behavioral pattern that is the best match between the information concerning the received movement data and the behavioral patterns included in the recognition lexicon data **2272**. Here, it is assumed that "intruder has entered" is output as the recognition result **S2260.** This recognition result **S2260** is sent to the task control portion **2252** and the task candidate creation portion **2253**. The task control portion **2252** references the table shown in Fig. **27E**, selects from the tasks "ring alarm bell," "call police" and "cancel" that are associated with "intruder has entered" the task with the highest priority degree (here, this is assumed to be "ring alarm bell"), and lets the selected task be executed with the control portion **2240**. In the table shown in Fig. **27E**, association regions based on tasks to be performed have been set (regions of association by task). In the association region corresponding to the recognized behavior "intruder has entered," the tasks "ring alarm bell," "call police" and "cancel," which are the tasks to be performed in response to this recognized behavior, are included. The task control portion **2252** displays "alarm bell: OK" on the touch-panel display **2287**, in order to let the user **2** know that "ring alarm bell" has been executed (display screen **27-8** in Fig. **27C**). The task candidate creation portion **2253** references the table shown in Fig. 27E, and sends the remaining tasks "call police" and "cancel" that are associated with the recognition result **S2260** "intruder has entered" to the task candidate presentation portion **2254** as task candidates **S2261.** The task candidate presentation portion **2254** displays the task candidates **S2261** "call police" and "cancel" on the touch-panel display **2287** (display screen **27-8** in Fig. **27C**). When **20** seconds have passed without selecting one of the displayed candidates, the task candidate presentation portion **2254** stops the display of the task candidates **S2261** that are displayed on the touch-panel display **2287** (display screen **27-9** in Fig. **27C**).

### (2) Case in which the task intended by the user is not executed

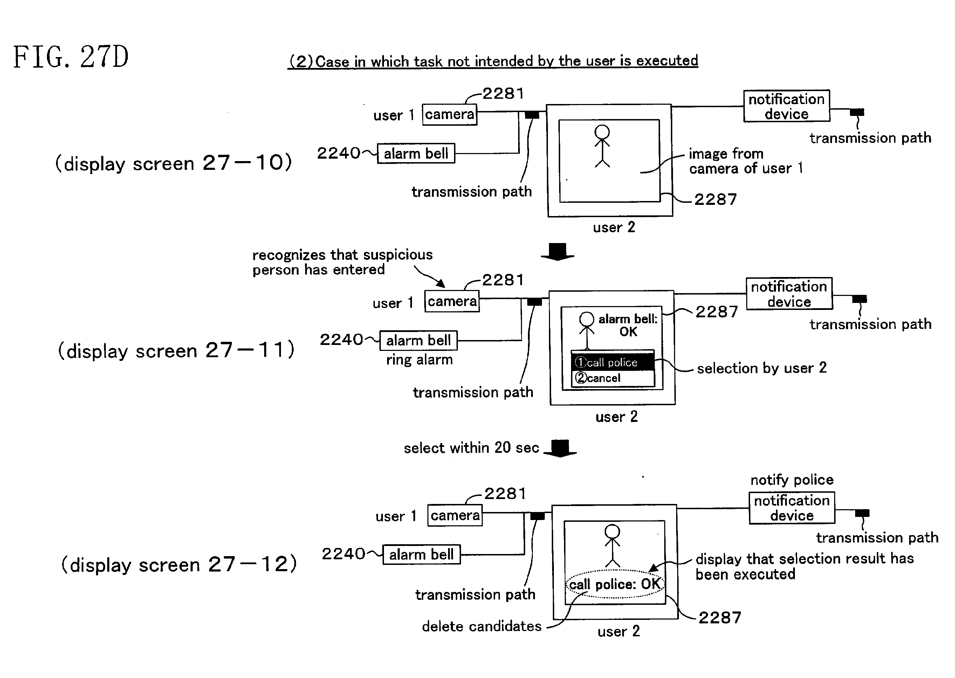

In the same manner as described above, "call police" and "cancel" are displayed on the touch-panel display **2287** (display screens **27-10** and **27-11** in Fig. **27D**). Within **20** seconds after displaying the candidates, the user **2** selects "call police" (display screen **27-11** in Fig. **27D**). In response to this, an alarm device notifies the police via a communication channel. The task control portion **2252** displays "police notified: OK" on the touch-panel display **2287**, in order to let the user **2** know that the police have been notified. Furthermore, the task candidate presentation portion **2254** stops the display of the task candidates **S2261** that are displayed on the touch-panel display **2287** (display screen **27-12** in Fig. **27D).**

### Effects

With the eighth embodiment as explained above, the task candidates **S2261** created by the task candidate creation portion **2253** are presented and selected by the user at whichever is the faster timing of a first timing with which the second task is executed, and a second timing at which a first predetermined time after presenting the task candidates **S2261** has elapsed, so that the user does not need to perform again from the beginning the procedure for executing the task intended by the user. Consequently, usage becomes more convenient and less troublesome for the user.

Moreover, the task candidate presentation portion **2254** automatically stops the presentation of the task candidates **S2261** if the user shows no intent of selecting a task candidate even after the first predetermined time has passed, so that if the first task that has been executed is the task intended by the user, the user does not need to stop the presentation of the task candidates **S2261.** Consequently, usage becomes more convenient and less troublesome for the user.

Furthermore, the task control portion **2252** automatically executes the first task based on the recognition result **S2260** that has been output by the recognition portion **2251,** so that if the first task that is executed is the task that was intended by the user, then the user does not have to select a task candidate **S2261.** Consequently, usage becomes more convenient and less troublesome for the user.

Furthermore, the task candidate presentation portion **2254** automatically presents the task candidates **S2261,** so that if the first task that is executed is not the task intended by the user, the user does not have to perform an operation in order to present the task candidates **S2261.** Consequently, usage becomes more convenient and less troublesome for the user.

Furthermore, the first task based on the recognition result **S2261** is executed after the second predetermined time, so that it can be prevented that a first task that is not intended by the user is executed. Consequently, usage becomes more convenient for the user.

It should be noted that the present embodiment is not limited to the above description, and the various adaptations listed below are also possible, for example.
a) The number of task candidates **S2261** that are presented does not have to be fixed.
b) A plurality of task candidates **S2261** may be selected to execute a plurality of second tasks.
c) The network may be a telephone network, the internet, an intranet or a wireless network.
d) Some of the task candidates **S2261** may be displayed even after the first predetermined time has elapsed.

### Ninth Embodiment

### Configuration of Control System

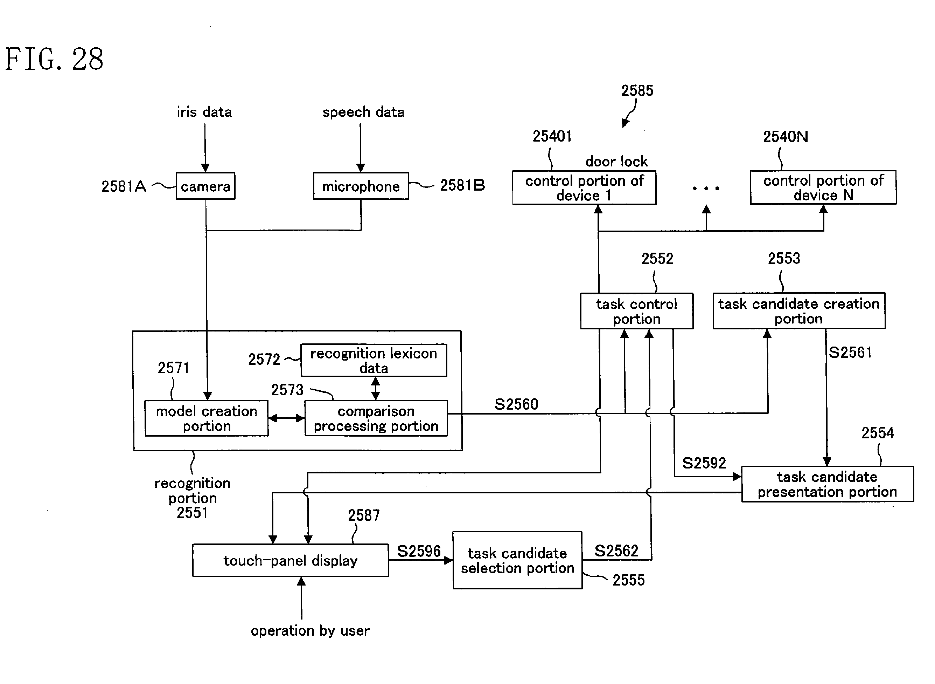

Fig. **28** is a block diagram showing the overall configuration of a control system in accordance with a ninth embodiment. The control system **2585** shown in Fig. **28** is a device control system with authentication function and includes a camera **2581A,** a microphone **2581B,** a control portion **2540K** (wherein K = 1, 2, ... N) for a device K, a recognition portion **2551**, a task control portion **2552**, a task candidate creation portion **2553**, a task candidate presentation portion **2554**, a task candidate selection portion **2555**, and a touch-panel display **2587**. The recognition portion **2551** includes a model creation portion **2571**, recognition lexicon data **2572**, and a comparison processing portion **2573**.

The camera **2581A** receives iris data of a user, and sends these iris data are to the model creation portion **2571**.

The microphone **2581B** receives voice data from the user, and sends these voice data to the model creation portion **2571**.

The model creation portion **2571** converts the received iris data and voice data into characteristic quantities, creates a model, and stores that model.

The comparison processing portion **2573** compares the recognition lexicon data **2572** with the model of the user stored by the model creation portion **2571,** and creates a recognition result **S2560.** Here, a plurality personal IDs paired with models for identifying individuals have been prepared as recognition lexicon data, and the personal ID appended to the model that is a good match between a model from the recognition lexicon data and the model stored by the model creation portion **2571** is created as the recognition result **S2560.**

The comparison processing portion **2573** sends the created recognition result **S2560** to the task control portion **2252** and the task candidate creation portion **2553.**

Based on the received recognition result **S2560,** the task control portion **2552** controls the control portion **25401** of the device **1** (first task).

Based on the received recognition result **S2560,** the task candidate creation portion **2553** creates task candidates **S2561** and sends them to the candidate presentation portion **2554**.

The task candidate presentation portion **2554** presents the received task candidates **S2561** on the touch-panel display **2587.**

If the user performs the operation of selecting one of the task candidates **S2561** while the task candidates **S2561** are being presented on the touch-panel display **2587**, then the task candidate selection portion **2555** prepares selection information **S2562** based on the received operation signal **S2596,** and sends this selection information **S2562** to the task control portion **2252.**

Based on the received selection information **S2562,** the task control portion **2252** controls the control portion **2540K** (wherein K = **1**, **2, ...** N) and the touch-panel display **2587**. Moreover, the task control portion **2252** sends a presentation-stop signal **S2592** to the task candidate presentation portion **2554.**

The task candidate presentation portion **2554** receives the presentation-stop signal **S2592,** and stops the presentation of the task candidates **S2561** presented on the touch-panel display **2587**.

If the user does not perform an operation of selecting one of the task candidates **S2561** while the task candidates **S2561** are presented on the touch-panel display **2587** (that is, if the first predetermined time after the task candidate presentation portion **2554** has received the task candidates **S2561** has passed, but no presentation-stop signal **S2592** has been received), then the task candidate presentation portion **2554** stops the display of the task candidates **S2561** that are displayed on the touch-panel display **2587.**

### Operation of the Control System

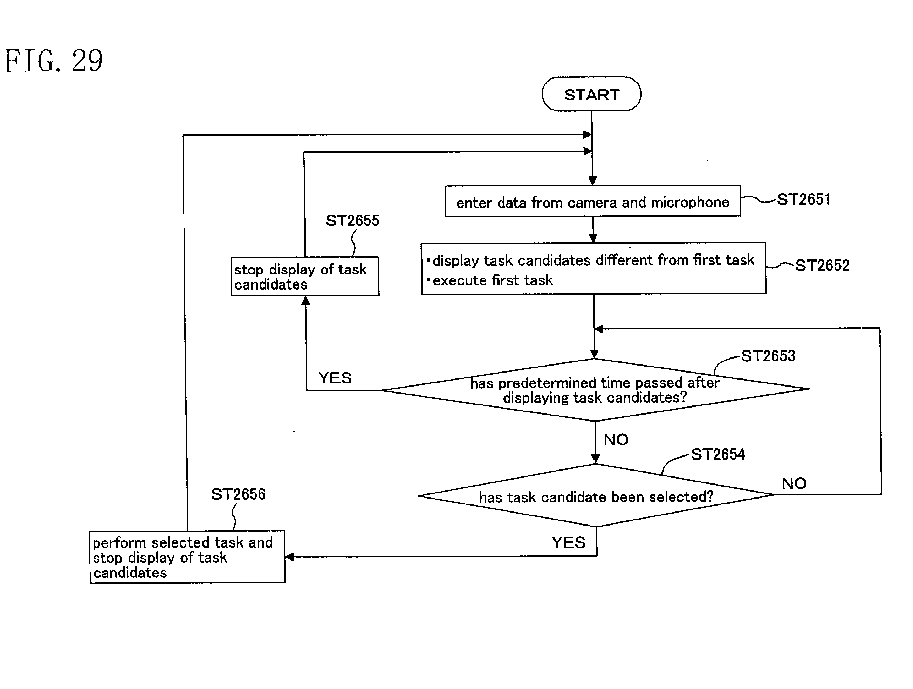

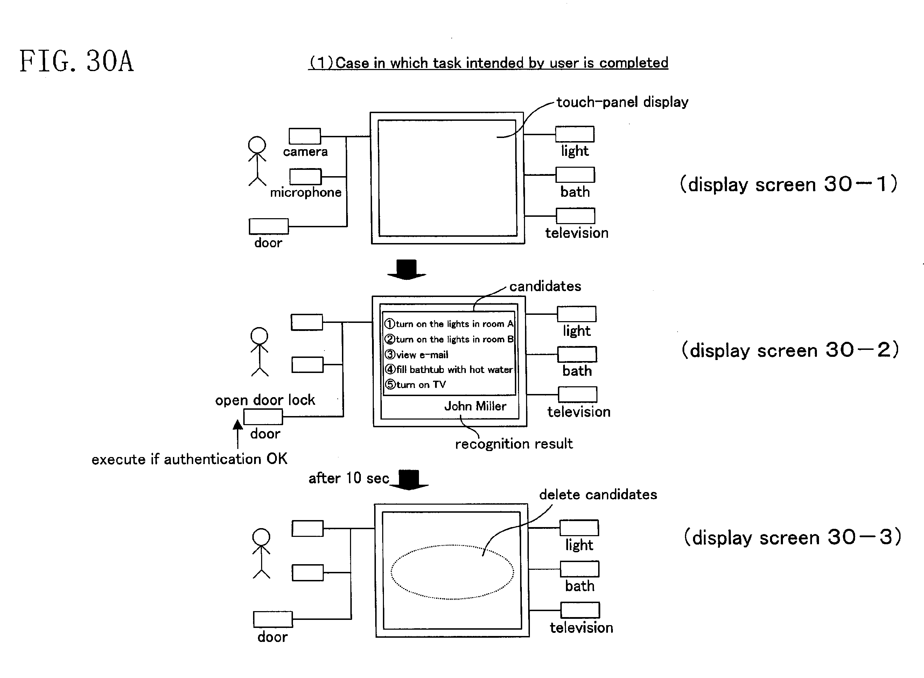

The following is an explanation of the operation of the control system **2585** configured as described above. Here, an example of the operation of a device control system with authentication function is described with reference to Fig. **29** and Figs. **30A** to **30E**.

### (1) Example 1 of a case in which the task intended by the user is completed

### [Step ST2651]

The camera **2581A** receives iris data of the user and sends those data to the model creation portion **2571.** The microphone **2581B** receives voice data of the user and sends those data to model creation portion **2571** (display screen **30-1** in Fig. **30A**). Based on the received iris data and voice data of the user, the model creation portion **2571** creates an authentication model and stores it. As authentication lexicon data **2572,** pairs of personal IDs and authentication models are used, for example "Mr. A: model A," "Mr. B: model B," "Mr. C: model C," or "John Miller: model X." The authentication models are created from each individual's iris pattern and voice pattern. Here, the names of those persons that may unlock a door, as a control function of the device **1**, are registered in the authentication lexicon data **2572**. The comparison processing portion **2573** compares the authentication models of the recognition lexicon data **2572** with the model stored by the model creation portion **2571**, and analyzes whether "model X," which is the best matching model, is acceptable as the recognition result. Here, it determines that the match satisfies a predetermined threshold, so that its judgment is "match found" and "John Miller," which is appended to the "model X" that is the best match is output as the recognition result **S2560.** The task control portion **2552** and the task candidate creation portion **2553** receive the authentication result **S2560** that is output by the recognition portion **2551**.

### [Step ST2652]

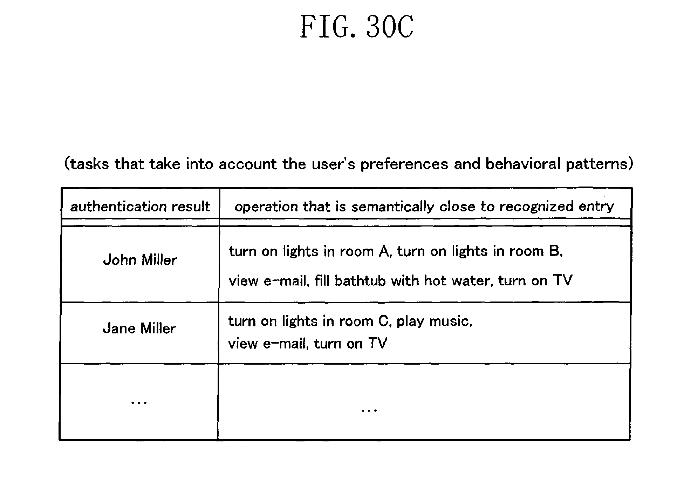

Based on the recognition result **S2560,** the task control portion **2552** operates the door lock, which is the control portion **25401** of the device **1,** and unlocks the door. Moreover, the task control portion **2552** displays the recognition result **S2560** on the touch-panel display **2587**. The task candidate creation portion **2553** references the table shown in Fig. **30C,** and creates, as task candidates **S2561,** the tasks "① turn on the lights in room A," "② turn on the lights in room B," "③ view e-mail," "④ fill bathtub with hot water" and "⑤ turn on TV," which are the tasks that are frequently carried out by "John Miller," the received recognition result **S2560,** and sends these task candidates **S2561** to the task candidate presentation portion **2554.** In the table shown in Fig. **30C**, association regions based on the user's preferences and behavioral patterns have been set (regions of association by habit). An association region has been set for each authentication result. In the association region for a certain authentication result, the tasks are included that are preferably or routinely performed by the user indicated by that authentication result. The task candidate presentation portion **2554** displays the task candidates **S2561** "① turn on the lights in room A," "② turn on the lights in room B," "③ view e-mail," "④ fill bathtub with hot water" and "⑤ turn on TV" on the touch-panel display **2587** (display screen **30-2** in Fig. **30A**).

### [Steps ST2653 and ST2654]

If the task candidate presentation portion **2554** does not receive a presentation-stop signal **S2592** from the task control portion **2552** after receiving the task candidates **S2561** and before a first predetermined time has passed, then the task candidate presentation portion **2554** stops the display of the task candidates **S2561** displayed on the touch panel display **2587** (display screen **30-3** in Fig. **30A**).

### Example 2 of a case in which the task intended by the user is completed

### [Step ST2651]

The camera **2581A** receives iris data of the user and sends those data to the model creation portion **2571.** The microphone **2581B** receives voice data of the user and sends those data to model creation portion **2571** (display screen **30-1** in Fig. **30A).** Based on the received iris data and voice data of the user, the model creation portion **2571** creates an authentication model and stores it. As authentication lexicon data **2572,** pairs of personal IDs and authentication models are used, for example "Mr. A: model A," "Mr. B: model B," "Mr. C: model C," or "John Miller: model X." The authentication models are created from each individual's iris pattern and voice pattern. The comparison processing portion **2573** compares the authentication models of the recognition lexicon data **2572** with the model stored by the model creation portion **2571**, and analyzes whether the best matching model is acceptable as the recognition result. Here, it determines that the match does not satisfy a predetermined threshold, so that its judgment is "no match found," and "no match found" is output as the recognition result **S2560.** The task control portion **2552** and the task candidate creation portion **2553** receive the authentication result **S2560** that is output by the recognition portion **2551.**

### [Step ST2652]

Based on the recognition result **S2560,** the task control portion **2552** controls the door lock, which is the control portion **25401** of the device **1.** Here, the recognition result **S2560** is "no match found," so that the task control portion **2552** keeps the door locked by controlling the device **1**. Moreover, the task control portion **2552** displays the recognition result **S2560** "no match found" on the touch-panel display **2587.** Based on the received recognition result **S2560,** the task candidate creation portion **2553** creates, as task candidates **S2561.** the tasks "① call," "② enter password," "③ cancel," "④ try again," and sends these task candidates **S2561** to the task candidate presentation portion **2554**. The task candidate presentation portion **2554** displays the task candidates **S2561** "① call," "② enter password," "③ cancel," "④ try again," on the touch-panel display **2587.**

### [Steps ST2653 and ST2654]

If the task candidate presentation portion **2554** does not receive a presentation-stop signal **S2592** from the task control portion **2552** after receiving the task candidates **S2561** and before a first predetermined time has passed, then the task candidate presentation portion **2554** stops the display of the task candidates **S2561** displayed on the touch panel display **2587**.

### (2) Case in which the task intended by the user is not completed

### [Step ST2651]

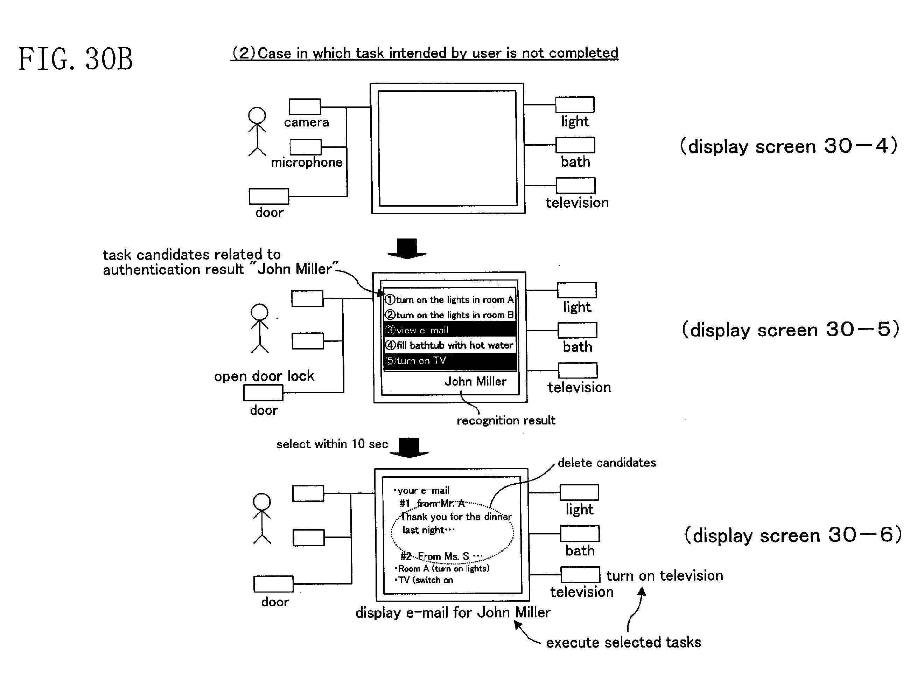

The camera **2581A** receives iris data of the user and sends those data to the model creation portion **2571.** The microphone **2581B** receives voice data of the user and sends those data to model creation portion **2571** (display screen **30-4** in Fig. **30B).** Based on the received iris data and voice data of the user, the model creation portion **2571** creates an authentication model and stores it. As authentication lexicon data **2572,** pairs of personal IDs and authentication models are used, for example "Mr. A: model A," "Mr. B: model B," "Mr. C: model C," or "John Miller: model X." The authentication models are created from each individual's iris pattern and voice pattern. Here, the names of those persons that may unlock a door, as a control function of the device **1**, are registered in the authentication lexicon data **2572**. The comparison processing portion **2573** compares the authentication models of the recognition lexicon data **2572** with the model stored by the model creation portion **2571**, and analyzes whether "model X," which is the best matching model, is acceptable as the recognition result. Here, it determines that the match satisfies a predetermined threshold, so that its judgment is "match found," and "John Miller," which is appended to the "model X" that is the best match is output as the recognition result **S2560.** The task control portion **2552** and the task candidate creation portion **2553** receive the authentication result **S2560** that is output by the recognition portion **2551.**

### [Step ST2652]

Based on the recognition result **S2560,** the task control portion **2552** operates the door lock, which is the control portion **25401** of the device **1,** and unlocks the door. Moreover, the task control portion **2552** displays the recognition result **S2560** on the touch-panel display **2587**. The task candidate creation portion **2553** references the table shown in Fig. **30C**, and creates, as task candidates **S2561,** the tasks "① turn on the lights in room A," "② turn on the lights in room B," "③ view e-mail," "④ fill bathtub with hot water" and "⑤ turn on TV," which are the tasks that are frequently carried out by "John Miller," the received recognition result **S2560,** and sends these task candidates **S2561** to the task candidate presentation portion **2554.** The task candidate presentation portion **2554** displays the task candidates **S2561** "① turn on the lights in room A," "② turn on the lights in room B," "③ view e-mail," "④ fill bathtub with hot water" and "⑤ turn on TV" on the touch-panel display **2587** (display screen **30-5** in Fig. **30B**).

### [Steps ST2653 and ST2654]

Within the first predetermined time, the user selects a task that the user wants to be carried out from the task candidates. While the task candidates **S2561** are displayed on the touch-panel display **2587,** task candidates **S2561** are selected by the user. Here, the user selects " ③ view e-mail" and "⑤ turn on TV" by pressing those options on the touch-panel display **2587.** Examples of selection methods are the method of deciding selection candidates by pressing the enter button after all selection candidates for tasks that the user wants to be performed are listed, and the method of deciding for each task candidate individually if it is to be performed or not (display screen **30-5** in Fig. **30B).** The task candidate selection portion **2555** receives an operation signal **S2596** from the touch-panel display **2587,** produces the selection information **S2562** "③ view e-mail" and "⑤ turn on TV," and sends this selection information **S2562** to the task control portion **2552.**

### [Step ST2656]

Based on the received selection information **S2562**, the task control portion **2552** turns on the television and displays the e-mail for John Miller on the touch-panel display **2587** with the control portion **25402** of the device **2** (second task). The task control portion **2552** sends a presentation-stop signal **S2592** to the task candidate presentation portion **2554**. The task candidate presentation portion **2554** receives the non-presentation portion **S2552** and stops the display of the task candidates that are displayed on the touch-panel display **2587** (display screen **30-6** in Fig. **30B).**

### Effects

With the ninth embodiment as explained above, the task candidates **S2561** created by the task candidate creation portion **2553** are presented and selected by the user at whichever is the faster timing of a first timing with which the second task is executed, and a second timing at which a first predetermined time after presenting the task candidates **S2561** has elapsed, so that the user does not need to perform again from the beginning the procedure for executing the task intended by the user. Consequently, usage becomes more convenient and less troublesome for the user.

Moreover, the task candidate presentation portion **2554** automatically stops the presentation of the task candidates **S2561** if the user shows no intent of selecting a task candidate even after the first predetermined time has passed, so that if the first task that has been executed is the task intended by the user, the user does not need to stop the presentation of the task candidates **S2561.** Consequently, usage becomes more convenient and less troublesome for the user.

Furthermore, the task control portion **2552** automatically executes the first task based on the recognition result **S2560** that has been output by the recognition portion **2551,** so that if the first task that is executed is the task that was intended by the user, then the user does not have to select a task candidate. Consequently, usage becomes more convenient and less troublesome for the user.

Furthermore, the task candidate presentation portion **2554** automatically presents the task candidates **S2561,** so that if the tasks intended by the user are not completed by the first task that is executed, then the user can easily select task candidates **S2561.** Consequently, usage becomes more convenient and less troublesome for the user.

Furthermore, the task candidate selection portion **2555** can select a plurality of task candidates **S2561,** and the task control portion **2552** can control a plurality of tasks. Consequently, usage becomes more convenient and less troublesome for the user.

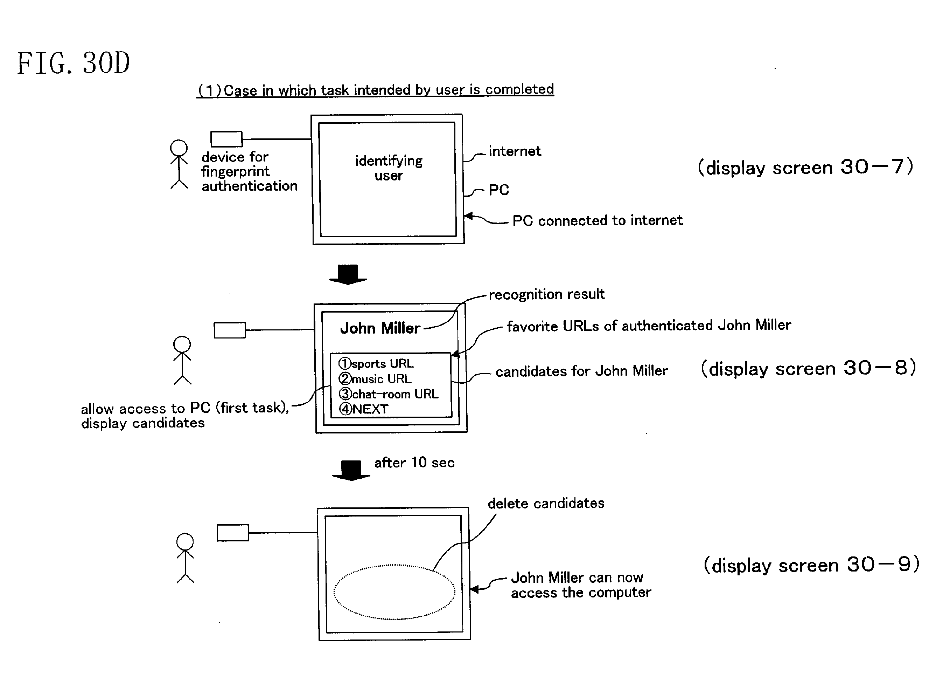

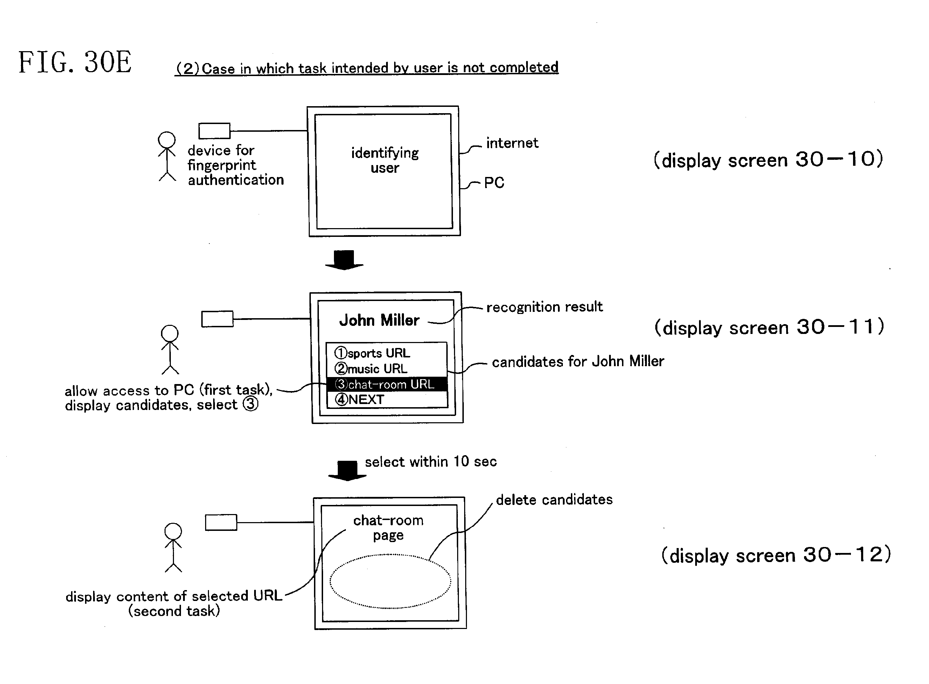

It should be noted that the present embodiment is not limited to the above description, and the various adaptations listed below are also possible, for example.
a) The number of task candidates **S2561** that are presented does not have to be fixed.
b) Some of the task candidates **S2561** may be displayed even after the first predetermined time has elapsed.
c) The task candidates **S2561** may be presented such that they scroll over the touch-panel display **2587**.
d) The recognition portion **2551** is not limited to means for iris and/or voice authentication and may also include means for fingerprint authentication or the like. An operation example of a configuration using fingerprint authentication is shown in Figs. **30D** and **30E**. This example shows a system controlling a PC (personal computer) in accordance with the result of a fingerprint authentication. At first, the PC is controlled such that access to it is not possible (display screens **30-7, 30-10).** If as a result of the fingerprint authentication it is confirmed that the user is a pre-registered person (person with access rights), then the access to the PC is enabled, and URLs (candidates) of the user's interest are displayed in the screen (display screens **30-8, 30-11).** If the user does not select a candidate within 10 sec, then the candidates are deleted from the screen (display screen **30-9).** If the user does selects a URL (candidate) within 10 sec, then the content of that URL is displayed on the screen (display screens **30-11, 30-12).**

The invention may be embodied in other forms without departing from the spirit or essential characteristics thereof. The embodiments disclosed in this application are to be considered in all respects as illustrative and not limiting. The scope of the invention is indicated by the appended claims rather than by the foregoing description, and all changes which come within the meaning and range of equivalency of the claims are intended to be embraced therein.

## Claims

1. An interface apparatus comprising:
a recognition portion for obtaining a recognition result based on a degree of similarity between a recognition object and lexicon entries included in a recognition lexicon;
a task control portion for instructing execution of a first task associated with the recognition result; and
a presentation control portion for instructing presentation of one or a plurality of candidates associated with the recognition result and instructing a stop of the presentation of the candidate(s) when a time for which the candidate(s) has/have been presented has reached a predetermined time.

2. The interface apparatus according to claim 1,
wherein the presentation control portion displays the candidate(s) on a display, and stops the display of the candidate(s) on the display when a time for which the candidate(s) has/have been displayed on the display has reached the predetermined time.

3. The interface apparatus according to claim 1,
wherein the recognition result indicates lexicon entries for which the degree of similarity with the recognition object exceeds a predetermined reference value;
wherein the first task is associated with one lexicon entry of the lexicon entries that are indicated by the recognition result; and
wherein the one or plurality of candidates are associated with other lexicon entries of the lexicon entries that are indicated by the recognition result.

4. The interface apparatus according to claim 1,
wherein, when selection information is given that indicates one of the candidates that are presented in response to an instruction by the presentation control portion, then the presentation control portion instructs the stop of the presentation of the presented candidate(s).

5. The interface apparatus according to claim 1,
wherein, when selection information is given that indicates one of the candidates that are presented in response to an instruction by the presentation control portion, then the task control portion instructs execution of a second task that is associated with the candidate indicated by that selection information.

6. The interface apparatus according to claim 5,
wherein the selection information indicates a first candidate and a second candidate; and
wherein the second task includes a task that is associated with the first candidate and a task that is associated with the second candidate.

7. The interface apparatus according to claim 1,
wherein, when an execution instruction for a third task is given while the candidate(s) is/are presented in response to an instruction by the presentation control portion, then the presentation control portion instructs the stop of the presentation of the candidate(s).

8. The interface apparatus according to claim 1,
wherein the task control portion instructs presentation of the time that is left until the execution of the first task is started.

9. The interface apparatus according to claim 1,
wherein the recognition object comprises speech and/or voice data.

10. The interface apparatus according to claim 1,
wherein the recognition object comprises information for authenticating individuals.

11. The interface apparatus according to claim 1,
wherein the first task is to display information related to the recognition result.

12. The interface apparatus according to claim 1,
wherein the first task is to operate a device associated with the recognition result.

13. The interface apparatus according to claim 1,
wherein the first task is to retrieve information related to the recognition result and to present the retrieved results.

14. The interface apparatus according to claim 5,
wherein the second task is to display information related to the candidate indicated by the selection information.

15. The interface apparatus according to claim 5,
wherein the second task is to operate a device associated with the candidate indicated by the selection information.

16. The interface apparatus according to claim 5,
wherein the second task is to retrieve information related to the candidate indicated by the selection information and to present the retrieved results.

17. The interface apparatus according to claim 7,
wherein the third task is to enter a recognition object.

18. The interface apparatus according to claim 7,
wherein the third task is to display a predetermined screen.

19. The interface apparatus according to claim 7,
wherein the third task is to present an execution result of the first task by voice.

20. An interface apparatus comprising:
a recognition portion for obtaining a recognition result based on a degree of similarity between a recognition object and lexicon entries included in a recognition lexicon;
a task control portion for instructing execution of a first task associated with the recognition result;
a candidate creation portion for obtaining one or a plurality of candidates based on semantic closeness to the recognition result; and
a presentation control portion for instructing presentation of the candidate(s) obtained by the candidate creation portion.

21. The interface apparatus according to claim 20,
wherein the one or plurality of candidates belong to a genre that corresponds to the recognition result.

22. The interface apparatus according to claim 20,
wherein the one or plurality of candidates each includes a keyword that is associated with the recognition result.

23. The interface apparatus according to claim 20,
wherein the one or plurality of candidates each includes a keyword that takes into account personal preferences and/or behavioral patterns of a user.

24. The interface apparatus according to claim 20,
wherein the one or plurality of candidates each indicates a task that is related to the first task.

25. An interface apparatus comprising:
a first recognition lexicon including one or a plurality of lexicon entries;
a recognition portion for obtaining a recognition result based on a degree of similarity between a recognition object and the lexicon entry or entries included in the first recognition lexicon; and
a presentation control portion for instructing presentation of one or a plurality of candidates associated with the recognition result, and presentation whether a lexicon entry or entries corresponding to the candidate(s) is/are included in the first recognition lexicon.

26. The interface apparatus according to claim 25, further comprising:
a second recognition lexicon including one or a plurality of lexicon entries; and
a lexicon control portion for exchanging a lexicon entry included in the first recognition lexicon and a lexicon entry included in the second recognition lexicon according to predetermined criteria.

27. The interface apparatus according to claim 25,
further comprising a lexicon control portion for adding a lexicon entry to the first recognition lexicon, and deleting a lexicon entry from the first recognition lexicon.

28. A task control method, comprising:
a step (a) of obtaining a recognition result based on a degree of similarity between a recognition object and lexicon entries included in a recognition lexicon;
a step (b) of executing a first task associated with the recognition result; and
a step (c) of presenting one or a plurality of candidates associated with the recognition result and stopping presentation of the candidate(s) when a time for which the candidate(s) has/have been presented has reached a predetermined time.

29. The task control method according to claim 28,
wherein in step (c), the candidate(s) is/are displayed on a display, and the display of the candidate(s) on the display is stopped when a time for which the candidate(s) has/have been shown on the display has reached the predetermined time.

30. The task control method according to claim 28,
wherein the recognition result indicates lexicon entries for which the degree of similarity with the recognition object exceeds a predetermined reference value;
wherein the first task is associated with one lexicon entry of the lexicon entries that are indicated by the recognition result; and
wherein the one or plurality of candidates are associated with other lexicon entries of the lexicon entries that are indicated by the recognition result.

31. The task control method according to claim 28,
wherein in step (c), when one of the candidates has been selected, then the presentation of the presented candidates is stopped.

32. The task control method according to claim 28,
further comprising a step (d) of executing a second task that is associated with the selected candidate when one of the candidates presented with step (c) has been selected.

33. The task control method according to claim 28,
wherein when an execution instruction for a third task is given while the candidate(s) is/are presented, then the presentation of the presented candidate(s) is stopped.

34. A task control method, comprising:
a step (a) of obtaining a recognition result based on a degree of similarity between a recognition object and lexicon entries included in a recognition lexicon;
a step (b) of executing a first task associated with the recognition result; and
a step (c) of obtaining one or a plurality of candidates based on semantic closeness to the recognition result; and
a step (d) of presenting the candidate(s) obtained in step (c).

35. A task control method, comprising:
a step (a) of obtaining a recognition result based on a degree of similarity between a recognition object and lexicon entries included in a first recognition lexicon;
a step (b) of presenting one or a plurality of candidates associated with the recognition result, and presenting whether lexicon entries corresponding to the candidate(s) are included in the first recognition lexicon.

36. The task control method according to claim 35,
further comprising a step (c) of exchanging lexicon entries between the first recognition lexicon and the second recognition lexicon according to predetermined criteria.

37. The task control method according to claim 35,
further comprising a step (d) of adding a lexicon entry to the first recognition lexicon, or deleting a lexicon entry from the first recognition lexicon.

38. A screen display method comprising:
a step (a) of displaying on a screen one or a plurality of candidates obtained from a recognition result;
a step (b) of deleting the candidate(s) from the screen when a time for which the candidate(s) has/have been displayed on the screen has reached a predetermined time.

39. The screen display method according to claim 38,
wherein in step (a), a description of a first task associated with the recognition result is displayed on the screen together with the candidate(s).

40. The screen display method according to claim 39,
wherein in step (a), the description of the first task is displayed with emphasis.

41. The screen display method according to claim 39,
wherein in step (a), the time that is left until execution of the first task is started is displayed.

42. The screen display method according to claim 39,
wherein in step (a), the candidate(s) is/are displayed in a display region of the screen that is outside a region in which the description of the first task is displayed.

43. The screen display method according to claim 38,
wherein in step (a), a currently selected candidate of the candidate(s) is displayed with emphasis.

44. The screen display method according to claim 38,
wherein in step (a), candidate(s) that can be selected by speech recognition technology is/are displayed, and a portion to be uttered in order to select a displayed candidate is displayed with emphasis.

45. The screen display method according to claim 38,
wherein in step (a), the recognition result is displayed with emphasis.

46. The screen display method according to claim 45,
wherein in step (b), the emphasis of the recognition result is stopped together with the deletion of the candidate(s).

47. The screen display method according to claim 38,
further comprising a step (c) of deleting all candidates displayed on the screen when one of the candidates that are displayed on the screen is selected.

48. The screen display method according to claim 38,
wherein in step (a), candidates obtained based on a semantic closeness to the recognition result are displayed.

49. The screen display method according to claim 38,
wherein in step (a), information indicating whether the candidate(s) can be selected by speech recognition technology is displayed for each of the one or plurality of candidates.
